# EUROPEAN PATENT SPECIFICATION

(11) **EP 0 354 774 B1**
(45) Date of publication and mention of the grant of the patent: **10.04.1996**
(21) Application number: 89308079.6
(22) Date of filing: 09.08.1989
(51) Int. Cl.: H04L 9/00

(54) **Data cryptography using control vectors**
Geheime Datenübertragung mittels Steuervektoren
Cryptographie de données utilisant des vecteurs de commande

(30) Priority: 18.08.1988 US 233515; 11.08.1988 US 231114
(43) Date of publication of application: 14.02.1990
(73) Proprietor: International Business Machines Corporation, Armonk, N.Y. 10504 (US)
(72) Inventor: Matyas, Stephen M., Manassas, VA 22110 (US); Abraham, Dennis G., Concord North Carolina (US); Johnson, Donald B., Manassas, VA 22111 (US); Karne, Ramesh K., Herndon, VA 22071 (US); Le, An V., Arlington, VA 22204 (US); Prymak, Rostislaw, Dumfries Virginia (US); Thomas, Julian, Poughkeepsie, NY 12603 (US); Wilkins, John D., Somerville, VA 22739 (US); Yeh, Phil C., Poughkeepsie, NY 12603 (US)
(74) Representative: Burt, Roger James, Dr.

(56) References cited:
- EP-A- 0 292 790
- US-A- 4 386 233
- ICL TECHNICAL JOURNAL, vol. 4, no. 2, November 1984, pages 146-158, London, GB;R.W. JONES: "User functions for the generation and distribution of encipherment keys"
- PATENT ABSTRACTS OF JAPAN, vol. 11, no. 376 (E-563)[2823], 8th December 1987; & JP-A-62 143 536 (OKI) 26-06-1987

## Description

The present invention relates to data cryptography using control vectors.

Various methods exist in support of electronic data security. Cryptography is the transformation of intelligible information into apparently unintelligible form in order to conceal the information from unauthorised parties. Cryptography is the only known practical method to protect information transmitted through communications networks that use land line, communications satellites, and microwave facilities. It can also be the most economical way to protect stored data. Cryptographic procedures can be used not only to protect the privacy of data, but also the integrity of data.

A discussion of current techniques for the generation and distribution of cryptographic keys is given in the article in the ICL Technical Journal, Vol. 4, No. 2, November 1984, pp 146-158.

The cryptographic transformation of data is ordinarily defined by a selected algorithm, or procedure, under the control of a key. Since the algorithm is normally public knowledge, protection of the transformed, or enciphered, data depends on secrecy of the key. Thus the key must be kept secret to prevent an opponent from simply using the known algorithm and key to recover the enciphered data. The protection of the data therefore hinges on the protection of secret keys.

A new approach to key management is described in the above-mentioned co-pending European Patent Application No. 89308068.9. The invention disclosed herein deals with data cryptography which has as its objective the application of crytographic keys and methods to protecting the confidentiality and integrity of data via cryptography whereas the co-pending patent application deals with the generation, distribution, and management of the keys themselves.

Prior art methods for encryption and decryption of data have evolved into complex sequences of key and data manipulations to thwart the attacks of an eavesdropper. These sequences have become so convoluted that security management of the secure system is difficult. Changing the security features of a processor or a system of processors is costly. What is needed is a better way to control usage of keys and the data encrypted by those keys. It is important for the system administrator to be able to specify the security features of the system, including the ability to maintain the separation of certain types of data and the corresponding keys. To maximise the security of the system, the administrator should be able to do this on a dynamic, unannounced basis with ease. The system administrator must be able to enforce a security policy for the system which imposes restrictions on the users, the data, the keys and the cryptographic operations which can be performed. That enforcement should be easily implemented by the administrator and yet should be secure from subversion by an attacker. The features of flexibility and security have been difficult to achieve in the prior art.

It is therefore an object of the invention to provide an improved method of data cryptography.

This object is achieved by the invention claimed in claim 1.

The invention provides the basis of an improved data cryptography which controls the authorisation of users to encrypt, decrypt or authenticate data in accordance with a security policy established by the system manager and can be used to build into the storage of a key the authority to use that key in a manner which has been authorised by its priginator and to improve file security by providing the ability to encrypt a data file so that one portion is fully encrypted and another portion can be decrypted by authorised recipients.

In the disclosed embodiment data cryptography is achieved in an improved manner by associating with the data cryptography key, a control vector which provides the authorisation for the uses of the key intended by the originator of the key. Among the uses specified by the control vector are limitations on encryption, decryption, authentication code generation and verification, and translation of the user's data. Complex combinations of data manipulation functions are possible using the control vectors, in accordance with the invention. The system administrator can exercise flexibility in changing the implementation of his security policy by selecting appropriate control vectors.

Complex scenarios such as encrypted mail box, session protection, file protection, ciphertext translation centre, peer-to-peer ciphertext translation, message authentication, message authentication with non-repudiation and many others can be easily implemented by a system designer using the control vectors.

The present invention will be described further by way of example with reference to an embodiment thereof as illustrated in the accompanying drawings in which:-
Fig. 1 is a system diagram showing the major components of the Cryptographic Facility (CF);
Fig. 2 is a system diagram showing the components of the CF, software driver CFAP and cryptographic application programs;
Fig. 3 illustrates the fundamental cryptographic key separation;
Fig. 4 illustrates data key separation;
Fig. 5 shows the general format for Control Vectors (CV);
Fig. 6 shows the CV format for privacy keys;
Fig. 7 shows the CV format for MAC keys;
Fig. 8 shows the CV format for data compatability keys;
Fig. 9 shows the CV format for data translate (XLATE) keys;
Fig. 10 shows the CV format for ANSI Data keys;
Fig. 11. shows the CV format for intermediate ICVs;
Fig. 12 shows the CV format for tokens;
Fig. 13 is a block diagram of the encode instruction;
Fig. 14 is a block diagram of the decode instruction;
Fig. 15 is a block diagram of the encipher instruction;
fig. 16 is a block diagram of the decipher instruction;
Fig. 17 is a block diagram of the generate message authentication code (Genmac) instruction;
Fig. 18 is a block diagram of the verify message authentication code (Vermac) instruction;
Fig. 19 is a block diagram of the translate cipher text instruction;
Fig. 20 shows the electronic code book (ECB) mode of DES encryption;
Fig. 21 shows the cipher block chaining (CBC) mode of DES encipherment;
Fig. 22 shows the CBC mode of DES decipherment;
Fig. 23 shows the message authentication (MAC) algorithm;
Fig. 24 summarises the equations for each of the data instructions;
Fig. 25 shows the operation of session protection;
Fig. 26 shows the operation of file protection;
Fig. 27 shows the operation of encrypted mail box;
Fig. 28 shows the operation of ciphertext translation centre;
Fig. 29 shows the operation of peer-to-peer ciphertext translation;
Fig. 30 shows translating part of an encrypted file;
Fig. 31 shows message integrity using control vectors;
Fig. 32 shows message integrity with non-repudiation using control vectors; and
Fig. 33 shows a message format.

The Cryptographic Architecture which underpins this invention enforces strict key separation within the local cryptographic facility and between systems by employing control vectors which force the recipient or user of a key to use the key in a manner consistent with the intentions of the originator of the key.

The following cryptographic data management functions are provided by the arrangement disclosed herein:
- 1. Data Confidentiality. Data confidentiality protects the contents of a message or file form unauthorised disclosure.
   Applications of data confidentiality include the following:
   -- Session Protection. Data encryption to protect the confidentiality or session level data transmission between two communicating devices. Each end user (device or application) shares a common data encrypting/decrypting key, thus permitting each end user to both send and receive encrypted data.
   -- File Protection. Data encryption to protect the confidentiality of data files. A single end user (device or application) possesses a data encrypting/decrypting key permitting data to be encrypted for storage and to be decrypted, at a later time, for purposes of recovery or access to the file.
   -- Encrypted Mail Box. The encrypted mail box describes a multi-user environment in which each user has a data/privacy key in two forms. The first form permits data encryption; the second form permits data decryption. The first form of the key is placed in a public directory or central registry accessible to all users of the system. Each so registered key is recorded under a user identifier belonging to the user who registers the key. The second form of the key is kept private by the user to which it belongs. Thus, a user i who wishes to send encrypted messages to user j, first requests user i's, encryption from the public directory. Data encrypted with this key is then sent to user i and placed in user i's mail box. User i can read received mail by decrypting first with his/her private decryption key. But since no other user has access to user i's decryption key, the environment is such that users can encrypt mail for each other user but only the authorised designated receiving user can decrypt and read his/her mail.
   -- Ciphertext Translation Centre (CTC). The ciphertext translation centre is a network node or device capable of securely translating encrypted data from encryption under a first data key to encryption under a second data key. In effect, the CTC possesses one or more data keys under which encrypted data may be received and one or more datas keys under which received encrypted data may be re-encrypted. These data keys thus establish a secure channel permitting the CTC to translate ciphertext from one key to another but not to decrypt ciphertext. The CTC may be further restricted from encrypting data with one or more of these data/privacy keys for the purpose of introducing data into the secure channel.
   -- Peer-to-Peer Ciphertext Translation. This environment consists of a chain of two or more CTCs which establish a secure channel from one set of network devices to another set of network devices. The first CTC in the chain possesses one or more data keys under which encrypted data may be received from the first set of network devices. Each CTC in the chain possesses one or more data keys under which encrypted data may be re-encrypted, but not decrypted. The CTCs may be further restricted from encrypting data with one or more of these keys for the purpose of introducing data into the secure channel. The last CTC in the chain re-encrypts the encrypted data under one or more data keys shared with members of the second set of network devices.
   -- Translate Part of an Encrypted File. This is an application wherein part of an encrypted file can be translated to a key which can be conveniently shared with an intended receiver. The method avoids sharing the original data/privacy key used to encrypt the file, since doing so may jeopardise the confidentiality of data not intended to be shared.
- 2. Data Integrity. Data integrity protects the contents of message or file from unauthorised modification. This includes changes, additions, and deletions to the data. Cryptography provides only methods for detecting unauthorised changes to data. It cannot prevent unauthorised changes to data.
- 3. Message Authentication. Message authentication is a procedure established between two communicants which allows each communicant to verify that received messages are genuine. Communicants can be people, devices, or processing functions. Message authentication allows the receiver of a message to determine that:
   -- The message originated with the alleged sender.
   -- The contents of the message have not been accidentally or intentionally changed.
   -- The message has been received in the same sequence that it was transmitted.
   -- The message was delivered to the intended receiver.

In other words, message authentication permits the receiver to validate a message's origin, contents, timeliness, and intended destination. Applications of message authentication include the following:
-- Straight message authentication.
b-- Non-repudiation via MACGEN and MACVER.

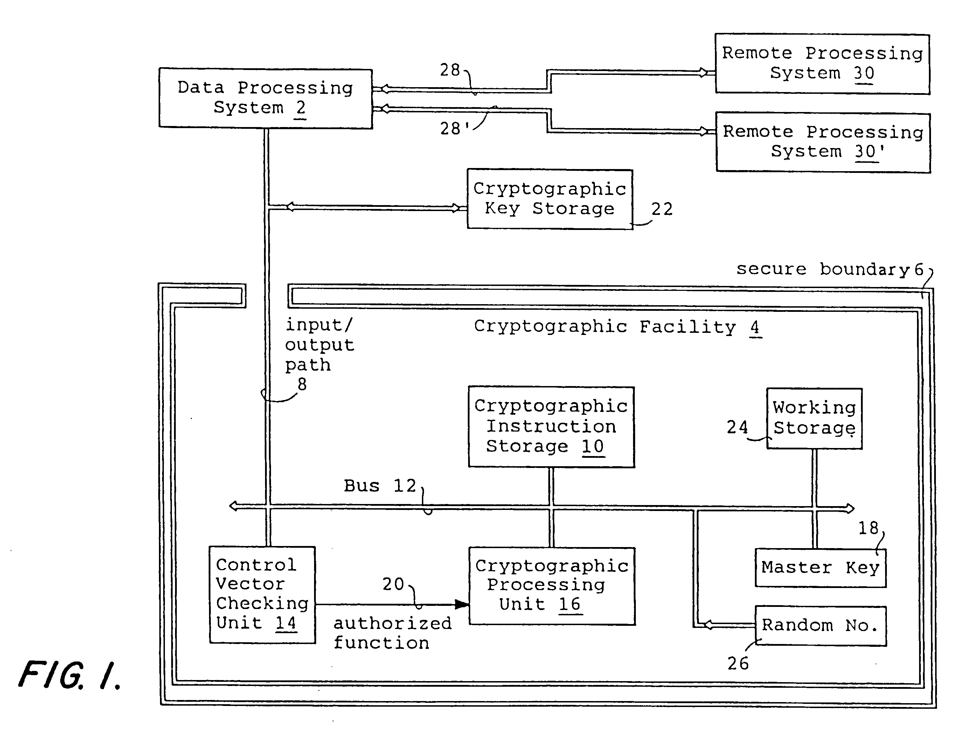

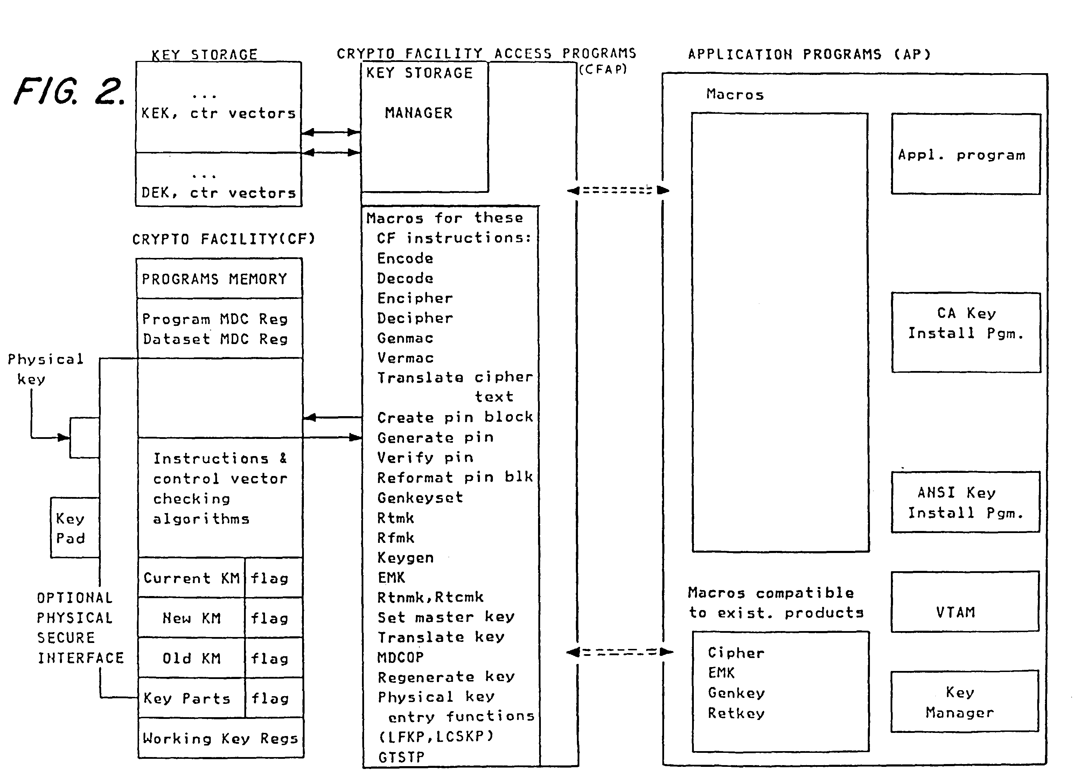

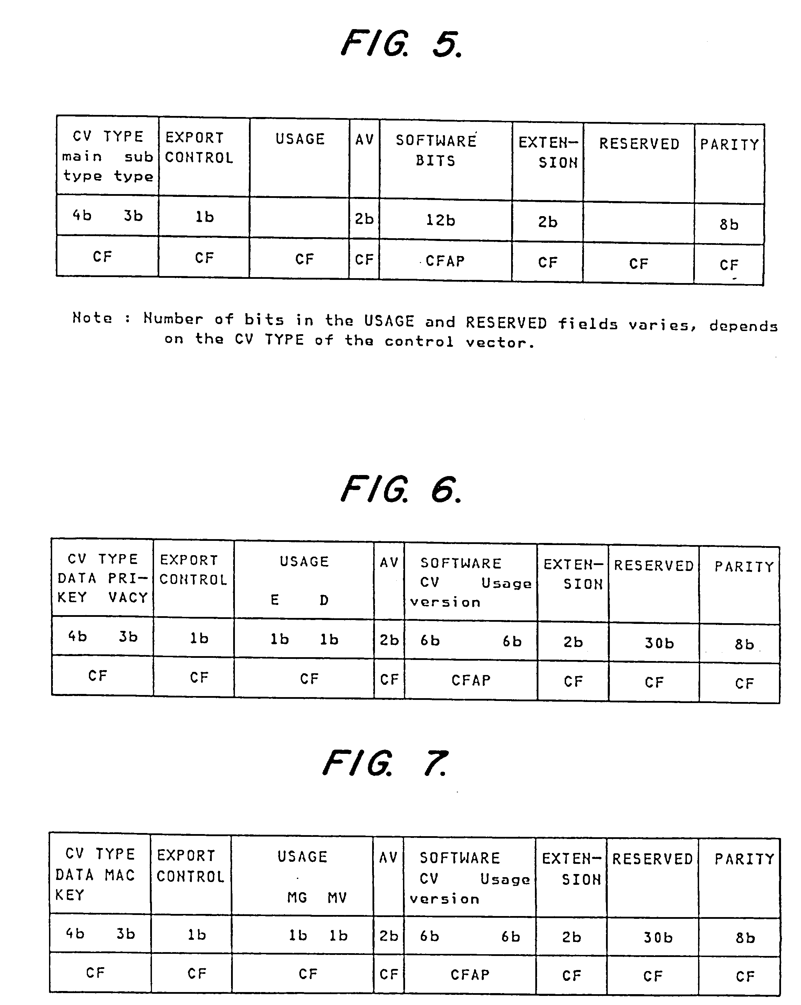

Fig. 1 gives a block diagram representation of the data processing system with the cryptographic facility therein. In Fig. 1, the data processing system 2 executes a program such as the crypto facility access programs and the application programs illustrated in Fig. 2. These programs output cryptographic service requests for data cryptography operations using keys which are associated with control vectors. The general format for a control vector is shown in Fig. 5. Control vectors define the function which the associated key is allowed by its originator to perform. The arrangment disclosed herein is an apparatus and a method for validating that data cryptography functions requested for a data set by the program, have been authorised by the originator of the key.

As is shown in Fig. 1, contained within or associated with the data processing system 2 is a cryptographic facility 4 which is characterised by a secure boundary 6. An input/output path 8 passes through the secure boundary 6 for receiving the cryptographic service request, data, cryptographic keys and their associated control vectors from the program. The input/out path 8 outputs responses to those cryptographic requests from the cryptographic facility. Included within the secure boundary 6 is a cryptographic instruction storage 10 which is coupled by units of the bus 12 to the input/output path 8. A control vector checking units 14 is coupled to the instruction in storage 10 and a cryptographic processing units 16 is also coupled to the instruction storage 10. A master key storage 18 is coupled to the cryptographic processing unit 16. The cryptographic facility 4 provides a secure location for executing data cryptography functions in response to the received service request.

The cryptographic instruction storage 10 receives over the input/output path 8 a cryptographic service request for performing a data cryptography function with a cryptographic key. The control vector checking unit 14 has an input coupled to the input/output path 8, for receiving a control vector associated with the cryptographic key. The control vector checking unit 14 also has an input connected to the cryptographic instruction storage 10, for receiving control signals to initiate checking that the control vector authorises the data cryptography function which is requested by the cryptographic service request.

The control vector checking unit 14 has an authorisation output 20 which is connected to an input of the cryptographic processing unit 16, for signalling that data cryptography function is authorised, the receipt of the authorisation signal by the cryptographic processing unit 16 initiates the performance of the requested data cryptography function with the cryptographic key. A cryptographic key storage unit 22 is coupled to the cryptographic facility 14 over the input/output path 8. The cryptographic key storage unit 22 stores the cryptographic key in an encrypted form in which the cryptographic key is encrypted under a storage key which is a logical product of the associated control vector and the master key stored in the master key storage 18.

An example of recovering an encrypted key from the cryptographic key storage 22 occurs when the cryptographic instruction storage 10 receives over the input/output path 8 a cryptographic service request for recovering the cryptographic key from the cryptographic key storage units 22. The control vector checking unit 14 will then output in response thereto, an authorisation signal on line 20 to the cryptographic processing unit 16 that the function of recovering the cryptographic key is authorised. The cryptographic processing unit 16 will then operate in response to the authorisation signal on line 20, to receive the encrypted form of the cryptographic key from the cryptographic key storage 22 and to decrypt the encrypted form under the storage key which is a logical product of the associated control vector and the master key stored in the master key storage 18.

The storage key is the exclusive-OR product of the associated control vector and the master key stored in the master key storage 18. Although the logical product is an exclusive OR operation in the preferred embodiment, it can also be other types of logical operations.

The associated control vector, whose general format is shown in Fig. 5, is stored with the encrypted form of its associated cryptographic key in the cryptographic key storage 22. Since all keys stored on a cryptographic storage are encrypted under the master key, a uniform method for encryption and decryption of encrypted keys thereon can be performed.

The associated control vector, whose general format is shown in Fig. 5, includes fields defining the authorised types of cryptographic functions, including data cryptography functions, data encryption/decryption functions and personal identification numbers (PIN) processing functions. In the data cryptography applications, the data cryptography functions type is designated for the type field. The associated control vector also includes additional fields which can define export control for the keys and associated encrypted information and the usage of the keys and associated encrypted information.

The following provides a more detailed description of the components and operations of the disclosed arrangement.

Fig. 2 shows the major components of a crypto subsystem. The cryptographic subsystem consists of a Crypto Facility (CF), Crypto Facility Access Program (CFAP), and Application Program (AP). Normally, the CF is implemented in hardware, inside a physically secure box. Depending upon the implementation, the CF, CFAP, and AP could all be in a physically secure box.

The Cryptographic Facility 4 consists of:
- Key Registers

The registers and their usages are described below:
-- Master Key Register 18: The master key register is 128 bits wide, containing the master key.
-- New Master Key (NMK) register: The new master key register is 128 bits wide, containing the new master key that is going to become the current master key. The New Master Key will become the current master key only after a special instruction, the SMK instruction is issued to load the value of new master key into the master key register.
-- Old Master Key Register: The old master key register is 128 bits wide, containing the master key that was replaced by the current master key. The master key update mechanism is such that the current master key becomes the old master key prior to the new master key becoming the current master key.
-- Key Part Register: The key part register is 128 bits wide, containing the value of a key part (component), or a complete key that is being installed via a key loading device such as a key pad or key board attached to the CF via an optional secured physical interface.
-- Working Key Register(s): For performance reasons, the system has working register(s), 128 bits wide each, to contain immediate working key(s) for fast accesses. For example, a key that is used to encrypt data is brought into the CF is encrypted form on the first use. It then is decrypted and the clear value can be stored in one of the working key registers. In subsequent uses to encrypt or decrypt the data, this clear key can be quickly accessed from a specific working key register, thus eliminating the repeated steps of decrypting the key prior to using it.
-- Program MDC Register (PMDC Reg): The program MDC register is 64 bits wide, containing the MDC of the program to be loaded in the program memory inside the CF.
-- Dataset MDC register (DMDC Reg): The dataset MDC register is 64 bits wide, containing the MDC of the datasets whose integrity is validated by CFAP. This normally is, at least, the key storage datasets.

### Cryptographic instructions and control vector checking algorithms.

The instruction set and control vector checking algorithms are implemented in the secured cryptographic facility and are stored in the cryptographic instruction storage 10 which is a random access memory. They are executed in a microprocessor such as an Intel 80286 which can serve as the cryptographic processing unit 16. The control vector checking unit 14 can also be implemented in the cryptographic processing unit 16 or it can be implemented by a second microprocessor such as an Intel 80286 serving as the control vector checking unit 14.

### Program Memory and Processing Engine

The system can also employ a memory inside the CF to store user's programs and a processing engine to execute the programs. An example of this is a program or macro for performing new algorithms for PIN verifications on new PIN formats.

### Random Number Generator 26

The random number generator is an algorithmic procedure for producing 64 bit pseudo random numbers. The algorithm itself is non-secret, but makes use of two 128 bit secret keys and a 64 bit non-secret incrementing counter. Although non-secret, the integrity and proper management of the counter are essential to security.

The Crypto Facility (CF) is a secure implementation containing the Data Encryption Algorithm and storage for a small number of key and data parameters in the cryptographic instruction storage 10. It can be assessed only through inviolate interfaces (secure against intrusion, circumvention, and deception) which allow processing requests, key, and data parameters to be presented, and transformed output(s) to be received.

The ANSI Data Encryption Algorithm (DEA) is a standard cryptographic algorithm for commercial data security products. The DEA is a symmetric block cipher algorithm that uses a 56-bit secret key to encipher 64 bits of plaintext to form 64 bits of cipher text. DEA keys are normally stored with 1 parity bit per byte, forming a 64-bit key. DEA forms the basis for the National Bureau of Standards approved Federal Data Encryption Standard, so it is also called DES.

The cryptographic facility must resist probing by an insider adversary who has limited access to the cryptographic hardware. "Limited" is measured in minutes or hours as opposed to days and weeks, and the adversary is constrained to a probing attack at the location where the system is installed, using limited electronic devices as opposed to a laboratory attack launched at a site under the control of the adversary using sophisticated electronic and mechanical equipment.

The cryptographic facility must detect attempts at physical probing or intrusion. This may be accomplished using a variety of electro-mechanical sensing devices.

The cryptographic facility must provide for the automatic zeroing of all internally stored clear keys. Such zeroing must be performed automatically whenever an attempted probing or intrusion has been detected. The cryptographic facility must also provide a manual capability to zero key storage via the front panel interface.

The crypto facility contains one master key KM. All other keys can reside on mass storage encrypted under a key formed by Exclusive ORing the master key with a valid control vector.

U.S. Patent 4,386,234 entitled "Cryptographic Communications and File Security Using Terminals" describes an sample Cryptographic Facility.

The CFAP is the programming interface between the CF and the application program. Since users do not have direct access to the cryptographic facility, the CFAP is the programming interface through which the users can request the CF to perform specific operations.

Associated with the CFAP is the Key Storage outside the CF where encrypted keys are stored. No clear keys are stored outside the CF. The Key Storage 22 is also referred to herein as the "Cryptographic Key Data Set" (CKDS).

The CFAP typically consists of the following:
- Key Storage Manager to manager keys stored in the key storage mentioned above.
- CFAP Macros through which users access to the CF to perform cryptographic functions.

Application programs include user's application programs, some utilities such as a key installation utility, and communication programs such as IBM VTAM.

User's application programs consist of statements that will invoke certain CFAP macros to perform a specific task. As mentioned, the CFAP is the only interface through which application programs can request CF to execute a cryptographic operation. For example, a user might want to encipher a file prior to shipping it to another node on the network. His application program might have one statement that calls a CFAP macro to generate a key, and another statement that invokes another CFAP macro to encipher the data of the file with the given key.

Another example of a user's application program is one that allows the manual installation of keys on the system, similar to the installation program mentioned above.

Notation - The following notation is used herein:

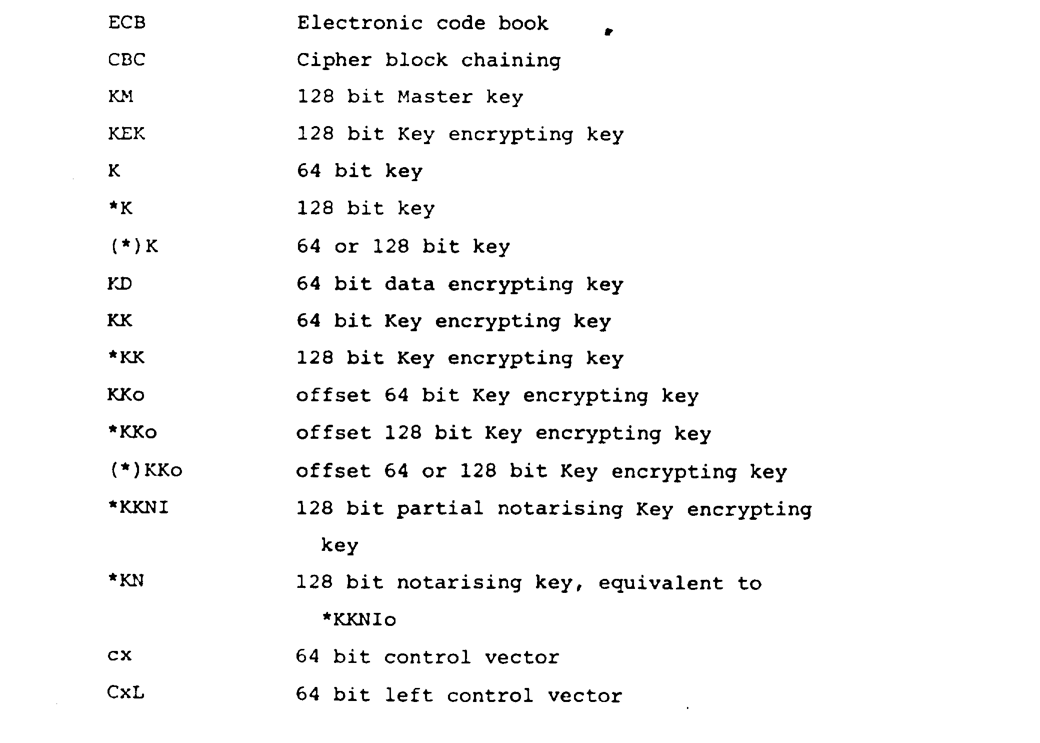

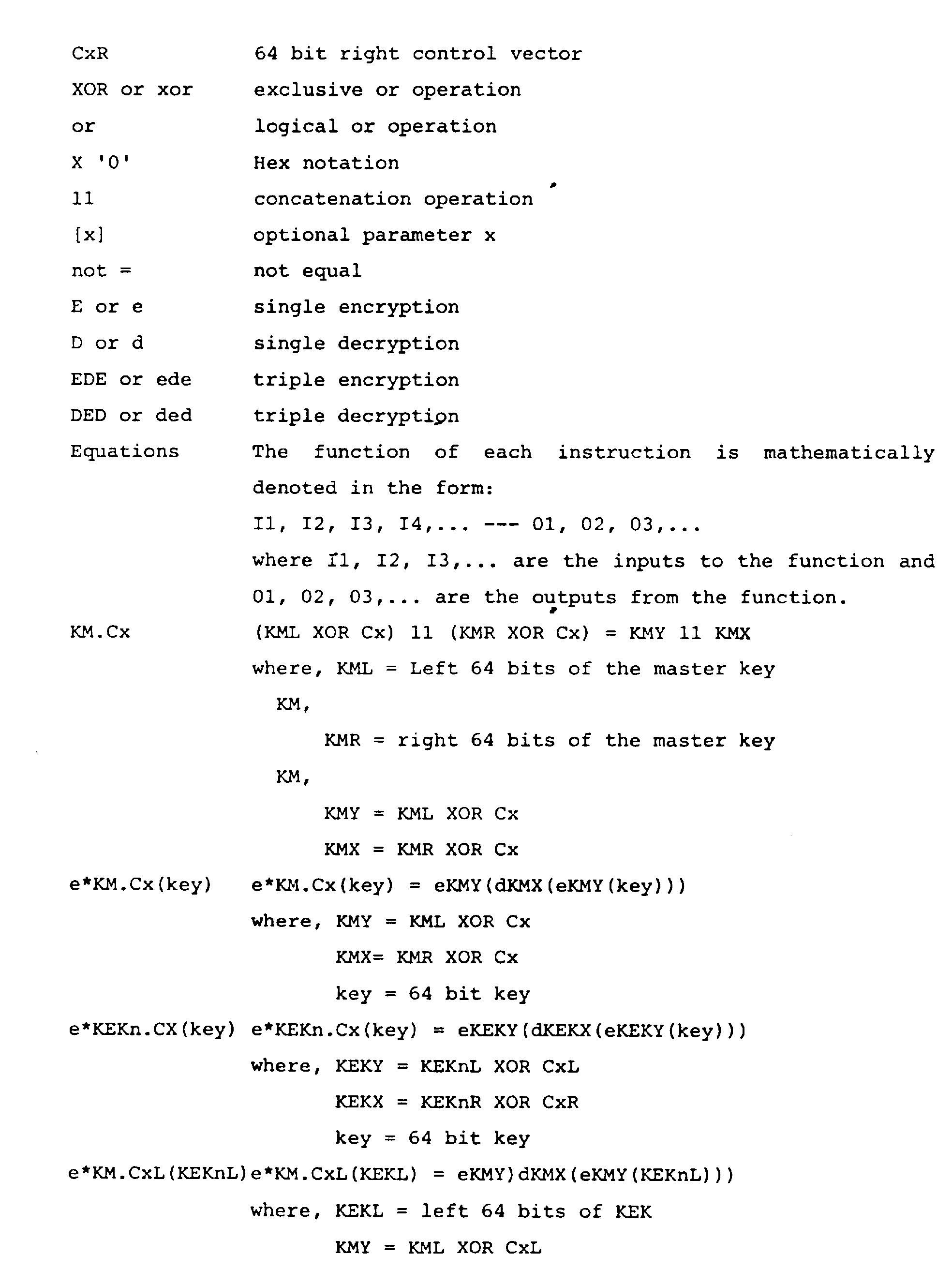

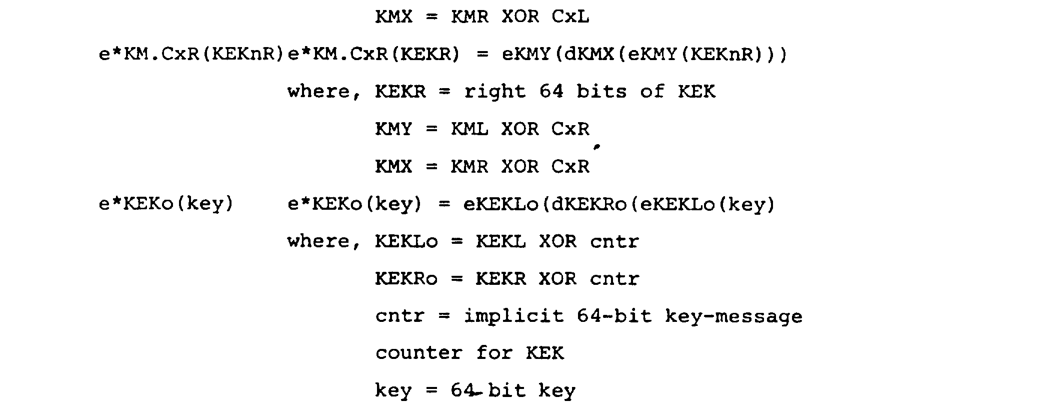

### Cryptographic Separation of Keys

Keys are separated cryptographically according to key type and key usage attributes.
- 1. The architecture guarantees that cryptographic keys can be used only in the way or ways prescribed and intended.
- 2. Internal Versus On-The-Link Separation. Internally (i.e., within the cryptographic facility), keys are separated via control vectors or other appropriate/equivalent mechanism. On the link, keys are separated using control vectors.
- 3. Hardware Versus Software Enforcement. Certain cryptographic separation is implemented in hardware; other cryptographic separation can be implemented via software.
- 4. Control vector key types and compatibility-mode key types. In order that the compatibility-mode key types will not diminish the security, certain rules governing generation, distribution, and usage of these two classes of key types is imposed.
- 5. A list of required key separations provided by the invention is listed below:
   -- Data Privacy. ENCIPHER from DECIPHER, allows public key protocols such as mailbox, ballot and pass on.
   -- Data MAC. MACGEN from MACVER, allows for non-repudiation (equivalent of electronic signature).
   -- Data XLATE. Allows a secure translate channel to be established, where intermediate devices cannot decrypt encrypted data.
   -- Data COMPAT. Allows compatibility mode without weakening security of other data keys.
   -- Data ANSI. Allows ANSI X9.17 data cryptography to be coexist with non-ANSI X9.17 data cryptography without loss of security to either approach.
   -- Key Encrypting Keys. KEK Sender from KEK Receiver.
   -- PIN Keys. PIN Generating-Key from PIN Encrypting Key.

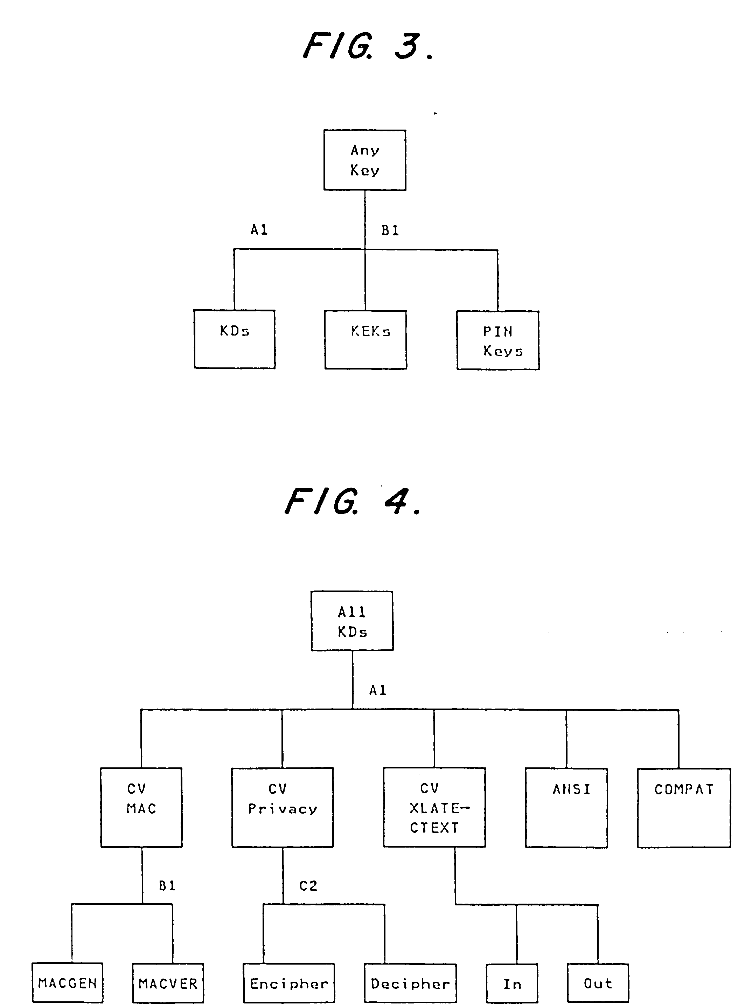

The following notation is used for Figs. 3 and 4:
- Near each line leaving a box is a separation letter and a priority number.
- The separation letter will correspond with descriptions below:
- The range of priority numbers (1 through 4) should be interpreted as follows:
   -- 1. Absolute necessity
   -- 2. Strongly recommended
   -- 3. Recommended
   -- 4. Desirable

### Fundamental Key Separation

Fig. 4 illustrates the fundamental cryptographic key separation. An explanation of the separation is given below:

### - 1. A. Data Keys : KEKs and PIN keys

If KDs (Data Keys) are not separated from KEKs and PIN keys, then Decipher data function used with data keys could be misused to decipher KEKs and PINs.

### - 2. B. Key Encrypting Keys : PIN keys

If KEKs (Key Encrypting Keys) are not separated from PIN Keys it would be possible for an outsider to wiretap an encrypted PIN block and replay it in place of an encrypted KD. Ahead of time, an insider accomplice could replace the encrypted stored KEK with the encrypted stored PIN Key in the receiving node's cryptographic key-data set. The PIN block would be then recovered and used as a data key at the receiving node. Subsequently, data that would be encrypted under this PIN block used as a data key would be much easier to subject to a key exhaustion attack as the variability of PINs (normally four to six decimal digits) is much less than that of a random 56 bit data key.

### Data Keys Separation

Fig. 4 shows the flow chart of the Data keys separation. The justifications for the separation are given below.

### - 1. A - Authentication : Privacy

An insider who can collect plain and corresponding ciphertext encrypted with a MAC key can perpetrate an attack against the MAC procedure. For example, it would be possible to construct fraudulent messages and MACs that would be authenticated and accepted by the MAC algorithm. Thus, the data keys used for encryption/decryption should not be used for authentication of data.

On the link, if an intercepted data key can be substituted for a MAC key, the transmitted ciphertext (under that data key) could be used to construct a fraudulent message and MAC.

### -- B - Xlate Ciphertext : Privacy

By definition, Xlate Ciphertext implies the use of a pair of data keys KD1 and KD2, where ciphertext encrypted under KD1 is decrypted under KD1 and then re-encrypted under KD2 without exposing the data to the calling application program. Otherwise, Xlate Ciphertext could be performed using the existing Decipher and Encipher functions.

### -- C - ANSI : all others

ANSI keys have their own protocol for key distribution and an additional possible usage referred to as ANSI COMBINE KEYS. These differences mandate a separate pool for all ANSI keys.

### -- D - Data COMPATIBILITY " All others

Data Compatibility keys exist due to requirements to be compatible with previous systems such as IBM CUSP/3848, IBM PCF, and IBM 4700. As the enforced internal separation in these systems does not extend to the level of separating MAC from Privacy keys, these keys need to be distinguished from the CV keys which support such an improved level of separation.

### - 2. B - MACGEN : MACVER

Provides an audit trail to "prove" who originated a message and MAC (called non-repudiation). This method is no more secure than the CF, and assumes a mutual trust in the integrity and secrecy of keys stored in the CF.

### - 3. C - Encipher : Decipher

Provides true separation of the encipher and decipher functions, thus permitting data to be enciphered under a data key without exposing the right to decipher under that same data key. For example, an encipher only data key could be used in a 'vote and pass on' balloting scheme. A decipher only data key could be used in an environment where a user is authorised to read but not write some data.

### Control Vectors

The control vector is a 64 bit non-secret cryptographic variable for controlling the usage of keys. Each key K defined to the cryptographic system has an associated control vector C, i.e., the key and control vector define a tuple (K, C).

Each control vector specifies a CV-TYPE, which broadly defines how the key may be used and the rules governing how that key may be communicated on the link. A key may be a data key, sender key encrypting key, receiver key encrypting key, PIN encrypting key, PIN generating key, Intermediate ICV, Key part or Token. Additional bits in the control vector specify exactly in which cryptographic instructions and parameter inputs the key may operate. Still other bits control the export of the key, i.e., whether the key can be exported or not.

The control vector is coupled cryptographically to the key via a special encryption function. For example, when the K is stored in a Key Storage, K is encrypted under a key formed by Exclusive-ORing the control vector with the master key, i.e., K is stored as the tuple (eKM.C(K), C), where KM.C denotes KM xor C. When K is transmitted on the link (from one device to another), a similar encrypted form is used. In this case, the master key KM is replaced by a key encrypting key KEK, where KEK is a key shared between the sender and receiver. Thus, K is transmitted as the tuple ( eKEK.C(K), C). The architecture does not require that the control vector be stored or transmitted with the key in situations where its value is defined implicitly from the context or can be reconstructed from available key-related information.

Since the control vector (C) is tightly coupled to the key (K), via the encrypted form eKM.C(K) or eKEK.C(K), it is apparent that K cannot be recovered from its encrypted form unless C is correctly specified. Thus, if the tuple (eKM.C(K), C) is provided as an input to a requested cryptographic instruction, the cryptographic facility will first check the supplied value of C to determine that the requested usage of the key is permitted. Only then will C be used to decrypt eKM.C(K) to recover the clear value of K internal to the cryptographic facility. If a false value C* is specified, the cryptographic facility may be fooled temporarily into accepting C*, but K will not be recovered properly. Thus, there is no opportunity for a user to recover the correct value of K unless the correct value of C is also specified. The cryptographic principle is thus the basis upon which the entire architecture is built; and additional security is provided as necessary and where appropriate.

The control vector is a compact data structure for defining the usage attributes of a cryptographic key. The control vector is cryptographically coupled to the key via an encryption process. This process is such that the key can be decrypted properly only if the control vector is correctly specified. (Even a single bit change in the control vector will cause an entirely different key to be recovered.

### - CV Checking

The control vector is designed to minimise CV checking. Control vector usage bits are defined and structured so that each usage attribute, by itself, grants or denies a specific usage. Thus, the capability to encipher data via the Encipher Data instruction is controlled via a single "Encipher" bit within the control vector whose type/subtype is "data/privacy".

Thus, each usage attribute is defined independently from all other usage attributes. This guarantees a CV checking process such that each instruction checks only the usage attributes called for by the requested function. A design wherein usage attributes are enabled only when certain other attributes are enabled or disabled is specifically avoided, since this increases CV checking. Some cross checking of attributes among two or more control vectors is required, but is kept to a minimum.

To facilitate and simplify CV checking, each cryptographic instruction, where necessary, is passed a "mode" parameter declaring a specified use of the key or keys passed as parameters to the instruction. Thus, the CV checking process tests each control vector according to the specified "mode". This eliminates costly cross checking among control vector attributes to ensure consistency.

The design also follows a principle that no cryptrographic instruction generates a control vector. All control vectors are supplied to the cryptographic instructions as parameter inputs.

Where possible, like usage attributes and field definitions are located at the same bit positions in the control vector, regardless of CV type. This facilitates CV checking. For example, the translate ciphertext instruction interrogates the same bit positions in the data/privacy and the data/xlate control vectors, even though the usage bits are "E" and "D" for the data/privacy CV and "XOUT" and "XIN" for the data/xlate CV, respectively.

### - CV Structure

In general, the control vector structure (including formats, field and bit assignments) has been defined to minimise and to facilitate CV checking, while at the same time providing cryptographic security. The CV structure, so to speak, is the variable with the greatest degree of freedom in the design process.

The following design options have been employed in the control vector:

### -- 1. Vertical Separation.

The control vector has a "CV Type" field that provides vertical separation within the control vector structure, much like the separation provided by variants. Control vector types are defined along intuitive lines, following existing key terminology and data cryptography. However, vertical separation is implemented only where necessary under the CA, thus ensuring architectural simplicity and ease of comprehension of the CV checking rules.

By first defining broad classes of CV Main Types (e.g. Data Keys, Key Encrypting Keys, PIN Keys) and then further defining CV Subtypes and usage attributes within CV Type, the CV checking rules can be optimised much in the same way that a "divided and conquer" search can be employed more effectively than a brute force approach.

### -- 2. Horizontal Separation.

The control vector is ideally suited as a data structure for recording the usage attributes to be associated with a key (or other cryptographic variable). Within the CA, this is accomplished by specifying a bit in the control vector for every cryptographic instruction (or key parameter within the instruction, if more than one key parameter may participate) where the key may be used as an input. A bit value of "1" signifies that a usage of the key is "enabled" by the CF whereas a bit value of "0" signifies that a usage of the key is "disabled" by the CF. This form of control vector structuring is called horizontal separation.

### -- 3. Encoded Fields.

A field of two or more bits is sometimes encoded for reasons of security. An encoded field has the property that individual bits have no significance by themselves, but the bits together define a set of possible values. Encoded fields have the advantage that they define mutually exclusive events since the field can take on only one value at a time. Encoded fields have the potential disadvantage that CV checking is not always optimised from a performance standpoint. However, encoded fields are sometimes necessary to ensure that usage attributes cannot be mixed in inappropriate combinations that give rise to cryptographic attack or introduce some cryptographic weakness.

### -- 4. Protection From Non-System Generated Keys.

The method for coupling the control vector and key is such that CV checking is unable to detect a system generated key (via KGEN or GKS) from a non-system generated key. For this reason, a "back-door" method exists within the architecture for generating a keys and control vectors. It consists of defining a control vector "of choice" and a random number which is then represented as a key encrypted in the manner described under the architecture using the selected control vector. (However, the method has no capability to control the key actually recovered within the cryptographic facility.)

The so-called "back-door" method of key generation is primarily an annoyance, although in some cases cryptographic attacks would be possible if additional measures of defence were not taken in the architecture. It would be a simple matter to define an architecture that eliminates this "back-door" key generation (once and for all), but doing so would introduce additional unwarranted complexity and processing. A more practical approach is followed by the CA, viz., the "back-door" key generation problem is prevented only where necessary for security reasons. Thus, a good balance among security, complexity, and performance is achieved. Techniques to avoid cryptographic weaknesses introduced by the "back-door" method of key generation are these:
--- Where necessary, conflicting usage attributes within a single control vector are split among two control vectors. The GKS instruction has checking that prevents so-called bad combinations of key pairs from being generated.
--- Where necessary, conflicting usage attributes within a single control vector are grouped into a single encoded field.
--- As a last resort, extra redundancy is used so that the CF can validate its own system generated keys.

### -- 5. Even Parity for Control Vectors.

Even parity is enforced on the control vector. This ensures that the Exclusive-OR of an odd parity key with the control vector will result in an internal key of odd parity. This, in turn, ensures compatibility with hardware that may check such internally derived keys for odd parity (if such checking is enforced). Saying it another way, the CA cannot ensure that hardware will not enforce this odd parity on internal keys.

A control vector of 64 bits, numbered 0 through 63. The most significant bit is bit 0, by convention. Of the 64 bits, there are 8 parity bits.

### -- 6. Anti-Variant Bits.

This guarantees cryptographic separation between variants and control vectors, which may unavoidably be mixed in some implementations internal to a node.

### -- 7. Avoid Onto Mappings.

The control vector design and the manipulation of the control vector via the cryptographic instruction set avoids instances where CV fields with multiple values are mapped into a single value. Some specific instances of such onto mappings are allowed (e.g., LCVA, RFMK, and RTMK instructions) where security is not jeopardised.

### - CFAP Control

Certain bits in the control vector are reserved for CFAP. These bits can be used by CFAP for further data cryptography control. These bits are not checked by the CF, but are entirely managed by CFAP.

### - General Format for Control Vectors

Fig. 5 shows the general format for control vectors. The first row of of Fig. 5 shows the fields that are in common for most of the control vectors. They are briefly described as follows: (Further details can be found in subsequent subsections.)

### -- CV Type

This field indicates the type of control vector, and is also the key type of the key to which this control vector is attached. The CV Type field consists of main-type and sub-type.

The main types of a control vector are:
-- Data key: Data keys are used to encrypt/decrypt data, or to authenticate data.
-- PIN key: PIN keys are used to encrypt PINs or to generate PINs.
-- Key-encrypting key: Key-encrypting keys are used to encrypt keys.
-- Key part: A key part is a part or a component of a key, having the same length as the key. For example, a key K may have two key parts Ka and Kb such that Ka XOR Kb = K.
-- Intermediate ICV: An Intermediate ICV is used during MAC processing to encrypt the intermediate Output Chaining Value of a segment of data or message. This OCV is then fed into the next segment of the data and used as an ICV. This occurs when a message or data on which a MAC to be generated or verified is long and must be divided into shorter segments.
-- Token: Tokens are variables used to protect the integrity of the data keys stored in the Data Key Dataset (a key storage for Data keys). They help prevent the access of data keys by unauthorised users.

The sub type differentiates the classes of keys of the same main type. For example, a key of main type data key can have the sub type of privacy (capable of doing encryption and decryption); or MAC (capable of doing data authentication); or XLATE Data (capable of translating ciphertext); etc. When no sub-type distinction is made, the keys are normally referred by the main type (e.g., Data key, PIN key, etc.)
-- Export Control: This field indicates how the export of the key associated to this control vector is controlled, and whether the key is allowed to be exported.
-- CF Enforced Usage: This field indicates for what CA functions the key can be used, and how it is used. For example, a data privacy key may have the usage attributes E=1 and D=1, which indicate that the key can be used in the Encipher and Decipher function to encrypt and decrypt the data, respectively.
-- AV (Anti-Variant): This field differentiates any valid control vector from the 64 predefined variants that are used in variant-based crypto systems. Since all 8 bytes of the any variant of the 64 predefined variants are the same, setting the value of the AV field such that at least two bytes of the control vector are not the same will differentiate a valid control vector from a predefined variant.
-- Software Bits: This field represents control vector bits that are controlled/managed entirely by CFAP; The software field is not checked/enforced by the hardware (CF). When no control vector exists, CFAP builds a control vector from information supplied to CFAP (normally via parameter in a macro). When a control vector already exists, CFAP will check the control vector (including the software field) to determine whether the key is allowed to operate in the manner specified/requested. The hardware (CF), unlike software (CFAP), checks only those bits associated with a CA instruction, other usage bits are not checked).
-- Extension: This field indicates whether the control vector is a 64 bit control vector or an extended control vector of 128 bits. In the current CA, all the control vectors have 64 bits in length. This field is defined now to ease the expanding of the control vector in the future when the number of bits required to specify the control vector exceeds the b4 bit length.
-- Reserved Bits: This field is reserved for the system for future use.
-- Parity Vector: Every parity bit is the even parity of the preceding 7 bits of the byte.

For key-encrypting key control vectors, besides the common fields listed above, there are two additional fields, KEY FORM and LINK CONTROL.
-- Key Form: This field indicates the length of the key (single or double length) and whether the key half associated with the control vector key is the right or left half of the key. Note that for a single length key, the right half is the same as the left half and is the key itself.
-- Link Control: This field indicates how the key-encrypting key associated to this control vector is used to transmit other keys on the link, and what type of system (e.g., CV system or non-CV system) can keys be shipped to or received from , under this key-encrypting key.

NOTE: The descriptions in the second row and the third row in the general figure and other referenced figures in this section are not part of the control vector. They are put there to give information on the fields of the control vector as follows:
--- The second row indicates the bit length of the fields. The abbreviation 'b' stands for 'bit' . For example, 1b stands for 1
   bit, 3b stands for 3 bits, etc.
--- The third row indicates whether the field is checked by hardware
   (CF) or software (CFAP).

### Control Vector Format for Data Key

Data keys are divided into the following subtypes:
- Data Compatibility Key. This is the data key that would be used to maintain compatibility with existing systems such as IBM 3848/CUSP or IBM 4700 FCS. Since these existing systems do not have the cryptographic separation between privacy and authentication, this key can be used to perform any or all of the following functions: encipher, decipher, generate MACs and verify MACs. This control vector can be removed (i.e., substituted by CV=0 on-the-link) when it is exported to other systems (via the RFMK instruction), whereas the control vectors for all other data keys except ANSI data keys cannot be removed.
- Privacy Key. This is the key used for enciphering and/or deciphering only.
- MAC Key. This is the key used for the purpose of data authentication only. That is, it can only be used to generate MACs and/or verify MACs.
- Data Translation Key (Data XLT Key). This is the key used in the translation of ciphertext.
- ANSI Key. This is the key that is used in ANSI applications. It can be used to encipher and decipher data or to generate and verify MACs. It can also be combined with another ANSI key to form an ANSI MAC key (i.e., a Data ANSI key with generate MAC/verify MAC capability). This control vector can be removed when exported to other systems (i.e., substituted by CV=0 on-the-link) via the ARFMK instruction, whereas the control vectors for all other data keys except compatibility keys cannot be removed.

Depending on the CV subtype of the control vector, the bits in the USAGE field have specific meaning to be described shortly.

### Control Vector for Privacy Keys

Referring to Fig. 6, the following is a detailed description of each field and subfield of the figure.
- CV Type
   CV Type for privacy key (main type="DATA KEY", subtype="PRIVACY".
- Export Control (controls exporting of this key): This field occupies 1 bit:
   -- EXPORT CONTROL = 1: This key can be exported by RFMK. Also, the RFMK, RTMK and LCVA instruction can reset this bit to 0.
   -- EXPORT CONTROL - 0: This key cannot be exported by RFMK. Also, it cannot be changed to 1 by any instruction.

As an example, suppose node X generates a key K and control vector C and sends them to node Y.
- Usage
   -- E
      --- =1: This key can be used in the ENCIPHER instruction to encrypt the data.
      --- =0: This key cannot be used in the ENCIPHER instruction to encrypt the data.
   -- D
      --- =1: This key can be used in the DECIPHER instruction to decrypt the data.
      --- =0: This key cannot be used in the DECIPHER instruction to decrypt the data.

### - AV (Anti-Variant)

This field occupies two bits, used to differentiate the control vector from 64 predefined variants that are used in variant-based crypto systems. Since all 8 bytes of the any variant of the 64 predefined variants are the same, setting the value of the AV field such that at least two bytes of the control vector are not the same will differentiate a valid control vector from a predefined variant.

### - Software bits

This field occupies 12 bits.

### - CV Version

This field is 6 bits long and is used by CFAP to distinguish the current control vector definition from future definitions.
- Software - Enforced Usage (See also the CFAP section.)
   -- CVDPIM (Control Vector Data Privacy ICV Mandatory)
   -- CVDPCU (Control Vector Data Privacy CUsp)
   -- CVDP47 (Control Vector Data Privacy 4700)
   -- CVDPM8 (Control Vector Data Privacy Multiple of 8)
- Extension

This field indicates whether the control vector is a 64 bit control vector or an extended control vector of more than 64 bits.

### - Reserved bits

This field is reserved for the system for future use.

### - Parity

This field consists of the last bit of every byte of the control vector. The parity bit of each byte is set to achieve even parity for the byte.

### Control Vector for MAC keys

Referring to Fig. 7, the following is a detailed description of each field and subfield of the figure.

### - CV Type:

CV Type for MAC key (main type=:DATA KEY", sub type ="MAC").

### - Export Control (controls exporting of this key):

Same description as that of Privacy keys.
- Usage
   -- MG
      --- - =1: This key is permitted to be used in the GMAC instruction to generate MACs on data.
      --- - =0: This key is not permitted to be used in the GMAC instruction to generate MACs on data.
   -- MV
      --- =1: This key is permitted to be used in the VMAC instruction to verify MACs on data.
      --- =0: This key is not permitted to be used in the VMAC instruction to verify MACs on data.

### - AV (Anti-Variant)

Same description as that of Privacy keys.

### - Software bits

This field occupies 12 bits.

### -- CV Version

CV TYPE for MAC key (main type=:DATA KEY", sub type ="MAC").

### -- Software-Enforced Usage (See also the CFAP section)

--- CVDML4 (Control Vector Data MACLEN = 4)
--- CVDM99 (Control Vector Data MAC MODE = ANSI X 9.9)
--- CVDM19 (Control Vector Data MAC MODE = ANSI X 9.19)
--- CVDM00 (Control Vector Data MAC MODE = IBM 4700)
--- CVDM30 (Control Vector Data MAC MODE = IBM 4730)

### - Extension

Same description as that of Privacy keys.

### - Reserved bits

Same description as that of Privacy keys.

### - Parity bits

Same description as that of Privacy Keys.

### Control Vector for Data Compatibility Keys

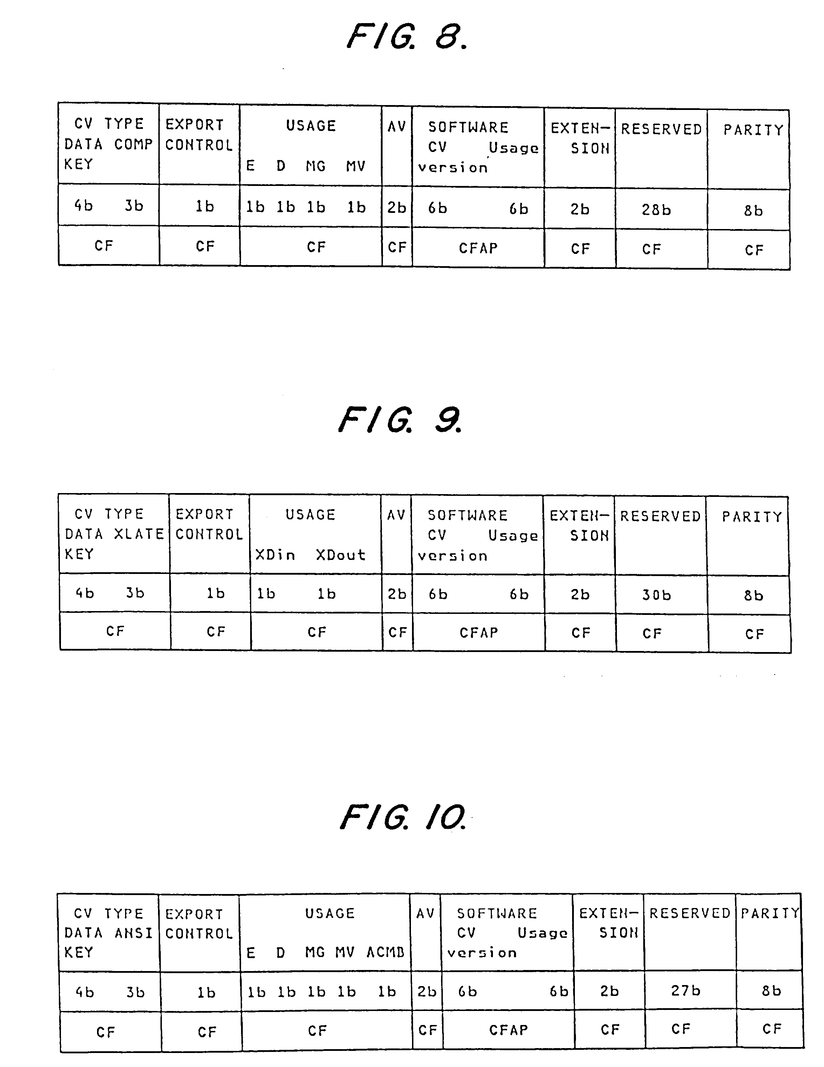

Referring to Fig. 8, the following is a detailed description of each field and subfield of the figure.

### - CV Type

CV TYPE = for data compatibility key (main type="DATA KEY", sub type ="COMPATIBILITY"

### - Export Control

Same description as that of Privacy keys.
- Usage
   -- E
      --- =1: This key can be used in the ENCIPHER instruction to encrypt the data.
      --- =0: This key cannot be used in the ENCIPHER instruction to encrypt the data.
   -- D
      --- =1: This key can be used in the DECIPHER instruction to decrypt the data.
      --- =0: This key cannot be used in the DECIPHER instruction to decrypt the data.
   -- MG
      --- =1: This key can be used in the GMAC instruction to generate MACs on data.
      --- =0: This key cannot be used in the GMAC instruction to generate MACs on data.
   -- MV
      --- =1: This key can be used in the VMAC instruction to verify MACs on data.
      --- =0: This key cannot be used in the VMAC instruction to verify MACs on data.

### - AV (Anti-Variant)

Same description as that of Privacy keys.

### - Software bits

This field occupies 12 bits.

### -- CV Version

Same description as that of Privacy keys.

### -- Software-Enforced Usage

### - Extension

Same description as that of Privacy keys.

### - Reserved bits

Same description as that of Privacy keys.

### - Parity bits

Same description as that of Privacy keys.

### Control Vector for Data XLATE key

Referring to Fig. 9, thehe following is a detailed description of each field and subfield of the figure.

### - CV Type

CV Type for data XLATE key (main type="DATA KEY", sub type="XLATE")

### - Export Control (controls exporting of this key)

Same description as that of Privacy keys.
- Usage
   -- XDout
      --- =1: This key is permitted to be used as the output data key in the TRANSLATE CIPHERTEXT instruction.
      --- =0: This key is not permitted to be used as the output data key in the TRANSLATE CIPHERTEXT instruction.
   -- XDin
      --- =1: This key is permitted to be used as the input data key in the TRANSLATE CIPHERTEXT instruction.
      --- =0: This key is not permitted to be used as the input data key in the TRANSLATE CIPHERTEXT instruction.

### - AV (Anti-Variant)

Same description as that of Privacy keys.

### - Software Bits

This field occupies 12 bits
-- CV Version
-- Software-Enforced Usage - None.

### - Extension

Same description as that of Privacy keys.

### - Reserved Bits

Same description as that of Privacy keys.

### - Parity Bits

Same description as that of Privacy keys.

### Control Vector for ANSI Data Keys

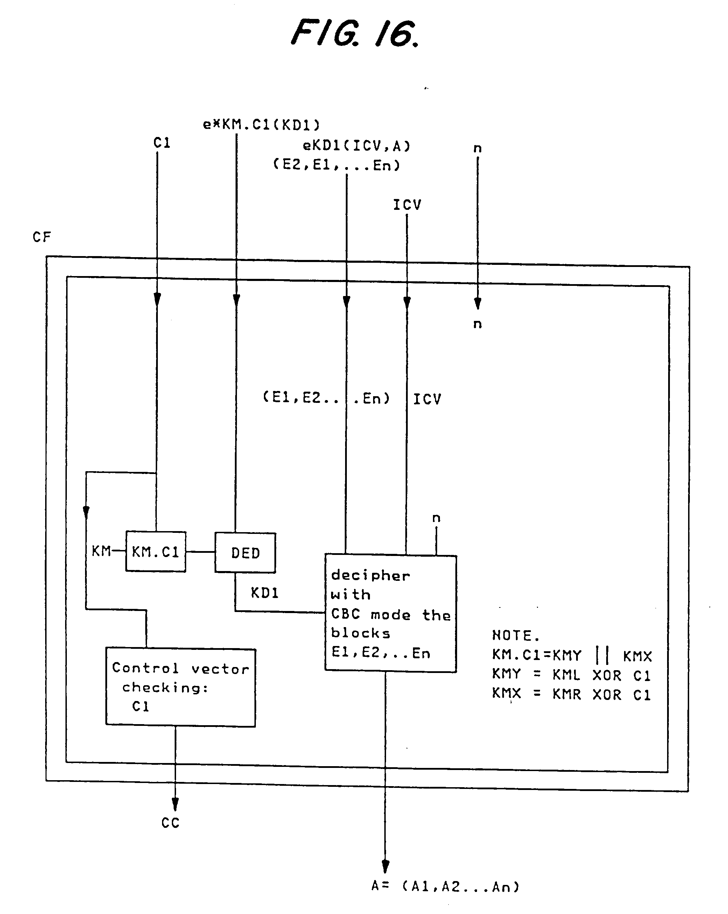

Referring to Fig. 16, the following is a detailed description of each field and subfield of the figure.

### - CV Type

CV Type for data ANSI key (main type="DATA KEY", sub type ="ANSI")

### - Export control

Same description as that of Privacy keys.

### - Usage

-- E
   --- =1: This key can be used in the ENCIPHER instruction to encrypt the data.
   --- =0: This key cannot be used in the ENCIPHER instruction to encrypt the data.
-- D
   --- =1: This key can be used in the DECIPHER instruction to decrypt the data.
   --- =0: This key cannot be used in the DECIPHER instruction to decrypt the data.
-- MG
   --- =1: This key can be used in the GMAC instruction to generate MACs on data.
   --- =0: This key cannot be used in the GMAC instruction to generate MACs on data.
-- MV
   --- =1: This key can be used in the VMAC instruction to verify MAC on data.
   --- =0: This key cannot be used in the VMAC instruction to verify MAC on data.
-- ACMB

This bit indicates whether the data key can be XORed with another data key having the ACOMBKD attribute. The XORing process is done by the ACOMBKD instruction, as will be described in section "ANSI Combine KDs (ACOMBKD)." The resulting key is used to verify and generate MACs for the messages communicated via the ANSI X9.17 protocol.
--- =1: This data key can be combined in the ACMB instruction.
--- =0: This data key cannot be combined in the ACMB instruction.

### - AV (Anti-Variant)

Same description as that of Privacy keys.

### - Software Bits

### -- CV Version

Same description as that of Privacy keys.

### -- Software-Enforced Usage - None.

### - Extension

Same description as that of Privacy keys.

### - Reserved Bits

Same description as that of Privacy keys.

### - Parity Bits

Same description as that of Privacy keys.

### Control Vector Format for Intermediate ICV

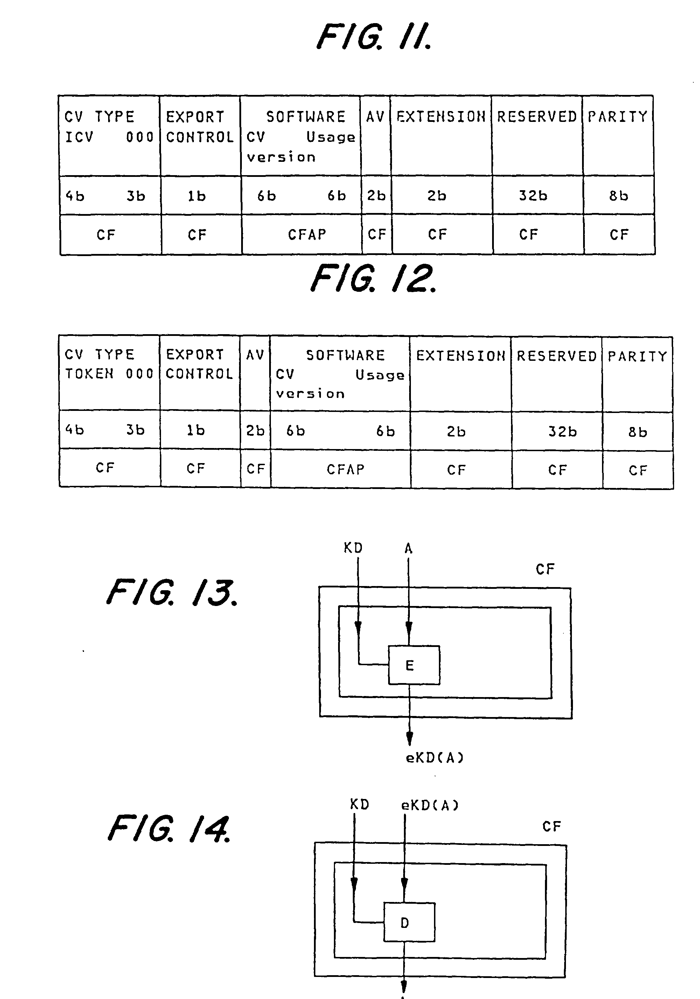

Referring to Fig. 11, the following is a detailed description of each field and subfield of the figure.

### - CV TYPE

CV TYPE, where the last three bits xxx of CV TYPE are set to zero but are not checked by the instructions (maintype="Intermediate ICV", subtype=Not applicable)

### - Export Control

Same description as that of Privacy keys. The ICV keys are normally not imported to other nodes except in the case of a hot backup. Thus, normally, this field assumes the value B'00' for an ICV control vector.

### - AV (Anti-Variant)

Same description as that of Privacy keys.

### - Software Bits

### -- CV VERSION

Same description as that of Privacy keys.

### -- Software-Enforced Usage - None.

### - Extension

Same description as that of Privacy keys.

### - Reserved Bits

Same description as that of Privacy keys.

### - Parity Bits

Same description as that of Privacy keys.

### Control Vector Format for Tokens

Referring to Fig. 12, the following is a detailed description of each field and subfield of the figure.

### - CV TYPE

CV TYPE, where the last three bits xxx of CV TYPE are set to zero but are not checked by the instructions (maintype="Token", subtype=Not applicable).

Tokens are secret quantities used to protect the integrity of Data keys stored in the Data Keys Dataset (DKDS). Data keys are stored in the DKDS in the form token+e*KM.C1(K),e*KM.C2(token). Token control vector type is allowed in several instructions such as EMK, RTNMK and RTCMK.

### - Export Control

Same description as that of Privacy keys. The ICV keys are normally not imported to other nodes except in the case of a hot backup. Thus, normally, this field assumes the value B'00' for an ICV control vector.

### - AN (Anti-Variant)

Same description as that of Privacy keys.

### - Software Bits

### -- CV VERSION

Same description as that of Privacy keys.

### -- Software-Enforced Usage - None.

### - Reserved Bits

Same description as that of Privacy keys.

### - Extension

Same description as that of Privacy keys.

### - Parity Bits

Same description as that of Privacy keys.

### Instruction Set

The instruction set described here is a common cryptographic function set which is implemented in the CF. There may be exceptions to this requirement; for instance, MDC can be implemented at a CFAP level. Other deviations in the instruction set implementation should be carefully considered based on security requirements and product environment.

The instruction set is based on a control vector approach. There are several fields in the control vectors which may or may not be implemented in a particular system. However, the minimum control vector checking as described here must be performed in each system in the CF. If the full crypto separation is not required or only a subset of the instruction set is sufficient for a given application, the control vector checking can be excluded for the functions not implemented in a given design. (The checking on subtype fields in the control vector, an encoded field, ensures that control vectors can not be mixed and matched in the crypto instructions using invalid combinations. This checking is crucial to security.)

The instruction set equations represent the inputs required to the function and outputs expected from the function related to a cryptographic function described. Instead of passing actual data to the function, the implementation may pass the addresses of data to the function. This addressing would depend upon the given system implementation and is not described here.

The equations describe all the parameters and data required to perform a given function. Depending upon the modes of the operation, some or all the parameters are used in the function, however, the fields in the equation have to be treated as inputs and outputs rather than the actual values of inputs and outputs as passed to the function in a given implementation. For example: the "A" field in the equation represent the data to be passed to a function, the physical form of this may be a 32 bit address pointing to the data to be fetched by the instruction from memory or to be stored to the memory. The data bus width from memory is also implementation dependent, whereas the input data to be encrypted or decrypted by crypto function operations is always a multiple of 8 bytes.

There are two fundamental ways in which CV checking can be done.

### - Test Bits in Control Vector: Test the control vector bits according to what they should be, if it does not match then set a condition code and abort the operation.

For example, in ENCIPHER instruction "E" bit of the CV is tested for "1", if it is not one then the operation is aborted. For more complicated instructions, the testing is not as trivial as this, and we need to pass some parameters to specify the intent of input and output operation and the usage of control vector. For example, in generate key set (GKS), "mode" is specified to the instruction to generate a particular from of output, and the control vector checking has to be performed according to the "mode" specification.

### - Set bits in Control Vector: Set a bit in control vector as appropriate then perform the operation. This does not require any testing of control vectors.

For example, in ENCIPHER instruction "E" bit is set in the control and the operation is performed. Now, each instruction has to know, what bits to set and under what conditions? This strategy may not work in all cases. For instance, how would the instruction know what is the bit setting for "target control"? This means, there has to be a parameter specified to the instruction indicating to choose a particular setting in the control vector. This approach will take away all the flexibility in the control vector specification.

Either of the above two techniques will satisfy the cryptographic requirements of the control vector checking. We have chosen the "Test bits in Control vector" approach (no bits in the control vector are set by the instruction) for the following reasons:
- Instruction does not have to know what bits to set nor when.
- It is very flexible to pass a parameter like "mode" and get the possible combination of outputs, and provide a combination of inputs to the instruction.
- If the setting is hardcoded in the CF, then it is very hard to make extension to the architecture, and it is also very difficult to know all the possible combinations ahead of time.
- It simplifies hardware implementation, and provides greater flexibility to software.
- It preserves the intent of control vectors: Control vectors (at the present time) are used for cryptographic separation and specifically for security reasons. Control vectors are not used in CA for "specifying an operation or a function to the instruction". In other words, control vectors are not like an "extended opcode" for the instruction.

### Encode (ENC)

- Equation: KD, A ==== eKD(A)
- Inputs:
   - KD: 64 bit clear key
   - A: 64 bit plain text
- Outputs: eKD(A) 64 bit encrypted data

Description: The encode function is used to encipher an 8 byte plain text data in ECB mode using a 64 bit clear key. No control vector is passed to this instruction.

Fig. 13 is a block diagram of this instruction.

### - cc:

-- 1. successful operation
-- 2. unsuccessful operation (error)

NOTE: Unsuccessful operation can be any hardware error specific to a given implementation. The condition codes (cc described here merely represent suggested condition codes for the instruction, however, there may be more condition ccdes implemented in a given system. Furthermore, the CC codes do not represent the actual condition codes that have to be passed by the function in a given implementation, the numbering used here is for a convenient description of crypto architecture.

### - Control Vector Checking: - None.

### Decode (DEC)

- Equation: KD, eKD(A) ==== A
- Inputs:
   - KD: 64 bit clear key
   - eKD(A): 64 bit encrypted data
- Outputs: A 64 bit encrypted data

Description: The decode function is used to encipher an 8 byte plain text data in ECB mode using a 64 bit clear key. No control vector is passed to this instruction.

Fig. 14 is a block diagram of this instruction.
- CC:
   -- 1. successful operation
   -- 2. unsuccessful operation (error)
- Control Vector Checking: - None

### Encipher (ENCI)

- Equation: e*KM.C1(KD1), ICV, A, n, C1 ==== eKDl(ICV,A)
- Inputs:
   - e*KM.C1(KD1): 64 bit data key (KD1) triple encrypted under the master key (KM) with a control vector C1.
   - ICV: 64 bit plain input chaining value

NOTE: Encrypted ICVs are managed by CFAP as described in the "ICV/CCV Management" and "Software Interface."

If output chaining value (OCV) is required, the last 8 byte output (En) must be used as OCV, however, this is not a standard approach. Each system implementation treats the encryption and decryption of the last block differently. Refer to "Software Interface" for more details on the last block treatment and OCV generation techniques. CFAP handles all the possible last block encipherment and decipherment and also OCV management.
- A: Data to be encrypted, in multiples of 8 byte blocks.

The 8 byte blocks are Al, A2,...An. If the last block An is not a multiples of 8 bytes, padding should be performed by CFAP before calling this instruction. CF instructions always assume multiples of 8 bytes data as inputs and outputs.
- n: number of 8 byte blocks to be encrypted.

n should be as large as possible, however, this may be system dependent. CA does not define any maximum limit on n. For example: If number of 8 byte blocks = 10,000 and n max = 4,000, then Encipher instruction will be invoked as follows:
-- Encipher n=4000
-- Encipher n=4000
-- Encipher n=2000

NOTE: After each call of Encipher, the last 8 bytes enciphered data En (OCV) has to be fed back as ICV input to the next Encipher call.
- c1: 64 bit control vector for data key (KD1).

- Outputs: ekDl(ICV,A encrypted data, n blocks, each block is 8 bytes (E1, E2..En).

Description: The input data is encrypted via the CBC mode of DEA encryption. Multiples of 8 byte blocks are encrypted by this instruction until all n blocks are encrypted.

The architecture defines only plain ICV input to the function. If encrypted ICV is required, the ICV can be encrypted using a data key (KD2) using encipher instruction. Encrypted ICV's can be decrypted using decipher instruction. All the encrypted ICV's and OCV's are managed by the CFAP program.

If the input data is not in multiples of 8 byte blocks then padding must be done. This padding has to be performed by CFAP before invoking the encipher function.

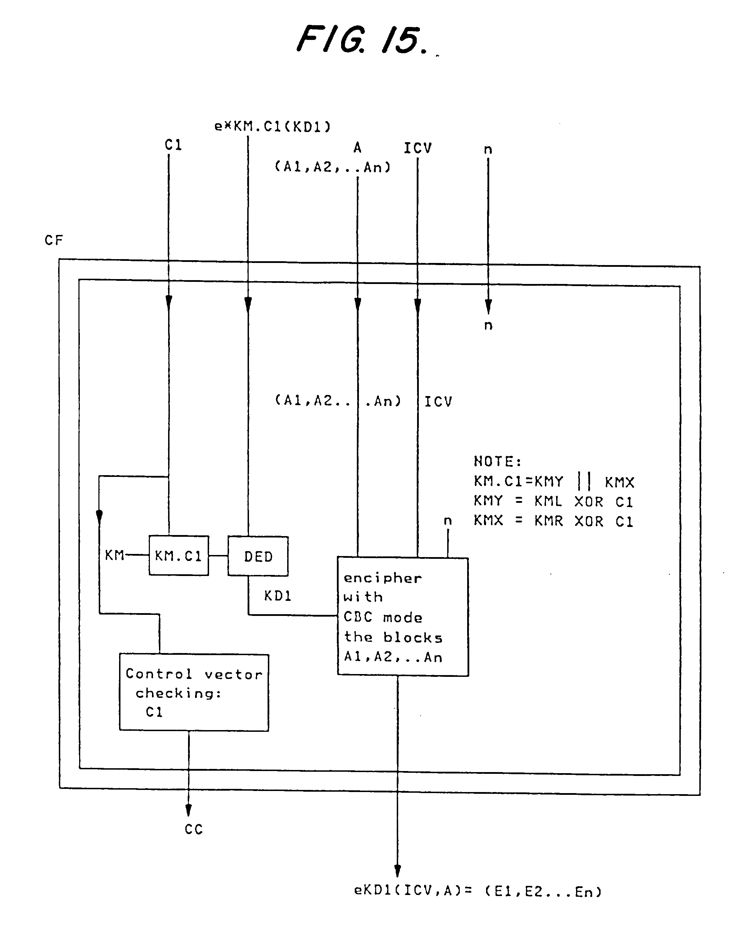

Fig. 15 is a block diagram of this instruction.

### - CC:

-- 1. successful operation
-- 2. C1 is invalid
-- 3. unsuccessful operation (error)

### - Control Vector Checking:

-- 1. Checking on C1
   --- CV type = "data/compatibility" or "data/privacy" or "data/ANSI'
   --- E usage bit = 1
   --- reserved (48:63) = X'0'

NOTE: For all the instructions described,here, control vector checking implies that if the check is not passed then the instruction must be aborted and the corresponding control vector invalid condition code (cc) be turned on. If there are one or more checks to be performed on the control vectors, all the checks are performed and all the checks have to be passed to perform the operation. If any of the checks fail, the operation must be aborted.

### Decipher (DECI)

- Equation: e*KM.C1(KD1), ICV, eKDl(ICV,A), n, C1 ==== A
- Inputs:
   - e*KM.C1(Kd1): 64 bit data key (KD1) triple encrypted under the master key (KM) with a control vector C1.
   - ICV: 64 bit plain input chaining value.

NOTE: Encrypted ICVs are managed by CFAP as described in the "ICV/OCV Management" and "Software Interface."

If output chaining value (OCV) is required, the last 8 byte input (En) must be used as OCV, however, this is not a standard approach. Each system implementation treats the encryption and decryption of the last block differently. Refer to "Software Interface" for more details on the last block treatment and OCV generation techniques. CFAP handles all the possible last block encipherment and decipherment and also OCV management.
- eKd1(ICV,A): encrypted data, n blocks, each block is 8 bytes (E1, E2..En).
- n: number of 8 byte blocks to be decrypted.

n should be as large as possible, however, this may be system dependent. CA does not define any maximum limit on n.

NOTE: After each call of Decipher, the last 8 bytes enciphered data En (OCV) has to be fed as input ICV to the next Decipher call. This is being managed by CFAP. For example: If the number of 8 byte blocks =10,000 and n max =4000, then Decipher instruction will be invoked as follows:
-- Decipher n=4000
-- Decipher n=4000
-- Decipher n=2000
   - C1: 64 bit control vector for data key (KD1).

- Outputs: A Plain data, in a multiples of 8 byte blocks.
   The 8 byte blocks are A1, A2,...An.

Description: The input data is decrypted via the CBC mode of DEA encryption. The multiples of 8 byte blocks are decrypted by this instruction until all n blocks are decrypted.

The architecture defines only plain ICV input to the function. If encrypted ICV is required, the CV can be encrypted using a data key (KD2) using encipher instruction. Encrypted ICV's can be decrypted using decipher instruction. All the encrypted ICV's and OCV.='s are managed by the CFAP.

Fig. 16 is a block diagram of this instruction.

- CC:
   -- 1. successful operation
   -- 2. C1 is invalid
   -- 3. unsuccessful operation (error)
- Control Vector Checking
   -- 1. Checking on C1
      --- CV type = "data/compatibility" or "data/privacy" or "data/ANSI"
      --- D usage bit = 1
      --- reserved (48:63) 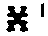 '0'

### GENMAC (GMAC)

- Equation: e*KM.C1(KD2=1), [e*KM.C2(KD2)], ICV[e*KM.C3(OCV)], A, n, iCV-type, output-type, mac-enc, C1, [C2], [C3] ==== MAC (64 bit) or e*KM.C3(OCV)
- Inputs:
   - e*KM.C1(KD1): KD1 is a MAC generation key for single encrypting MAC, triple encrypted under KM with a control vector C1.
   - e*KM.C2(KD2): KD2 is an optional MAC generation key for triple encrypting MAC, triple encrypted under KM with a control vector C2.

This is an optional input required for triple encrypting mac output if mac-enc =1.
- ICV: ICV equal to zero is the default Initial Chaining Value, and is standard to CA architecture, ANSI X9.9 and ANSI X9.19.

Non-zero plain ICV can also be used to be compatible with systems which require plain ICV input. Encrypted ICV input is not supported by CA as it was found that it does not provide any more security for the function. Encrypted intermediate ICVs are supported by CA.

NOTE: Encrypted ICVs if required are managed by CFAP as described in the ICV/OCV Management" and "Software Interface."
- e*KM.C3(OCV): This is a 64 bit intermediate ICV encrypted under the master key with a special control vector C3.

This is an optional input which must be provided if large blocks of data (/n) are used to generate MAC. Decrypting the ICV is done internal to the function. Intermediate OCV can not be shipped from the local node, as it is stored under the master key with a control vector in the form for local use only.
- A: Data to be MAC'd, in multiples of 8 byte blocks (A1, A2...An).
- n: number of 8 byte blocks to be MAC'd. n should be as large as possible, however, this may be system dependent.

ccA does not define any maximum limit on n. If large number of blocks have to be MAC'd then GMAC is invoked multiple number of times until all blocks are complete. For example: if n max is 4000 for the system, and the data to be MAC's are 10,000 8 byte blocks, then GMAC is invoked as follows:
-- GMAC n=4000,output-type=1,iCV-type=0
-- GMAC n=4000,output-type=1,iCV-type=2
-- GMAC n=2000,output-type=1,iCV-type=2

NOTE: After each call of GMAC, the intermediate ICV e*KM.C3(OCV) must be fed back to next GMAC call as ICV input. The decryption of this intermediate ICV must be done internally in the CF
- iCV-type: iCV-type indicates whether the ICV passed to the function is zero, plain, or intermediate.

Intermediate ICV is triple encrypted under the master key with a control vector C3. Zero ICV is a default value.
-- 0: zero ICV (default)
-- 1: plain ICV
-- 2: intermediate ICV (OCV)
   - output-type: indicates the stage of the mac generation process to the instruction.
-- 0: MAC output
-- 1: Intermediate ICV output (OCV)
   - mac-enc: mac-enc indicates a single or triple encryption mac output
-- 0: single encrypting mac output
-- 1: triple encrypting mac output(ANSI 9.19 requirement)
   - C1,C2,C3: 64 bit control vectors for KD1, KD2, and OCV respectively.

C2 and C3 are optional inputs to the instruction, C2 must be input if mac-enc=1, and C3 must be input if iCV-type =2 or output-type=1.
- Outputs:
   - MAC: is a 64 bit output, resulted from the single encryption or triple encryption of the final input block of data, depending upon mac-enc parameter. This output is valid only if output-type=0.
   - e*KM.C3(OCV): OCV is a 64 bit intermediate ICV triple encrypted under KM with control vector C3. This output is valid only if output-type=1. MAC output and Intermediate OCV outputs both must not be output at the same time for security reasons.

Description: The input data is encrypted with CBC mode of DEA encryption, and the final block of encrypted data is output. There are two modes, the single encryption mode and triple encryption mode. With the single encryption mode, a single key KD1 is used to create the MAC. In the triple encryption mode, the single encryption mode is employed with KD1 to create a MAC, except the MAC is then decrypted with KD2, and re-encrypted again with KD1 to produce the final 64 bit MAC.

The instruction outputs 64 bit MAC, however, X9.9 specifies 32 bit MAC which is 32 left most bits of the 64 bit MAC output. CFAP has to extract the appropriate MAC bits from the 64 bit MAC output.

ICV is zero as a standard and optionally can be a plain or intermediate ICV to GMAC instruction. If encrypted ICV's are required then CFAP must encrypt ICV under (KDS) and must pass a plain ICV to the GMAC instruction. The ANSI X9.9 MAC standard specifies a zero ICV for the first block and thus is defined here as a standard input. However, architecture provides plain and intermediate inputs to satisfy every possible need of MAC generation.

If MAC generation is required for the blocks greater than n, intermediate ICV option must be used to generate MAC. This requirement provides additional security by not exposing intermediate ICVs in clear.

If the data block is not multiples of 8 byte blocks, padding must be done. The padding has to be performed by the CFAP before invoking this function. MAC computation must be for the binary data as specified by the ANSI X9.9-1986 section 5.0 and Coded character sets authentication if needed must be implemented by CFAP.

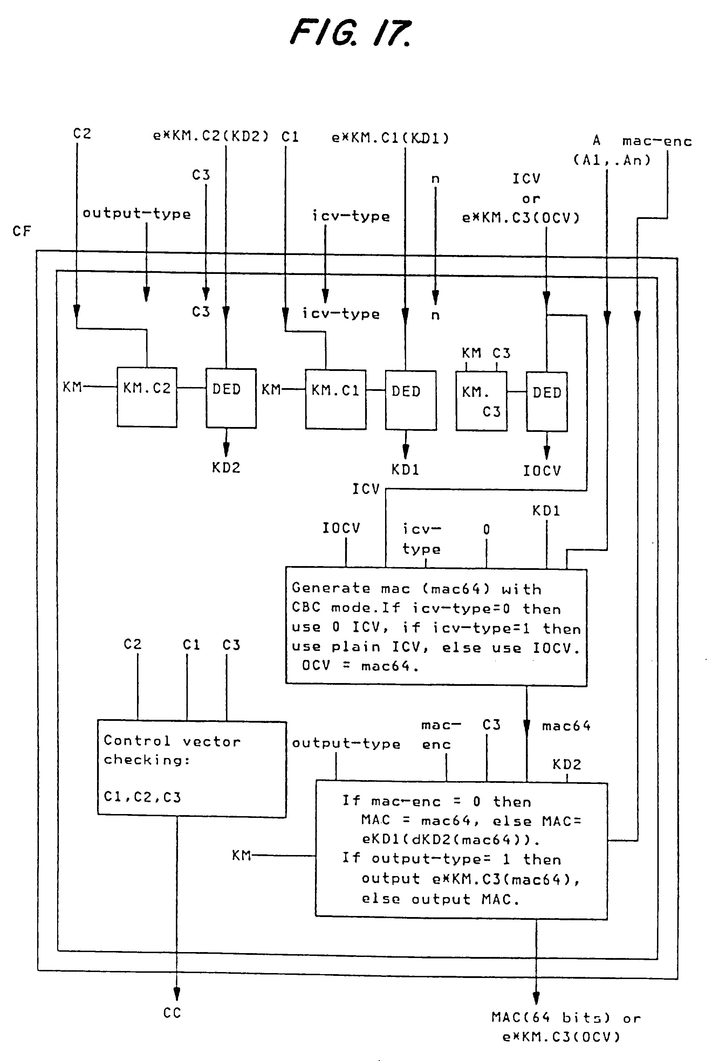

Fig. 17 is a block diagram of this instruction.
- CC:
   -- 1. successful operation
   -- 2. C1 is invalid
   -- 3. C2 or C3 is invalid
   -- 4. unsuccessful operation (error).
- Control Vector Checking:
   -- 1. Checking on C1
      --- data-type = "data/compatibility" or "data/mac" or "data/ANSI"
      --- MG usage bit = 1
      --- reserved (48:63)=X'0'
   -- 2. Checking on C2 if (mac-enc =1).
      --- CV type = "data/compatibility" or "data/mac" or "data/ANSI"
      --- MG usage bit = 1
      --- reserved 48:63) =X'0'
   -- 3. Checking on C3 if (iCV-type=2 OR output-type =1).
      --- CV type = "Intermediate ICV"

### Verify MAC (VMAC)

- Equation: e*KM.C1(KD1), [e*KM.C2(KD2)] ICV[e*KM.C3(OCV)], A, MAC, n, iCV-type, output-type, mac-enc, mac-len, C1, [C2], [C3] ==== yes/no or e*KM.C3(OCV)
- Inputs:
   - e*KM.C1(KD1): KD1 is a mac verification key for single encrypting mac, triple encrypted under KM with a control vector C1.
   - e*KM.C2(KD2): KD2 is a mac verification key for triple encrypting mac, triple encrypted under KM with a control vector C2.

This is an optional input required for triple encrypting mac output if mac-enc=1.
- ICV: ICV equal to zero is the default Initial Chaining Value, and is standard to CA architecture,ANSI X9.9 and ANSI X9.19.

Non-zero plain ICV can also be used to be compatible with systems which require plain ICV input. Encrypted ICV input is not supported by CA as it was found that it does not provide any more security for the function. Encrypted intermediate ICVs are supported by CA.

NOTE: Encrypted ICVs if required are managed by CFAP as described in the "ICV/OCV Management" and "Software Interface."
- e*KM.C3(OCV): This is a 64 bit intermediate ICV encrypted under the master key with a special control vector C3.

This is an optional input but must be provided if large blocks of data (] n) are used to verify MAC. Decrypting the ICV is done internal to the function. Intermediate OCV can not be shipped from the local node, as it is stored under the master key with a control vector in the form for local use only. The intermediate ICV's must be secret in the MAC verification process to protect from attacks.
- A: Data used in MAC, in multiples of 8 byte blocks (A1,A2...An).
- MAC: 64 bit MAC input to the instruction either single or triple encrypted.

By default, only left most 32 bits of this MAC are used for MAC comparison. mac-len may be used to explicitly specify other comparison lengths.
- n: number of 8 byte blocks MAC'ed. n should be as large as possible, however, this may be system dependent.

If large number of blocks have to be mac verified then VMAC is invoked multiple number of times until all blocks are complete. For example: if n max is 4000 for the system, and the data to be verified are 10,000 8 byte blocks, then VMAC is invoked as follows:

NOTE: After each call of VMAC, the intermediate ICV e*KM.C3(OCV) must be fed back to next VMAC call as ICV input. The decryption of this intermediate ICV must be done internally in the CF.
-- VMAC n=4000,output-type=1,iCV-type=0
-- VMAC n=4000,output-type=1,iCV-type=2
-- VMAC n=2000,output-type=0,iCV-type=2
   - iCV-type: iCV-type indicates whether the ICV passed to the function is zero, plain, or intermediate. Intermediate ICV is triple encrypted under the master key with a control vector C3.

   --- 0:zero ICV (default)
   --- 1:plain ICV
   --- 2:intermediate ICV (OCV)
      - output-type: indicates the stage of the mac verification process to the instruction
   --- 0 : MAC Verification output
   --- 1 : Intermediate ICV output (OCV)
      - mac-enc: mac-enc indicates a single or triple encryption mac input.
   --- 0 : single encrypting mac input
   --- 1 : triple encrypting mac input (ANSI 9.19 requirement)
      - mac-len: mac-len specifies the number of bytes of the mac to be compared. 4 left most bytes are compared as a default.
   --- 0 : 4 left most bytes
   --- 1 : 5 left most bytes
   --- 2 : 6 left most bytes
   --- 3 : 7 left most bytes
   --- 4 : 8 bytes

NOTE: provision of 4, 5, 6, 7, 8 byte MAC verification may subvert MAC generation process for 8 byte MAC. CFAP may consider some checking for different length MAC verification.
- C1,C2,C3: 64 bit control vectors for KD1, KD2, and CCV respectively.

C2 and C3 are optional inputs to the instruction, C2 is required if mac-enc=1, and C3 is required if iCV-type=2 or output-type=1.
- Outputs:
   - yes/no: mac is verified or not.
   - e*KM.C3(OCV): OCV is a 64 bit intermediate ICV triple encrypted under KM with control vector C3. This is an optional output valid for output-type=1.

Description: The input data is encrypted with CBC mode of DEA encryption using data key KD1 and 32 left most bits of the final encrypted block are compared for equality with the supplied MAC.32 bit MAC compare is a default value, and other comparisons must be made as specified by the mac-len parameter. CC = 1 is set for macs equal and CC=2 is set if macs are not equal. There are two encryption modes: single encryption mode, a single key KD1 is used to create the MAC. In the triple encryption mode, the single encryption mode is employed with KD1 to create a MAC, except the MAC is then decrypted with KD2, and re-encrypted again with KD1 to produce the final 64 bit MAC. The MAC is generated as specified by mac-enc input and then compared with the supplied mac to the function.

The first ICV is zero as a standard and optionally can be plain. Intermediate ICV must be used if the mac'd data is greater than n blocks in length. If the data block is not multiples of 8 byte blocks, padding must be done. The padding has to be performed by the CFAP before invoking this instruction.

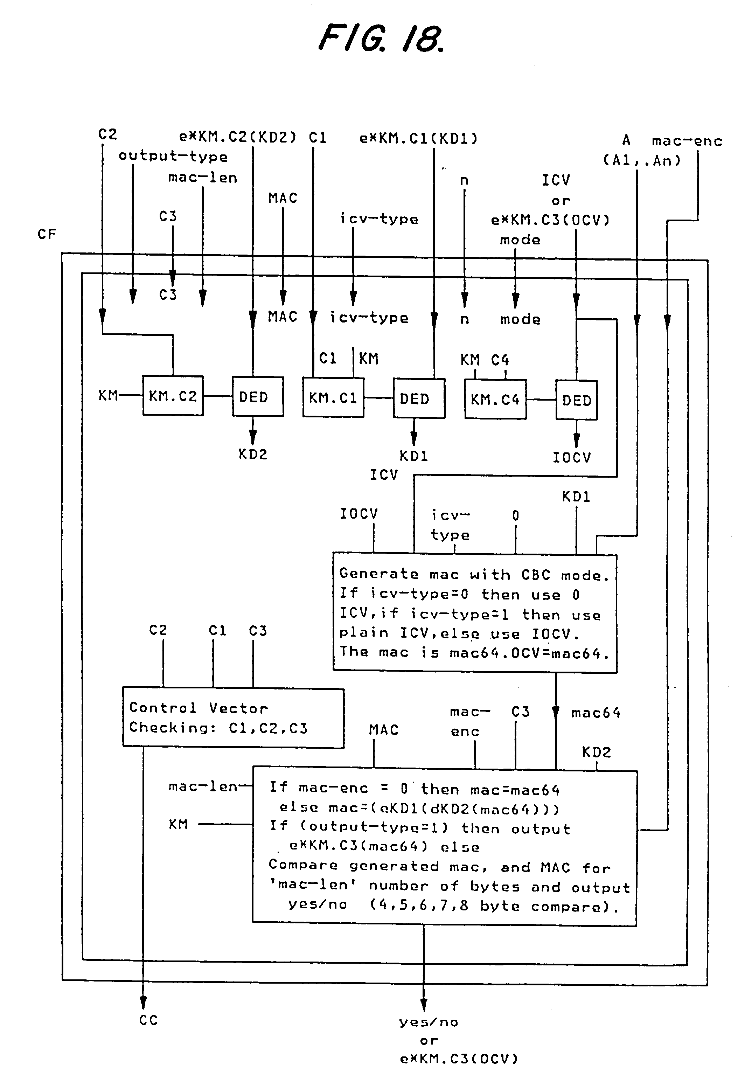

Fig. 18 is a block diagram of this instruction.

- CC:
   1. MACs equal
   2. MACs not equal
   3. C1 is invalid
   4. C2 or C3 is invalid
   5. unsuccessful operation (error).
- Control Vector Checking:
   -- 1. Checking on C1
      --- CV type = "data/compatibility" or "data/mac" or "data/ANSI"
      --- MV usage bit = 1
      --- reserved (48:63)=X'0'
   -- 2. Checking on C2 if (mac-enc =1).
      --- CV type = "data/compatibility" or "data/mac" or "data/ANSI"
      --- MG usage bit = 1
      --- reserved 48:63) =X'0'

### 3. Checking on C3 if (iCV-type=2 OR output-type =1).

---- CV type = "Intermediate ICV"

### Translate Cipher Text (TCTXT)

- Equation: e*KM.C1(KD1), ICV1, eKD1(ICV1,A), e*KM.C2(KD2), ICV2, n, C1, C2
   ==== eKD2 (ICV2,A)
- Inputs:
   - e*KM.C1(KD1): KD1 is an input data key, triple encrypted under KM with a control vector C1.
   - ICV1: 64 bit clear ICV.
   - eKD1(ICV1,A): KD2 is an output data key, triple encrypted under KM with a control vector C2
   - ICV2: 64 bit clear ICV.
   - n: Number of 8 byte blocks of data to be translated.
   - C1, C2: Control vectors for KD1, KD2 respectively.
- Outputs: eKD2(ICV2,A) outputs Data A encrypted with data key KD2 using ICV2.

Description: Translate cipher text instruction translates data from one data key and ICV to another data key and ICV. This instruction operates with data/xlt keys, and data/compatibility keys. CV keys or CV=0 keys can be used to translate data, no mix and match of these key types are permitted by this instruction. The data can be up to n 8 byte blocks, the translation is done in the crypto facility without exposing the clear data outside the crypt facility.

The ICV inputs ICV1 and ICV2 can only be plain ICV inputs to the instruction. No intermediate ICV is provided by the instruction. If more than n blocks of data have to be translated, and the data has to be chained then CFAP has to pass the last 8 byte encrypted block(En) as input to ICV. If encrypted ICVs are used then CFAP must decipher the ICVs before passing ICVs to the instruction.

NOTE: The xlate Ciphertext instruction is specifically designed to operate with CV-only keys (i.e., xlate data keys). There is no compatibility mode xlate ciphertext option offered. To get around this, the xlate ciphertext instruction will accept data keys with the D and E attributes as well as the XDin and XDout attributes. But this is provided as a service to reduce the accidental exposure of clear data, since an insider adversary could recover data unclear using the decipher instruction. It is not possible to isolate the xlate ciphertext keys in the compatibility mode, and to architect a control vector for this would give an illusion of security, when in fact, an attack could be perpetrated with the RTMK instruction by importing an intended xlate key (sent over CV=0 channel) as a decipher key. Thus, the xlate ciphertext data channel could be subverted by deciphering data sent over that channel.

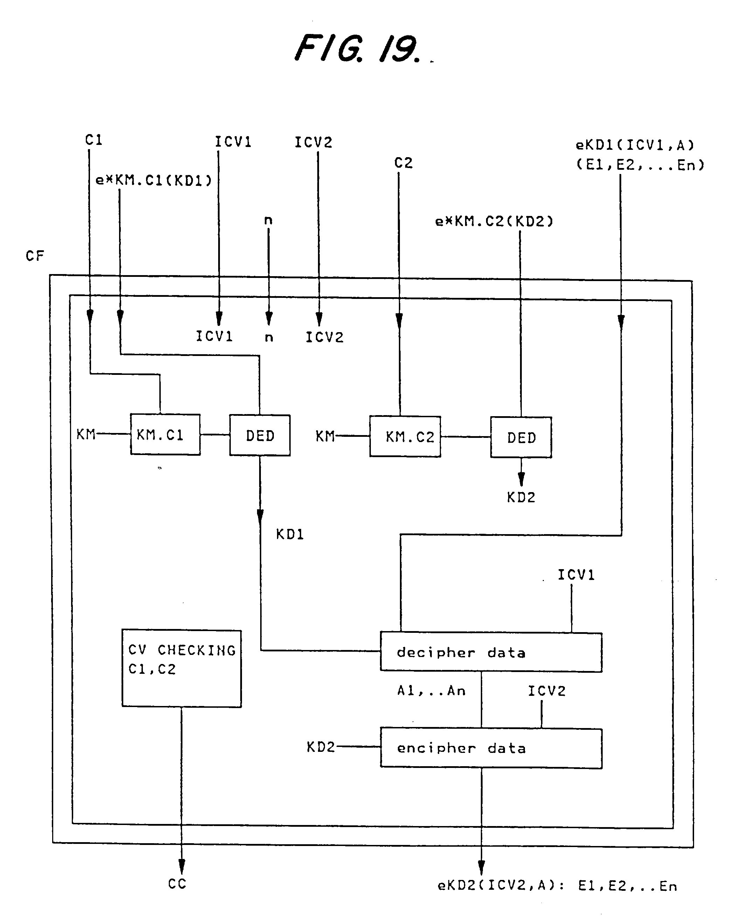

Fig. 19 is a block diagram of this instruction.
- CC:
   -- 1. successful operation
   -- 2. C1 or C2 is invalid
   -- 3. unsuccessful operation (error)
- Control Vector Checking:
   -- 1. Checking on Cl
      --- CVy type ="data/xlt" or "data/compatability"
      --- If (CV type = "data/xlt") then XDin = 1
      --- reserved (48:63)=X'0'
   -- 2. Checking on C2 if (mac-enc =1).
      --- CV type = "data/lxt" or "data/compatability"
      --- If (CV type ="data/xlt") then XDout = 1.
      --- reserved 48:63) =X'0'
   -- 3. Checking on C1 and C2
      --- CV type(C1) ="CV type (C2)

### MDCOP (MDC OPERATION)

DESCRIPTION: It is within the skill of the art to provide an instruction which calculates a Modification Detection Code (MDC) and this is not further discussed herein.

### ICV/OCV Management

An initial chaining value (ICV) is a 64 bit random, pseudo-random, or, in some cases, non-repeating value used with the cipher block chaining (CBC) mode of encryption of the DEA and with some algorithms for calculating message authentication codes (MACs).

ICV management includes options for electronic transmission and local storage of both plain and encrypted ICVs. However, encrypted ICVs must first be decrypted before being used as input parameters to any of the cryptographic functions.

An output chaining value (OCV) is a 64 bit value returned, under certain conditions, by the GENMAC and VERMAC cryptographic instructions. The same cryptographic instruction is again called and the OCV is passed as the ICV. The OCV is always encrypted in the form eKM.CV(OCV), where CV is a control vector for intermediate ICV. For the VERMAC instruction, an encrypted OCV is absolutely essential for reasons of security. A plain OCV, in this case, could be used to reveal MACs, which is something that the VERMAC instruction is not supposed to do. An encrypted OCV is also defined for the GENMAC instruction. This is done so that the GENMAC and VERMAC instructions are made as similar as possible, thus allowing for possible function overlap in hardware.

### ICV Management Outside the Cryptrographic Facility

The Communication Architecture permits the following three modes of electronic transmission of the ICV:
- 1. Plain ICV: sent in the clear.
- 2. Encrypted ICV: encrypted with a data key (KD) shared between the sender and receiver.
- 3. Private Protocol: ICV established using a private protocol between sender and receiver.

Under the CA, CFAP must handle both plain and encrypted ICVs. Although, applications may elect to manage their own encrypted ICVs thus passing plain ICVs to CFAP to encrypt ICVs for transmission and to decrypt all encrypted IDVs received from other nodes. Optionally,the cryptographic support program may also establish ICVs using a private protocol.

### ICV Management Inside the Cryptographic Facility

Control vectors are not used for the electronic distribution of IDVs, nor are there any bits in the control vector that may be used by the cryptographic facility (hardware) to control ICV distribution. There is no checking or enforcement by the cryptographic facility of the mode of ICV distribution. Thus, ICV management is strictly a function of the cryptographic support program (i.e., software external to the cryptographic facility).

All ICV's passed as cryptographic function input parameters to the cryptographic facility must be plain ICVs. ICV = 0, which is required by the GENMAC and VERMAC instructions, is just a subcase of Plain ICV. The affected cryptographic instructions are these:
- 1. Encipher
- 2. Decipher
- 3. Genmac
- 4. Vermac
- 5. Translate Cipher Text

### Acronyms and Abbreviations

- CC: Condition code
- CA or CCA: Cryptographic Architecture
- CV: Control Vector (nothing to do with ICV or OCV)
- CBC: Cipher Block Chaining. An encryption mode of the Data Encryption Standard.
- DED: Decipher, Encipher and Decipher
- DEA: Data Encryption Algorithm
- DES: Data Encryption Standard
- ECB: Electronic Code Book. An encryption mode of DES.
- EDE: Encipher, Decipher and Encipher
- ICV: Input Chaining Value (Nothing to do with CV)
- KDx: Data Key (x = integer)
- KEKx: Key Encrypting Key (x = integer)
- KM: Master Key
- KMN: New master key
- KMO: Old master key
- KPEx: Pin Encrypting Key (x = integer)
- KPGx: Pin Generation Key (x = integer)
- KPVx: Pin Validation Key (x = integer)
- KKNI: Immediate notarized key, 128 bits
- KKNIL: Left 64 bits of KKNI
- KKNIR: Right 64 bits of KKNI
- KDmac: Temporary MAC key for ANSI message
- MAC: Message Authentication Code
- MDC: Modification Detection Code
- OCV: Output Chaining Value
- PIN: Personal Identification Number (used with ATMs)

### Algorithms

### Encode and Decode Algorithm

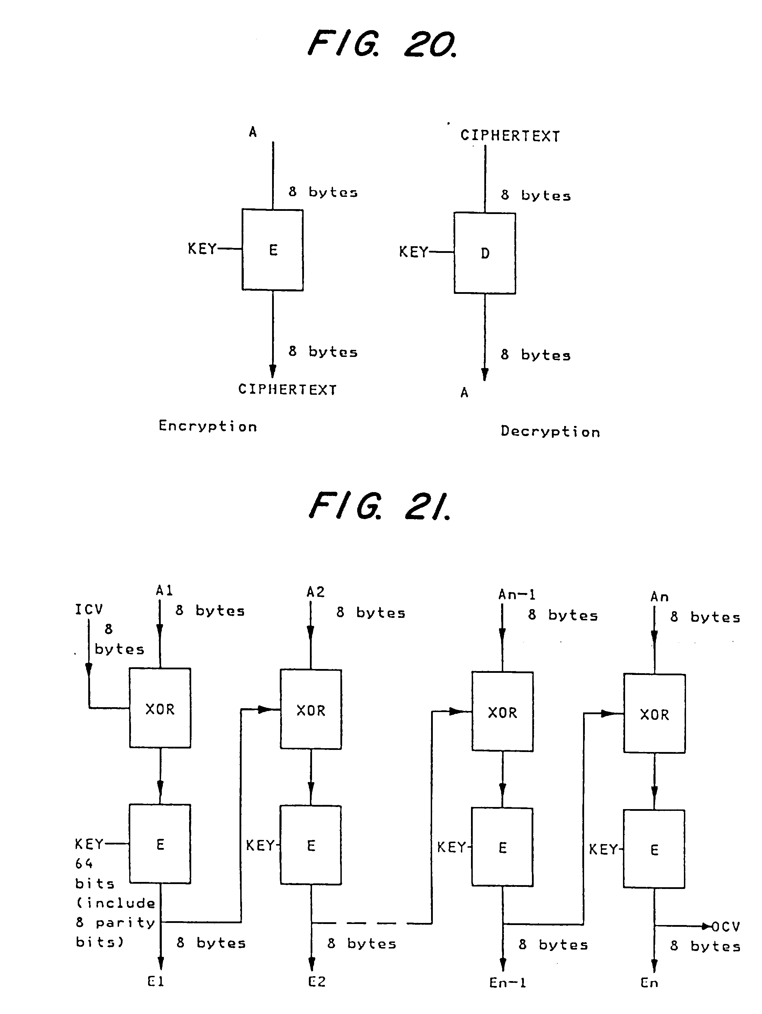

The Encode and Decode instructions use the ECB (Electronic Code Book) mode of the DES. There is no chaining or feedback in this mode. Fig. 20 illustrates the operation of the ECB mode of encryption and decryption.

### Cipher Algorithm

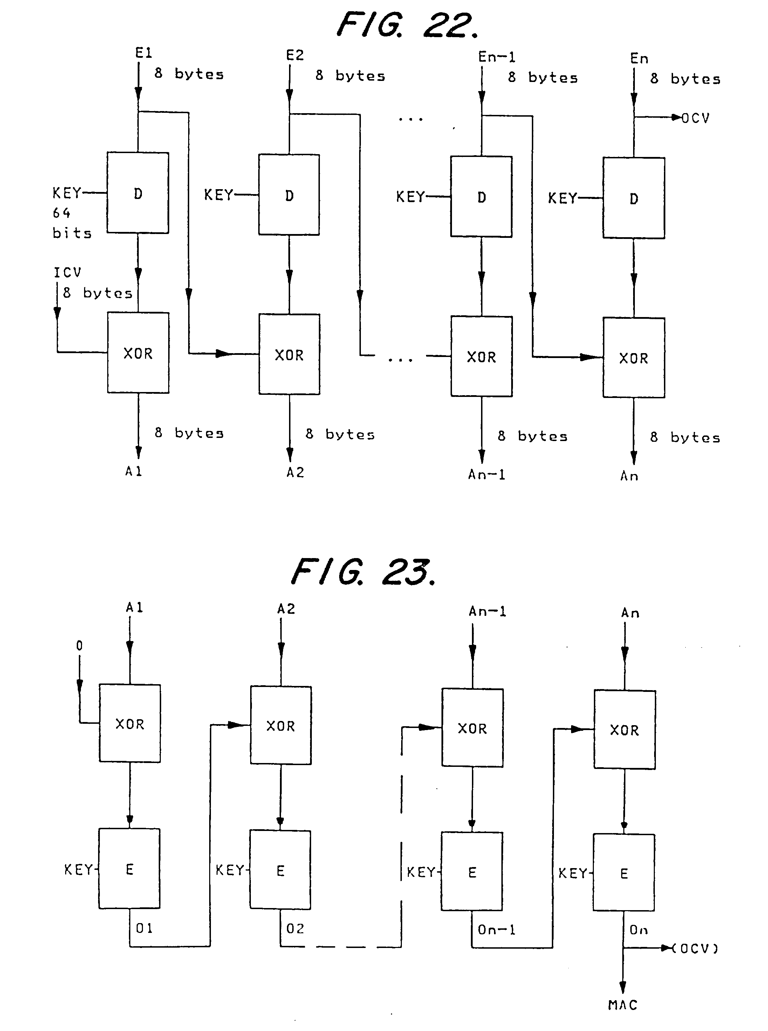

The Enciphering/Deciphering Algorithm is the National Bureau of Standards Data Encryption Standard (DES) or equivalently the American National Standards Institute Data Encryption Algorithm (ANSI DEA) X9.92-1981. Cipher Block Chaining (CBC) is done as specified in ANSI Cryptographic Modes of Operation X9.106-1983. Figs. 21 and 22 show the CBC mode of operation of Encipher and Decipher operations respectively.

### Message Authentication (MAC)

The Financial Institution Message Authentication Standard (Wholesale ANSI X9.9) as referenced in Reference (6), defines a process for authentication of messages from originator to recipient. This process is independent of communication media an and payment systems.

The authentication process includes the computation, transmission, and verification of a Message Authentication code (MAC). The MAS=C is based on either of the complete message text or a selected message elements of the text. The MAC is added to the message by the originator and is transmitted to the recipient. The message or message elements are accepted as authentic by the recipient if the same algorithm and secret key produce a MAC identical to the received MAC. The security of the authentication process is directly dependent on the security afforded to the secret key.

The MAC is generated as shown in Fig. 23. The authentication algorithm as described in this standard may be implemented using either the 64 bit CBC or CFB modes of operation as described in ANSI X3.106-1983. Both modes shall be initialized so as to produce equivalent MAC's. KEY is a 64 bit key, and A1 through An are 64 bit data blocks. Initial chaining value is '0' in this standard and CBC mode of operation should be implemented as shown in Fig. 23. If An is less than 64 bits, then '0's are appended (padded) to the right of the remaining bits. The left most 32 bits of (on) are taken as the MAC.

NOTE: The capability should exist to generate and to process 48 to 64 bit MAC's. For these cases, the left most 48 bits or the entire final output (On) are taken as the MAC.

The algorithm describes the MAC generation for binary data. Message authentication for "Coded Character Sets" should be implemented as described in the ANSI X9.9-1986, the MAC algorithm is invoked after the characters are represented in binary data.

### MDC Algorithms

Two MDC algorithms can be used:
- 1. MDC_2 - Two encipherments per 8 byte input data block
- 2. MDC_4 - Four encipherments per 8 byte input data block

Two different algorithms allow the invoker to trade a 50% performance improvement for a slight decrease in security depending on his applications.
- MDC_2 (text)
   -- 1. Pad the input text with X'FF' to a multiple of 8 bytes.
   -- 2. Partition the input text into [n] 8 byte blocks T8[1] to T8[n].
   -- 3. If n=1 then set n=2 and T8[2] = 8 bytes of x'00'.
   -- 4. Set initial values of KD1 and KD2 (see below).
   -- 5. For [i] = 1,2,...,n:
      --- a. MDCOP(KD1,KD2,T8[i],T8[i]
      --- b. KD1 :=OUT1
      --- c. KD2 :=OUT2
      --- d. end of FOR loop
   -- 6. Output of MDC_2 is the 16 byte MDC :=(KD1 // KD2).
- MDC_4 (text)
   - 1. Pad the input text with X'FF' to a multiple of 8 bytes.
   - 2. Partition the input text into [n] 8 byte blocks T8[1] to T8[n]
   - 3. If n=1 then set n=2 and T8[2] = 8 bytes of x'00'
   - 4. Set initial values of KD1 and KD2 (see below)
   - 5. For [i] = 1,2,...,n:
      --- a. MDCOP(KD1,KD2,T8[i],T8[i])
      --- b. KD1int :=OUT1
      --- c. KD2int :=OUT2
      --- d. MDCOP(KD1int,KD2int,KD2,KD1)
      --- e. KD1 :=OUT1
      --- f. KD2 :=OUT2
      --- g. end of FOR loop
   - 6. Output of MDC_4 is the 16 byte MDC :=(KD1 // KD2)

The initial values of KD1 and KD2 are as follows:
- 1. KD1 :=X'5252525252525252'
- 2. KD2 :=X'2525252525252525'

### Notarisation Algorithms

### Using KK

Let KK be the key which is to be used to compute the notarisation key. Then:
- KKR = KK + FM1 (+ is exclusive or operation, and FM1 is first 8 bytes of from ID)
- KKL = KK + T01 (T01 is the first 8 bytes of to ID)
- NS1 = eKKR(T02) (T02 is the second 8 bytes of to ID)
- NSr = eKKL(FM2) (FM2 is the second 8 bytes of from ID)
- NS = (left most 32 bits of NS1) //
   right most 32 bits of NSr) + CT
   (CT is a 64 bit counter associated with KK)
- KN = KK + NS

KN is a notarised key used to encrypt either KD or KK.

### Using *KK

Let *KK be the key which is to be used to compute the notarisation key. Then:
- **KK = KK1 // KKr
- KKR = KKr + FM1 (+ is exclusive or operation, and FM1 is first 8 bytes of from ID)
- KKL = KK1+ T01 (T01 is the first 8 bytes of to ID)
- NS1 - eKKR(T02)+ CT (T02 is the second 8 bytes of to ID and CT is a 64 counter associated with *KK)
- NSr = eKKL(FM2)+CT (FM2 is the second 8 bytes of from ID)
- *KN = (KK1 + NS1) // (KKr + NSr)

*KN is a notarised key used to encrypt either a KD or (*)KK.

### Standards and Definitions

### Standards

ANSI X2.92 - 1981 "Data Encryption Algorithm".

ANSI X9.106 -1983 "Modes of DEA Operation".

ANSI X9.2 - 198X "Interchange Message Specification for Debit and Credit Card Message Exchange Among Financial Institutions". This standard specifies a common interface by which bank card originated messages relating to a financial transaction may be interchanged between private systems. It specifies message structure, format and content, data elements and values for data elements.

ANSI X9.8 - 1982 "American National Standard for Personal Identification Number (PIN) Management and security". This standard establishes standards and guidelines for the management and security of the Personal Identification Number's (PIN's) life cycle.

ANSI X9.9 - 1986 "American National Standard for Financial Institution Message Authentication (Wholesale)". This standard established a method to authenticate financial pessages (wholesale), including fund transfers (e.g. wire transfers), letters of credit, security transfers, loan agreements and foreign exchange contracts.

NISI X9.17 - 1985 "Financial Institution Key Management (Wholesale)". This standard establishes methods (including the protocol) for the generation, exchange and use of cryptographic keys of authentication and encryption.

ANSI X9.19 - 198X "Financial Institution Retail Message Authentication". This standard establishes a method to authenticate financial messages for retail transactions.

ANSI X9.23 - 198X "Encryption of Wholesale Financial Messages". This standard established a method to encrypt wholesale financial messages in order to provide confidentiality (e.g., wire transfers, letters of credit, etc.)

ISO DIS 8583 "Bank Card Originated Messages - Interchange Message Specifications - Content for Financial Transactions". This international standard specifies a common interface by which bank card originated messages relating to a financial transaction may be interchanged between private systems. It specifies message structure, format and content, data elements and values .

ISO DIS 8720 "Message Authentication"

ISO DP 8730 "Banking - Requirements for Standard Message Authentication (wholesale)". This international standard specifies a technique for protecting the authenticity of messages passing between financial institutions by means of a Message Authentication Code (MAC).

ISO DP 8731 "Banking - Approved Algorithms for Message Authentication - Part 1 : DES-1 Algorithm". This part of ISO 8731 deals with the Data Encryption Algorithm (DEA-1) as a method for use in the calculation of the Message Authentication Code (MAC). Part-2 Other non DEA Algorithms

ISO DP 8732 "Banking - Key Management Wholesale" This international standard specifies methods for the mangement of keying material used for the encryption and authentication of messages exchanged in the course of wholesale financial transactions.

ISO DP 9546 "Personal Identification Number Management and Security Part 1 - PIN Protection Principles and Technique" This standard specifies the minimum security measures required for effective PIN management. Standard means of interchanging PIN data are provided.

### Instructions and Macros Summary Chart

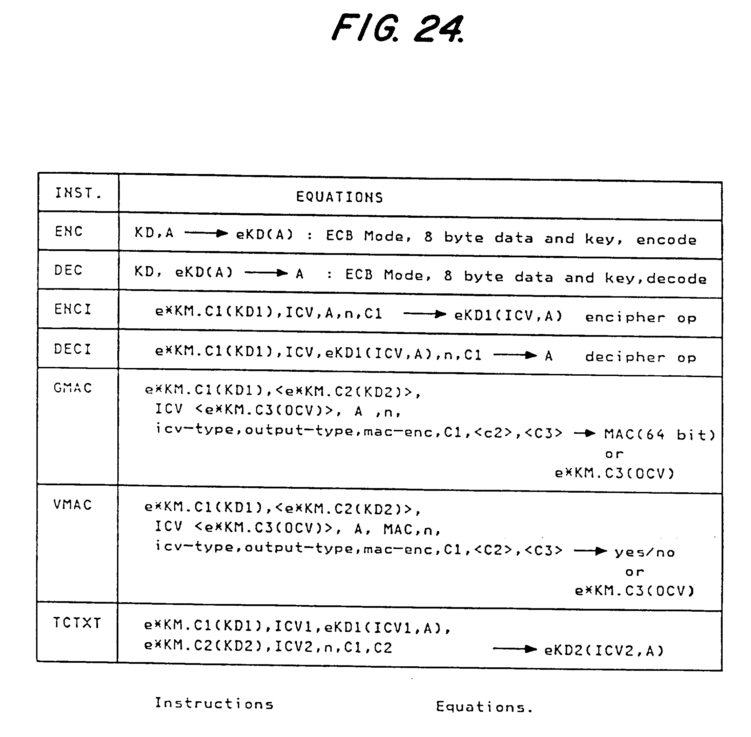

Fig. 24 summarises the equations for each of the data instructions.

### Operation

The operation of the arrangement will become clear from the following description of the execution of several cryptograhic data management functions. These data management functions make use of the encipher, decipher, generate MAC, verify MAC and translate ciphertext instructions. Operationally, these instructions require, besides data, key and control vector parameters, an initial chaining value (ICV). However, since the ICV is of secondary importance in explaining the data management functions, as a convenience ICVs are omitted from the discussion. However, the reader will appreciate that the originator of ciphertext and MACs will also be required to generate, use, and communicate ICVs to other communicants in order that the cryptographic instruction will operate consistently and in conformance to their defined, architected interfaces. See for example C. H. Meyer and S. M. Matyas, "Cryptography: A New Dimension in Computer Data Security," John Wiley & Sons, 1982.

- 1. Data Confidentiality. Data confidentiality protects the contents of a message or file from unauthorised disclosure.

Applications of data confidentiality include the following:
-- a. Session Protection. Data encryption is used to protect the confidentiality or session level data transmission between two communicating devices. Each end user (device or application) shares a common data encrypting/decrypting key, thus permitting each end user to both send and receive encrypted data.

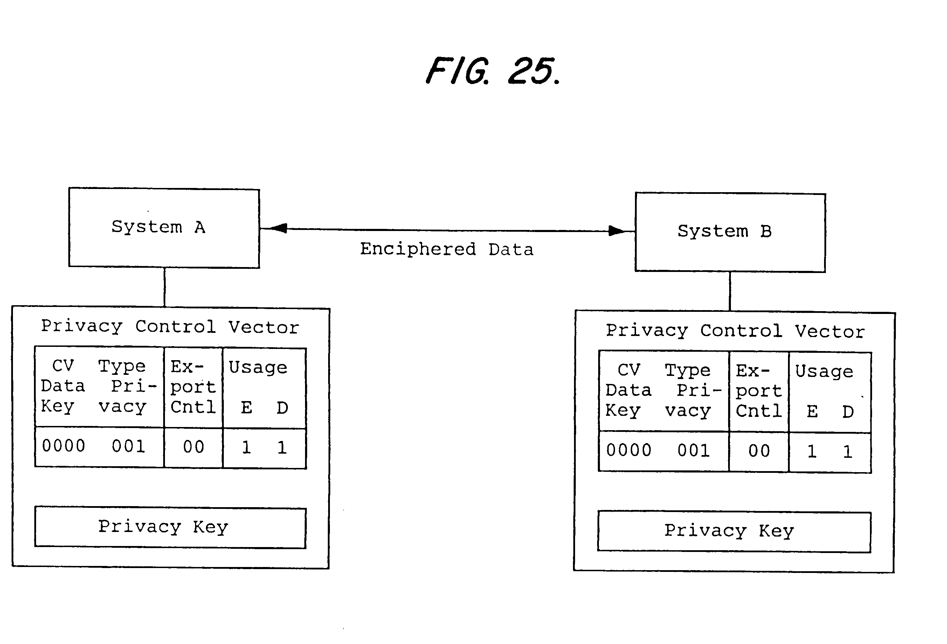

Under the disclosed arrangement, as shown in Fig. 25, session protection is provided by a data/privacy key shared between two end users. Each key is stored in operational form, i.e., encrypted under the master key of each respective device. The control vector usage attributes of each key are encipher (E) and decipher (D), respectively, which enables each key to be used to both encipher with an encipher instruction and decipher data with a decipher instruction.
-- b. File Protection. Data encryption to protect the confidentiality of data files. A single end user (device or application) possesses a data encrypting/decrypting key KD permitting data to be encrypted for storage and to be decrypted, at a later time, for purposes of recovery or access to the file.

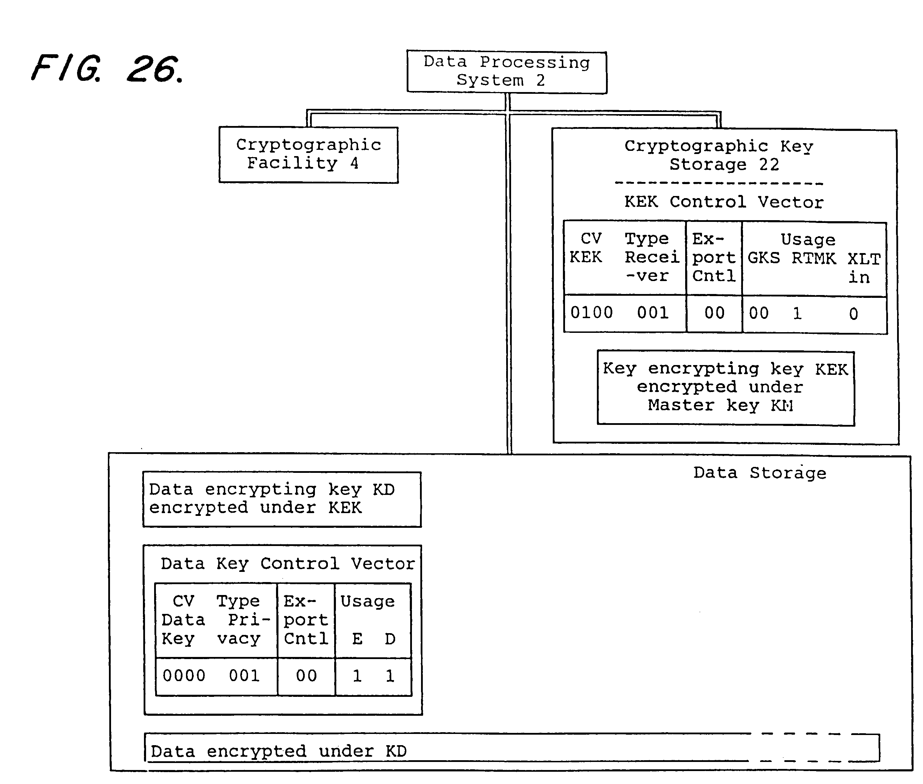

Under the disclosed arrangement, as shown in Fig. 26, file protection is provided by a data/privacy key KD belonging to or possessed by a single end user. The key is stored in import form, i.e., encrypted under a key encrypting key with KEK/receiver attribute. The encrypted data/privacy key is stored in a data storage with the encrypted data, e.g., in a file header record. Because the key KD is encrypted under KEK in the import form, a re-encipher to master key (RTMK) instruction is authorised by the control vector for KEK to enable it to re-encipher the data/privacy key KD under the master key KM. Once in the operational form, the key KD can be used to encipher and decipher data. Storing the key KD in data storage encrypted under KEK in the import form means that the master key KM can be changed without causing the data/privacy key KD to be invalid or unusable for file recovery. The control vector usage attributes of the data/privacy key KD are encipher (E) and decipher (D). This permits a data file to be both encrypted using an encipher instruction and decrypted using a decipher instruction with the same key.
-- c. Encrypted Mail Box. The encrypted mail box describes a multi-user environment in which each user has a data/privacy key in two encrypted forms, encrypted under a storage key formed as the exclusive-OR of the master key KM and the control vector of the associated data/privacy key. The first form permits data encryption; the second form permits data decryption. The first form of the key is placed in a central directory or central registry accessible to all users of the system. Each so registered key is recorded under a user identifier belonging to the user who registers the key. Each sending user i can obtain a copy from the central directory. He then stores the encryption key under his master key KMi. The second form of the key is kept private by the receiving user j to which it belongs, under j's master key KMj. Thus, a user i who wishes to send encrypted messages to user j, first requests user j's encryption key from the public directory. Data encrypted by user i using an encipher instruction with this key is then sent to user j and placed in user j's mail box. User j can read received mail by decrypting first with his/her private decryption key using a decipher instruction. But since no other user has access to user j's decryption key, the environment is such that users can encrypt mail going to each other user but only the authorised designated receiving user can decrypt and read his/her mail.

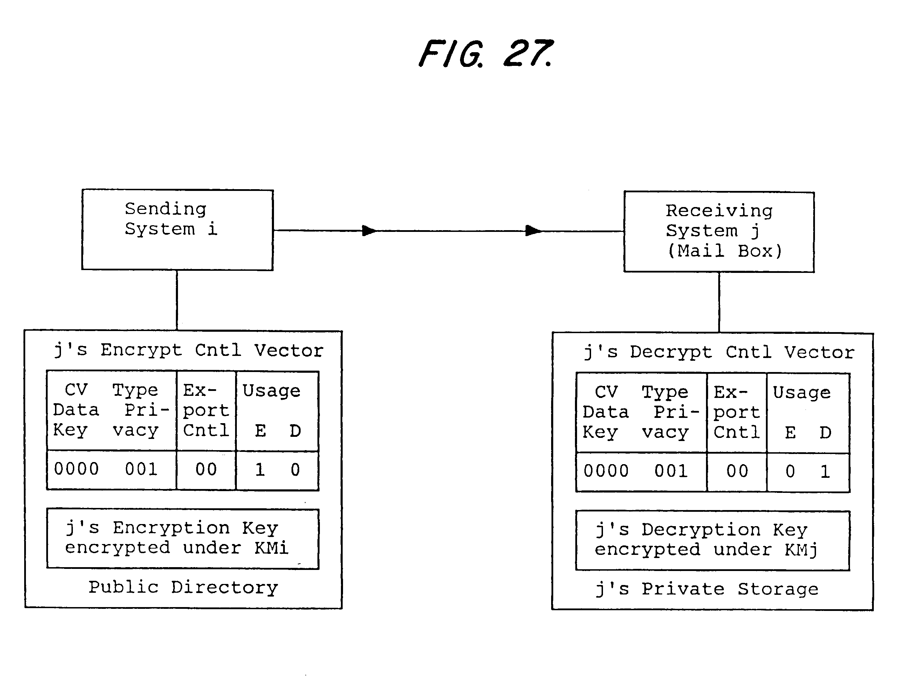

Under the disclosed arrangement, as shown in Fig. 27, an encrypted mail box environment is provided via a data/privacy key which has been generated in two forms. The first form permits encipher (E) only and the second form permits decipher (D) (not necessarily decipher only, since possession of both encipher and decipher attributes by the recipient would suffice). The control vector usage attributes for the first form of the data/privacy key are encipher (E) only and for the second form of the key are decipher (D) only (or both E and D).
-- d. Ciphertext Translation Centre (CTC). The ciphertext translation centre is a network node or device capable of securely translating encrypted data from encryption under a first data key to encryption under a second data key with a translate ciphertext instruction. In effect, the CTC possesses one or more data keys under which encrypted data may be received and one or more data keys under which received encrypted data may be re-encrypted. These data keys thus establish a secure channel permitting the CTC to translate ciphertext from one key to another but not to decrypt ciphertext. The CTC may be further restricted from encrypting data with one or more of these data/privacy keys for the purpose of introducing data into the secure channel.

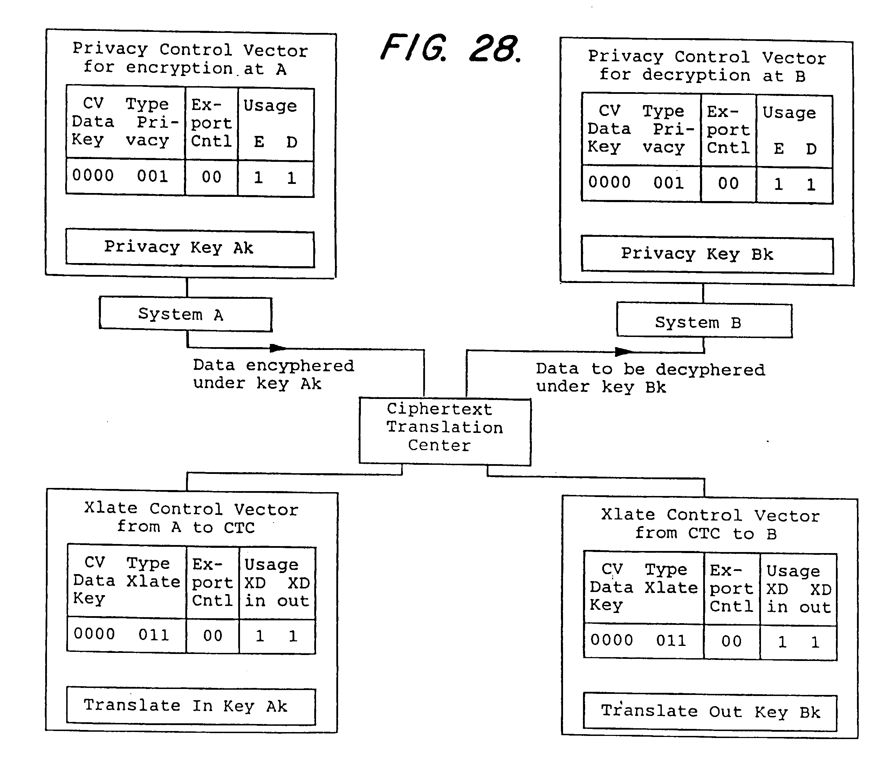

Under the disclosed arrangement, as shown in Fig. 28, a ciphertext translation centre is provided via a data/xlate key used in combination with a data/privacy key. Consider a network of n devices connected to a single ciphertext translation centre (CTC). Each device generates a data key in two encrypted forms. The first form is a data/privacy key stored in operational form, where the storage key is the master key KM exclusive-ORed with the control vector of the data/privacy key. The control vector for this key has encipher (E) and decipher (D) attributes for bi-directional communication. The second form is a data/xlate key in export form, suitable for export to the CTC where the storage key is a key encrypting key KEK which is exclusive-ORed with the control vector of the data/xlate key. At the CTC, the received data/xlate key is imported using the RTMK instruction, which converts the received data/xlate key to an operational form. The control vector for this key has Xlate-in and Xlate-out attributes for bi-directional communication. Thus, data enciphered at device "i" can be translated with a translate ciphertext instruction at the CTC to encipherment under a key known to any one of the other devices. But the CTC cannot decrypt received inbound encrypted data nor encrypt data in a form comparable to the outbound encrypted data, since the control vector associated with the data/xlate key has no usage attributes permitting the encipher or decipher instructions to be executed.

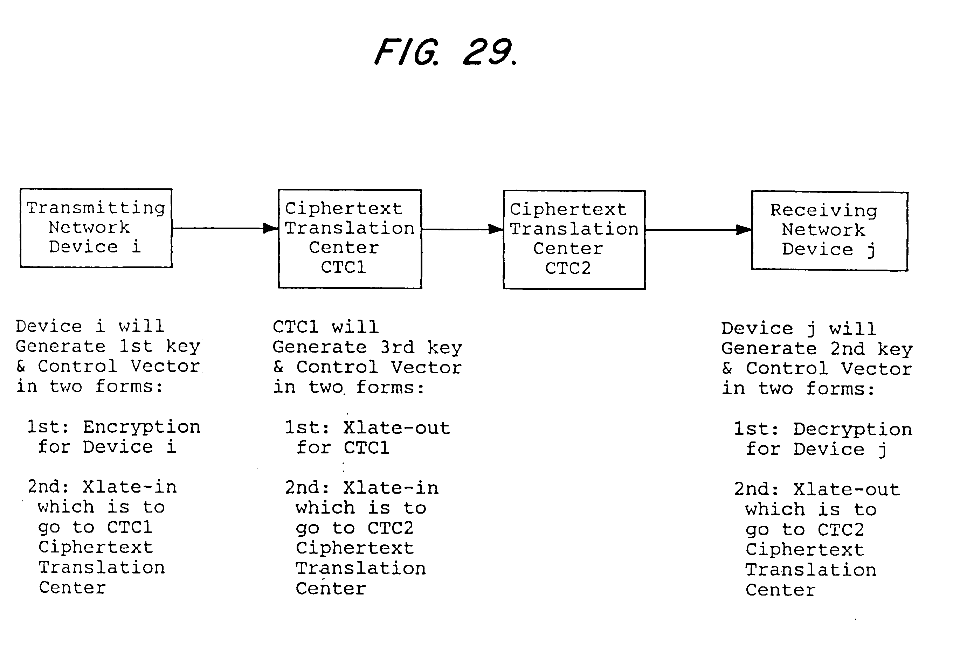

In order to provide only uni-directional ciphertext translation from system A to system B, the respective control vectors establish that the first form of the first data key is a data/privacy key with an encipher only usage attribute; the second form of the first data key is a data/xlate key with an xlate-in usage attribute; the first form of the second data key is a data/privacy key with a decipher only (or encipher and decipher) usage attribute; and the second form of the second data key is a data/xlate key with an xlate-out usage attribute.
-- e. Peer-to-Peer Ciphertext Translation. As is shown in Fig. 29, this environment consists of a chain of two or more CTCs which establish a secure channel from one set of network devices to another set of network devices. Fig. 29 is an example of uni-directional peer-to-peer ciphertext translation. The first CTC in the chain possesses one or more data keys under which encrypted data may be received from the first set of network devices. Each CTC in the chain possesses one or more data keys under which encrypted data may be re-encrypted, but not decrypted. The CTCs may be further restricted from encrypting data with one or more of these keys for the purpose of introducing data into the secure channel. The last CTC in the chain re-encrypts the encrypted data under one or more data keys shared with members of the second set of network devices.

Under the disclosed arrangement, a ciphertext translation centre is provided via a data/xlate key used in combination with either a data/privacy key or another data/xlate key. Consider a node i of a network A of devices connected to a node j of a network B of devices via a chain of k CTCs, labelled in order CTC1, CTC2,...,CTCk. Node i generates a data key in two forms. The first form is a data/privacy key in operational form. The control vector for this key has an E attribute. The second form is a data/xlate key in export form, suitable for export to CTC1, the first CTC in the chain. At CTC1, the received data/xlate key is imported using the RTMK instruction, which converts the received data/xlate key to an operational form. The control vector for this key has an xlate-in attribute.

Node j generates a key in the same two forms: an operational data/privacy key and exportable data/xlate key. The control vector of j's data/privacy key has a decipher attribute. The data/xlate key is shipped to CTCk, the last CTC in the chain. At CTCk, the received data/xlate key is imported to operational form via RTMK. The control vector for this key has an xlate-out attribute.

Each CTC in the chain (except CTCk) generates a data/xlate key in two forms: operational and exportable. The operational data/xlate key has a control vector with an xlate-out attribute. The exportable form is shipped to the next CTC in the chain, i.e. CTCx ships to CTC(x+1) for x equals 1 to (k-1). The receiving CTC imports the received data/xlate key and converts it to operational form via the RTMK instruction. The control vector for the data/xlate key has an xlate-in attribute.

Alternatively, a third party node can generate and ship a data/xlate key and its associated control vector in two forms for nodes x and x+1, an xlate-out for node x and an xlate-in for node x+1.

Thus, data enciphered at node i of network A with the encipher instruction, can be translated and re-translated along the chain of CTCs from CTC1 to CTCk with a translate ciphertext instruction and finally to node j of network B. But none of the CTCs in the chain can decrypt received inbound data nor encrypt arbitrary data in a form comparable to the outbound encrypted data. Thus, the chain of CTCs and the above-defined keys form a secure channel permitting the CTCs, as a group to translate data enciphered under one key held by node i to encipherment under another key held by node j. Although Fig. 29 shows a uni-directional peer-to-peer communication, the control vectors can be modified to allow bi-directional communication.
-- f. Translate Part of an Encrypted File. This is an application wherein part of an encrypted file can be translated to a key which can be conveniently shared with an intended receiver. The method avoids sharing the original data/privacy key used to encrypt the file, since doing so may jeopardize the confidentiality of data not intended to be shared.

In order for a user or application program to beneficially use this feature, it is necessary for the user to generate a data key in two encrypted forms. The first form of the data key is a data privacy key stored in operational form, i.e., encrypted under a storage key formed as the exclusive-OR operation of the master key and a first control vector associated with the first form of the data key. The second form of the data key is a data xlate key stored in import form., i.e., encrypted under a storage key formed as the exclusive-OR operation of a key encrypting key KEK1 and a second control vector associated with the second form of the data key, where the control vector of KEK1 defines KEK1 as an import key encrypting key.

NOTE: defining KEK1 as an import key encrypting key permits the so encrypted data xlate key encrypted under KEK1 to be re-enciphered, at any later time, from encipherment under KEK1 to encipherment under the master key via a re-encipher to master key (RTMK) instruction.

The control vector for the first form of the data key is a data/privacy control vector with usage attribute encipher (E), thus allowing data to be enciphered under the data key via an encipher instruction. The control vector for the second form of the dat key is a data/xlate control vector with usage attribute xlate in (Xin), thus allowing data enciphered under the data key to be translated from encipherment under the data key to encipherment under some other data key via a translate ciphertext instruction.

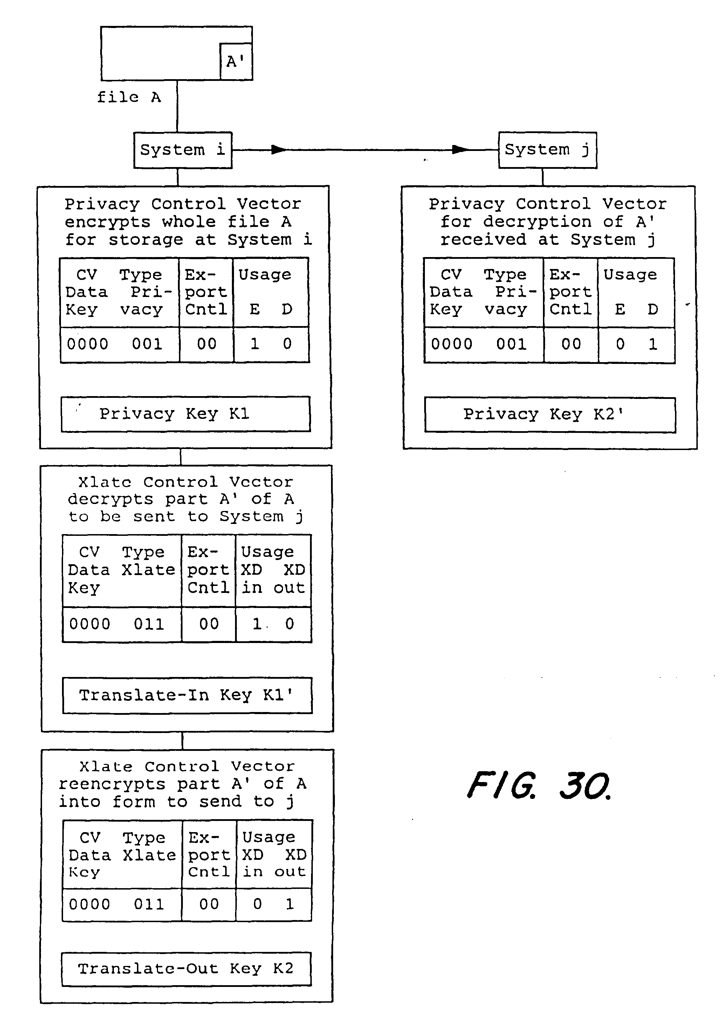

In practice, as shown in Fig. 30, the data file is first encrypted with the data key K1 via an encipher instruction using the first form of the data key, i.e., the operational form of the key whose control vector is a data/privacy control vector with usage attribute encipher (E). The second form of the data key stored in import form is written in a header record of the encrypted data file. Thus, at any later time when it is desired to translate part of the encrypted data file from encryption under the present data key (called the first data key) to encryption under a second data key, the following procedure is followed. The second form of the first data key stored in import form and written in the header record of the encrypted data file is assessed and is re-enciphered from encryption under KEK1 to encryption under the master key by using an RTMK instruction. This converts the second form of the data key (i.e., the data/xlate with xin usage attribute) to an operational key which is now suitable for use in translate ciphertext instruction.

A second data key K2 is now generated in two encrypted forms. The first encrypted form of the key is a data/xlate key stored in operational form, i.e., encrypted under a storage key formed as the exclusive-OR operation of the master key and the control vector associated with the data/xlate key. The second encrypted form of the key is a data/privacy key stored in export form, i.e., encrypted under a key encrypting key KEK2 shared with the intended receiver. (It is assumed that the intended receiver can import the so-generated data/privacy key via a re-encipher to master key (RTMK) instruction, thus causing the data/privacy key to be stored encrypted under a storage key formed as the exclusive-OR operation of the master key of the supporting device and the control-vector associated with the data/privacy key.) The control vector usage attributes for the first form of the second data key (i.e., for the data/xlate key) are xlate out (Xout) and for the second form of the second data key (i.e., for the data/privacy key) are decipher (D) only (or decipher and encipher). Now a portion of the encrypted data file is re-enciphered from encryption under the first data key to encryption under the second data key via a translate ciphertext instruction, using second encrypted form of the first data key which has been re-enciphered from import form to operational form (whose control vector designates the key as a data/xlate key with Xin usage attribute) and the first encrypted form of the second data key already in operational form (whose control vector designates the key as a data/xlate key with Xout usage attribute). The so-translated ciphertext is then sent from system i to the intended receiver system j, whereupon the encrypted data is decrypted via a decipher instruction, using the second form of the second data key (whose control vector designates the key as a data/privacy key with a D usage attribute).

As shown by the example, Part A′ of the encrypted file A can be given to another user j without requiring the data to be decrypted in clear form at the device of the first user i and without requiring the first user i to share the data key K1 under which the entire file A is encrypted.
- 2. Data Integrity. Data integrity protects the contents of a message or file from unauthorized modification. This includes changes, additions, and deletions to the data. Cryptography provides only methods for detecting unauthorised changes to data. It cannot prevent unauthorised changes to data.
   -- Message Integrity. Each end user (device or application program) in a multi-user environment shares a common data MAC generation/verification key, thus permitting each end user to generate MACs (message authentication codes) on messages transmitted to any other end user and permitting each end user to verify MACs on messages received from other end users.

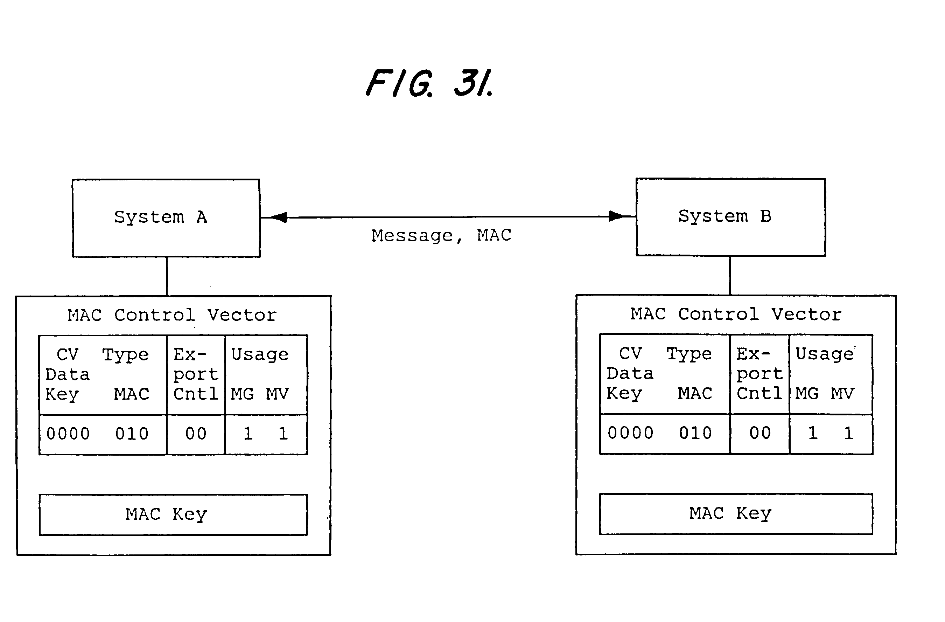

Under the disclosed arrangement, as shown in Fig. 31, message integrity is provided by a data/MAC key shared between two end users. Each key is stored in operational form, i.e., encrypted under a storage key formed as the exclusive-OR operation of the master key of the device serving each respective end user and the control vector associated with the data/MAC key. The control vector usage attributes of each key are MAC generation (MG) and MAC verification (MV), respectively, which permits each user's key to be used for both MAC generation and MAC verification. Thus, the integrity of messages communicated between the respective end users can be assured. Thus, for example, the first end user generates a MAC on a message to be sent to the second end user via a generate MAC instruction, using his copy of the data/MAC key. The message and MAC are then communicated to the second end user. The second end user verifies the MAC via a verify MAC instruction, using his copy of the data/MAC key. Since the control vectors for each copy of the key have usage attributes MG and MV, each user can generate and verify MACs with the key, and messages and MACs can be communicated from the first user to the second user or the second user to the first user.
- Message Integrity with Non-Repudiation. Each end user (device or application program) in a multi-user environment has a data/MAC key in two encrypted forms, i.e., encrypted under a storage key formed as the exclusive-OR operation of the respective device master key and the respective control vector associated with the data/MAC key. The first form permits MAC verification; the second form permits MAC generation. The first form of the key is placed in a public directory or central registry accessible to all users of the system. Each so registered key is recorded under a user identifier belonging to the user who registers the key. The second form of the key is kept private by the user to which it belongs. Thus, a user j who wishes to send a message and MAC to user i, generates a MAC on the desired message via a GENMAC instruction using the private MAC generation key belonging to user j. The message and MAC are then communicated to user i. To verify the received message and MAC, user i first requests user j's MAC verification key from the public directory. (Note: if the public directory is located at a device different from the device supporting user i, then it is necessary to export and import the desired key using an RFMK and an RTMK instruction. This causes the MAC verification key to be re-enciphered under a key encrypting key shared between the two devices, via an RFMK instruction, for purposes of exporting the key and then to be re-enciphered under the master key at the device supporting user i via an RTMK instruction.) User i then verifies the received message and MAC via a verify MAC instruction using j's MAC verification key. But since no other user has access to user j's MAC generation key, the environment is such that users can verify MACs and messages received from any other user (say user v) but cannot generate MACs on messages using any other user's MAC generation key. Thus one user cannot pose as another user and generate MACs with another user's MAC generation key. Conversely, a user (say user j) cannot deny or repudiate a valid massage and MAC as having originated with that user if the message and MAC is successfully verified with that user's MAC verification key via the verify MAC instruction. This is called non-repudiation.

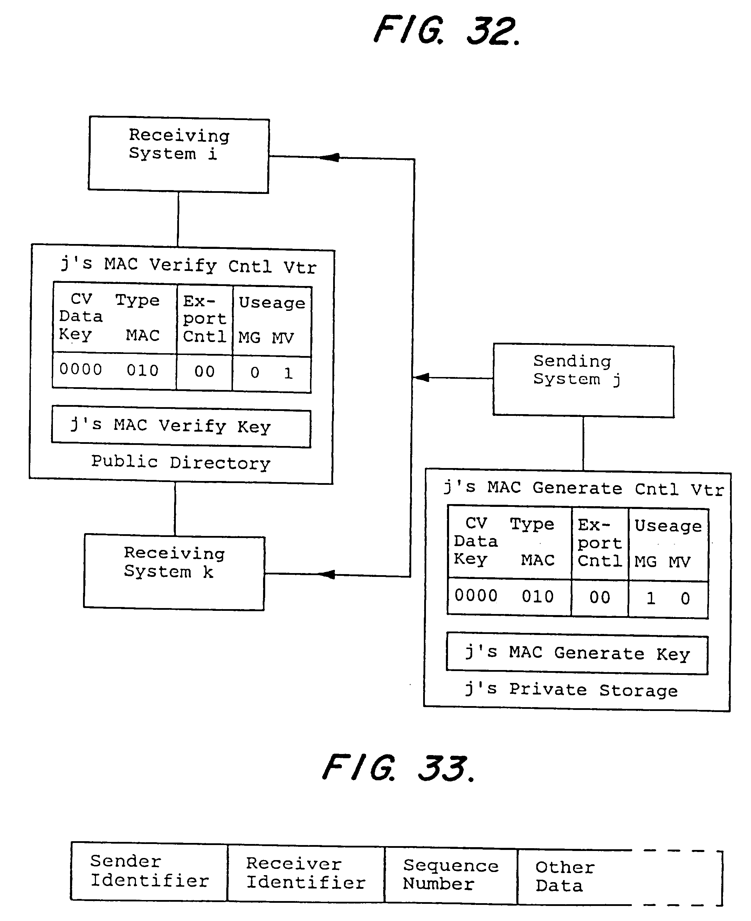

Under the disclosed arrangement, as shown in Fig. 32, message integrity with non-repudiation is provided via a data/MAC key which has been generated in two encrypted forms. The first form permits MAC verification only and the second form permits MAC generation (not necessarily MAC generation only, since possession of both MAC generation and MAC verification would suffice). The control vector usage attributes for the first form of the data/MAC key are MAC verification (MV) only and for the second form of the key are MAC generation (MG) only (or both MG and MV).
- 3. Message Authentication. Message authentication is a procedure established between two communicants which allows each communicant to verify that received messages are genuine. Communicants can be people, devices, or processing functions. Message authentication allows the receiver of a message to determine that:
   -- The message originated with the alleged sender.
   -- The contents of the message have not been accidentally or intentionally changed.
   -- The message has been received in the same sequence that it was transmitted.
   -- The message was delivered to the intended receiver.

As can be seen, message authentication encompasses a requirement for message integrity, but is a broader concept. Message authentication, as defined here, permits the receiver to additionally validate a message's origin, timeliness or sequence, and intended destination. To accomplish these additional features, a sender identifier field, a receiver identifier field, and a sequence number field are included in each message, as shown in Fig. 33. Thus, upon receipt of a message and MAC, the contents of the message are first authenticated via the MAC using a verify MAC instruction and a MAC verification key shared between the two users (i.e., which has been previously established via the key management processes). Once the contents of the message have been authenticated, a simple check is performed to verify that the sender identifier is equal to the identifier of the MAC verification key belonging to the anticipated or intended sender of the message, that the value in the sequence number field is one greater than the sequence number in the previously received message from that same sender, and that the receiver identifier is equal to the identifier of the actual receiver. If all checking is passed successfully, the received message is accepted as valid; otherwise the message is rejected. Message authentication and message authentication with non-repudiation are achieved in the same way the data integrity and data integrity with non-repudiation are achieved (see the applications described under items 2a and 2b, respectively), except that additional fields are defined and checked in the message as just outlined.

In an alternative embodiment of the invention, clear keys can be stored in the crypto facility for immediate availability in cryptographic operations. Those clear keys can be stored for example in the working storage 24 in Fig. 1 of the crypto facility 4 or alternately they can be stored in the working key registers of the crypto facility as in shown in Fig. 2.

In a first method, each key and its associated control vector are stored as a paired expression in the RAM within the crypto facility. Each such key and control vector are initialised within the crypto facility, in advance of their intended use, via a special authorised procedure available only to authorised system personnel (e.g., a security officer). A procedure similar to initialising a master key (e.g., via a hand-held key entry device attached to a front panel interface, which is enabled via a physical key-activated key switch) could easily be adapted for initialising keys and control vectors within the crypto facility. Methods for initialising parameters within the crypto facility are well-known in the art. During routine operations, in order to access a particular key, the associated control vector is first accessed and the control vector checking operation is carried out as has been previously described, in order to ensure that the proposed key usage is authorised. If the authorisation is affirmative, then the corresponding key is accessed from the RAM and is used for the intended operations within the crypto facility.

In a second method, the exclusive-OR product of the key and its associated control vector are stored in the RAM inside the crypto facility, i.e., instead of store the key and control vector paired expression (as with the first method) the key and control vector are exclusive-ORed and the product of the exclusive-OR operation is stored in the RAM inside the crypto facility. A procedure for initialising the crypto facility could be based on performing the exclusive-OR operation of the key and control vector outside the crypto facility and then entering their product as a parameter using a procedure similar to that for entering the key and control vector, as described for the first method. Alternatively, the key and control vector could be exclusive-ORed within the crypto facility and the product then stored as before. Later on, the steps to access a key can be traced as follows. An instruction which designates the use of a particular key must also provide the control vector associated with that key as a parameter of the instruction. The control vector is first checked, as before, using the control vector checking operation, in order to ensure that the proposed key usage is authorised. If the authorisation is affirmative, the exclusive-OR product of the key and control vector stored in the crypto facility is accessed and exclusive-ORed with the control vector supplied as a parameter to the instruction to recover the clear key which is then used in the intended crytographic operations. It can be seen that if cheating is attempted, i.e., a false control vector is specified in an instruction, then the clear value of the recovered key is not correct (i.e., is not the correct key value). The crypto instructions are designed such that no useful outputs are obtained when an incorrect key value is produced as a result of such control vector cheating.

## Claims

1. A method for validating that data cryptography functions requested for a cryptographic key have been authorised by the originator of the key in a data processing system which processes cryptographic service requests for the performance of data cryptography functions on data using cryptographic keys which are associated with control vectors defining the functions which each key is allowed by its originator to perform, comprising the steps of:
receiving a cryptographic service request for performing a data cryptography function on data using a cryptographic key in a cryptographic facility (4) having a secure boundary (6) through which passes an input path and an output path (8);
receiving a control vector (fig. 5) associated with the cryptographic key and checking (14) that the control vector authorises the data cryptography function which is requested by the cryptographic service request; and
signalling (20) that the data cryptography function is authorised and initiating the performance of the requested data cryptography function with the cryptographic key.

2. A method as claimed in claim 1, which further comprises storing in a storage means (22) the cryptographic key in an encrypted form in which the cryptographic key is encrypted under a storage key which is a logical product of the associated control vector and a master key (18).

3. A method as claimed in claim 2, wherein the storage key is the exclusive-OR product of the associated control vector and the master key stored in the master key storage.

4. A method as claimed in any preceding claim, wherein the associated control vector is stored with the encrypted form of the cryptographic key in the cryptographic key storage means.

5. A method as claimed in any preceding claim , wherein the associated control vector includes fields defining authorised types of cryptographic functions including key management functions, data cryptography functions and PIN processing functions, and the data cryptography functions type is designated.

6. A method as claimed in any preceding claim, wherein the associated control vector includes fields defining export control and usage.

7. A method as claimed in claim 6, wherein the associated control vector further includes a usage field designating one of the following -
- that the cryptographic key can perform encryption of the data;
- that the cryptographic key cannot perform encryption of the data;
- that the cryptographic key can perform decryption of the data;
- that the cryptographic key cannot perform decryption of the data;
- that the cryptographic key can perform data cryptography functions;
- that the cryptographic key can perform message authentication functions;
- that the cryptographic key can be used to generate a message authentication code on the data;
- that the cryptographic key cannot be used to generate a message authentication code on the data;
- that the cryptographic key can be used to verify a message authentication code on the data;
- that the cryptographic key cannot be used to verify a message authentication code on the data;
- that the cryptographic key cannot be used as the output data key in a translate ciphertext function;
- that the cryptographic key can be used as the input data key in a translate ciphertext function
- that the cryptographic key cannot be used as the input data key in a translate ciphertext function.
- that the cryptographic key can perform data cryptography functions and further includes a subtype field designating that the cryptographic key is an ANSI data key.

8. A method as claimed in claim 6, wherein the associated control vector includes a type field designating that the cryptographic key can perform data cryptography functions and further includes an export control field which designates whether the local data processing system is allowed to export the cryptographic key and further designates whether a remote data processing system to which the local data processing system is connected, is allowed to re-export the cryptographic key.

9. A method as claimed in claim 6, wherein the associated control vector includes a type field designating that the cryptographic key can perform data cryptography functions and further includes a subtype field designating that the cryptographic key can perform data privacy functions.

10. A method as claimed in claim 9, wherein the associated control vector includes a type field designating that the cryptographic key can perform data cryptography functions and further includes a subtype field designating that a translate ciphertext function can be performed by the cryptographic key.

11. A method as claimed in claim 10, wherein the associated control vector further includes a usage field designating that the cryptographic key can be used as the output data key in a translate ciphertext function.

12. A method as claimed in claim 9, wherein the data cryptography function is session protection to protect the confidentiality of data transmissions between two communicating devices in the system which share a common data encrypting/decrypting key, permitting each device to both send and receive encrypted data, comprising the steps of:
sharing a data privacy key between the devices;
storing the data privacy key in operational form encrypted under a master key at each respective device;
providing usage attributes for the control vector of each data privacy key for enciphering and deciphering, respectively, which enables each key to be used to both encipher and decipher data.

13. A method as claimed in claim 12, wherein the data cryptography function is file protection to protect the confidentiality of data files, wherein a single end user possesses a data encrypting/decrypting key permitting data to be encrypted for storage and to be decrypted for purposes of recovery of the file, further comprising the steps of:
providing a data privacy key to the single end user;
storing an encrypted form of the data privacy key with data which has been encrypted thereby;
the data privacy key being stored in import form encrypted under a key encrypting key, with its associated control vector;
providing usage attributes for the control vector of the data privacy key for enciphering and deciphering, thereby permitting the data file to be both encrypted and decrypted with the same key.

14. A method as claimed in claim 12, wherein the data cryptography function is an encrypted mail box in which each user of a plurality of users of the system has a data privacy key in two forms, the first form permitting data encryption and a second form permitting data decryption, the first form of the key being placed in the public directory accessible to all users of the mail box so that each registered key is recorded under one user identifier belonging to the user who registers the key, the second form of the key being private to the user to which it belongs, so that mail deposited in the mail box directed to a particular user in its encrypted form, can be decrypted only by that user - the intended recipient - comprising the steps of:
providing a data privacy key which has been generated in two forms, the first form permitting enciphering only and the second form permitting deciphering;
providing control vector usage attributes for the control vector associated with the data privacy key, which has for the first form of the data privacy key encipher only features and which has for the second form of the data privacy key decipher features.

15. A method as claimed in claim 12, wherein the data cryptography function is a ciphertext translation function to be performed at a ciphertext translation centre in a network in the system capable of securely translating encrypted data from encryption under a first data key to encryption under a second data key, comprising the steps of:
generating a data key in two forms at a plurality of devices in the communications network, the first form being a data privacy key in operational form having an associated control vector which has encipher and decipher attributes, and a second form of the data key being a data translate key in the export form, suitable for export to a ciphertext translation centre in the network;
receiving the data translate key at the ciphertext translation centre and converting the received data translation key to an operational form, the control vector associated with the data translation key having both translate-in and translate-out attributes;
enciphering data at some first device which is transmitted to the ciphertext translation centre where it is translated to encipherment under the second data key known to some second device in the network connected to the ciphertext translation centre;
transmitting the translated data from the centre to the second device where it is deciphered under the second data key.

16. A method as claimed in claim 15, wherein the ciphertext translation center cannot decrypt received inbound encrypted data nor can it encrypt data in a form comparable to outbound encrypted data.

17. A method as claimed in claim 12, wherein the data cryptography function is a peer-to-peer ciphertext translation for a communications network chain in the system which includes a first device which originates a communication, connected to a first ciphertext translation centre which in turn is connected to a second ciphertext translation centre which in turn is connected to a second network device, for a transmission of encrypted data from the first device through the first and second ciphertext translation centres to the second device, comprising the steps of:
generating a first data key in the first network device in two forms, the first form being a data privacy key in operational form having an associated control vector which has encipher attributes, and a second form of the first data key being a data translate-in key in the export form, suitable for export to the first ciphertext translation centre;
generating a second data key in the second network device in two forms, the first form being a data privacy key in operational form having an associated control vector which has decipher attributes, and a second form of the second data key being a data translate-out key in export form, suitable for export to the second ciphertext translation centre;
generating a third data key in the first ciphertext translation centre in two forms, the first form being a data translate-out key and the second form being a data translate-in key, suitable for export to the second ciphertext translation centre;
the first network device transmitting the first data key in its second form as a translate-in key to the first ciphertext translation centre;
the second network device transmitting the second data key in its second form as a translate-out key to the second ciphertext translation centre;
the first ciphertext translation centre transmitting the third data key in its second form as a translate-in key to the second ciphertext translation centre;
the first network device encrypting data under the first data key in the first form and transmitting the encrypted data to the first ciphertext translation centre where the data is translated under the first data key in the second form to be encrypted under the third data key in the first form to be translated out and transmitted to the second ciphertext translation centre where the data is translated under the third data key in its second form into a form encrypted under the second data key in the second form where it is translated out and transmitted to the second network device where the data is then decrypted under the second data key in its first form.

18. A method as claimed in claim 12, wherein the data cryptography function is applied to an encrypted file under a first key so that a portion of the file can be re-encrypted under a second key for transmission to an intended receiver, without revealing the entire encrypted file, comprising the steps of:
generating a first data key in two forms at a first device in the system, the first form being a data privacy key stored in operational form and the second form being a data translate-in key;
encrypting a data file using the data privacy key and storing the file in its encrypted form in a data storage device;
the first device generating a second data key in two forms, a translate-out key and a data decryption key;
transmitting the data decryption key to a second device in the system connected to the first device;
accessing the data file from the data storage device and re-enciphering a portion of the file from encipherment under the first data key to encipherment under the second data key via a translate ciphertext instruction using the first data key in the translate-in form and the second data key in the translate-out form and transmitting the re-enciphered portion of the data file from the first device to the second device;
decrypting the transmitted portion of the data file by means of the decryption key form of the second key for use at the second device.

19. A method as claimed in claim 12, wherein the data cryptography function is message integrity, wherein the contents of a message is protected from unauthorised modification, comprising the steps of:
providing a data/MAC key and an associated control vector having MAC generation and MAC verification attributes at both a sending station and a receiving station in a communications network in the system;
computing an MAC value for a message to be sent from the sending station to the receiving station, employing the data/MAC key and the control vector at the sending station;
transmitting the message and the computed MAC value from the sending station to the receiving station;
computing a second value on the received message at the receiving station, employing the data/MAC key and the control vector and comparing the second computed MAC value with the transmitted MAC value;
verifying the integrity of the message received at the receiving station when the two computed MAC values are equal.

20. A method as claimed in claim 12, wherein the data cryptography function is message authentication with non-repudiation, comprising the steps of:
providing a data/MAC key with a first associated control vector having an MAC generation attribute at a sending station in a communications network in the system;
providing the data/MAC key with a second control vector having an MAC verification attribute but not having an MAC generation attribute, at a receiving station in the communications network;
computing a first value for the MAC on a message to be sent by the sending station over the communications network to the receiving station, using the the data/MAC key and the first control vector at the sending station;
transmitting the message and the first MAC value from the sending station over the communications network to the receiving station;
computing a second value for the MAC on the message received at the receiving station, using the data/MAC key and the second control vector, at the receiving station;
verifying that the message has integrity and that it was sent by the sending station, when the first value for the MAC equals the second value for the MAC.

21. A method as claimed in claim 12, wherein the data cryptography function is a peer-to-peer ciphertext translation for a communications network chain in the system which includes a key issuing device in the network, a first device which originates a communication, connected to a first ciphertext translation centre which in turn is connected to a second ciphertext translation centre which in turn is connected to a second network device, for a transmission of encrypted data from the first device through the first and second ciphertext translation centres to the second device, comprising the steps of:
generating a first data key in the first network device in two forms, the first form being a data privacy key in operational form having an associated control vector which has encipher attributes, and a second form of the first data key being a data translate-in key in the export form, suitable for export to the first ciphertext translation centre;
generating a second data key in the second network device in two forms, the first form being a data privacy key in operational form having an associated control vector which has decipher attributes, and a second form of the second data key being a data translate-out key in export form, suitable for export to the second ciphertext translation centre;
generating a third data key in the key issuing device in two forms, the first form being a data translate-out key suitable for export to the first ciphertext translation centre and the second form being a data translate-in key, suitable for export to the second ciphertext translation centre;
the first network device transmitting the first data key in its second form as a translate-in key to the first ciphertext translation centre;
the second network device transmitting the second data key in its second form as a translate-out key to the second ciphertext translation centre;
the first key issuing device transmitting the third data key in its first form as a translate-out key to the first ciphertext translation centre and transmitting the third data key in its second form as a translate-in key to the second ciphertext translation centre;
the first network device encrypting data under the first data key in its first form and transmitting the encrypted data to the first ciphertext translation centre where the data is translated under the first data key in the second form to be encrypted under the third data key in the first form to be translated out and transmitted to the second ciphertext translation centre where the data is translated under the third data key in the second form into a form encrypted under the second data key in the second form where it is translated out and transmitted to the second network device where the data is then decrypted under the second data key in the first form.

22. A data processing system which processes cryptographic service requests for performing data cryptography functions on data using cryptographic keys which are associated with control vectors defining the functions which each key is allowed by its originator to perform, comprising:
a cryptographic facility (4) having a secure boundary (6) through which passes an input path (8) for receiving the cryptographic service requests, data, cryptographic keys and their associated control vectors, and an output path (8) for providing responses thereto, there being included within the boundary (6) a cryptographic instruction storage (10) coupled to the input path, a control vector checking means (14) and a cryptographic processing means (16) coupled to the instruction storage, and a master key storage (18) coupled to the processing means (16), for providing a secure location for executing data cryptography functions in response to the received service requests;
the cryptographic instruction storage (10) receiving over the input path (8) a cryptographic service request for performing a data cryptography function with a cryptographic key;
the control vector checking means (14) having an input coupled to the input path (8) for receiving a control vector (figure 5) associated with the cryptographic key and an input coupled to the cryptographic instruction storage (10), for receiving control signals to initiate checking that the control vector authorises the data cryptography function which is requested by the cryptographic service request;
the control vector checking means (14) having an authorisation output (20) coupled to an input of the cryptographic processing means (16), for signalling that the data cryptography function is authorised, the receipt of which by the cryptographic processing means (16) initiates the performance of the requested data cryptography function with the cryptographic key.

## Patentansprüche

1. Ein Verfahren zur Validierung der Tatsache, daß Datenkryptographiefunktionen, die für eine Kryptographieschlüsselfunktion benötigt werden, vom Betätiger der Schlüsselfunktion in einem Datenverarbeitungssystem autorisiert wurden, das Kryptographieanforderungen zur Durchführung von Datenkryptographiefunktionen unter Verwendung von Kryptographieschlüsselfunktionen verarbeitet, die eine Zuordnung zu Steuervektoren besitzen, die die Funktionen definieren, die der Betätiger für jede Schlüsselfunktion wünscht, bestehend aus folgenden Schritten:
Empfang einer Kryptographieanforderung zur Durchführung einer Datenkryptographiefunktion unter Vewendung einer Kryptographieschlüsselfunktion in einer Kryptographieeinrichtung (4), die eine sichere Begrenzung (6) besitzt, durch die ein Eingabepfad und ein Ausgabepfad (8) läuft;
Empfang eines Steuervektors (Figur 5), der der Kryptographieschlüsselfunktion zugeordnet ist und Sicherstellung (14), daß der Steuervektor die Datenkryptographiefunktion autorisiert, die von der Kryptographieanforderung angefordert wurde; und
Signalisierung (20), daß die Datenkryptographiefunktion autorisiert ist Einleitung der Ausführung der angeforderten Datenkryptographiefunktion mit der Kryptographieschlüsselfunktion.

2. Ein Verfahren gemäß Anspruch 1, das weiterhin die Speicherung der Kryptographieschlüsselfunktion in einer kodierter Form, in der die Kryptographieschlüsselfunktion unter einer Speicherschlüsselfunktion, die ein logisches Produkt des zugeordneten Steuervektors und einer Masterschlüsselfunktion (18) ist, kodiert ist, in einem Speichermittel (22) umfaßt.

3. Ein Verfahren gemäß Anspruch 2, bei dem die Speicherschlüsselfunktion das Exklusiv-ODER-Produkt des zugeordneten Steuervektors und der im Masterschlüsselfunktions-speicher gespeicherten Masterschlüsselfunktion ist.

4. Ein Verfahren gemäß allen vorherigen Ansprüchen, bei dem der zugeordnete Steuervektor mit der kodierten Form der Kryptographieschlüsselfunktion im Kryptographiespeichermittel gespeichert ist.

5. Ein Verfahren gemäß allen vorherigen Ansprüchen, bei dem der zugeordnete Steuervektor Felder, in denen die autorisierten Kryptographiefunktionstypen sowie die Schlüsselmanagementfunktionen, Datenkryptographiefunktionen und PIN-Verarbeitungsfunktionen definiert sind, und eine Angabe des Datenkryptographiefunktionstyps enthält.

6. Ein Verfahren gemäß allen vorherigen Ansprüchen, bei dem der zugeordnete Steuervektor Felder enthält, in denen die Ausgabesteuerung und -verwendung definiert ist.

7. Ein Verfahren gemäß Anspruch 6, bei dem der zugeordnete Steuervektor weiterhin ein Verwendungsfeld umfaßt, in dem eine der folgenden Angaben bezeichnet ist:
- daß die Kryptographieschlüsselfunktion eine Datenkodierung durchführen kann;
- daß die Kryptographieschlüsselfunktion keine Datenkodierung durchführen kann;
- daß die Kryptographieschlüsselfunktion eine Datendekodierung durchführen kann;
- daß die Kryptographieschlüsselfunktion keine Datendekodierung durchführen kann;
- daß die Kryptographieschlüsselfunktion Meldungsauthentizitätsfunktionen durchführen kann;
- daß die Kryptographieschlüsselfunktion verwendet werden kann, um auf den Daten einen Meldungsauthentizitätskode zu erzeugen;
- daß die Kryptographieschlüsselfunktion nicht verwendet werden kann, um auf den Daten einen Meldungsauthentizitätskode zu erzeugen;
- daß die Kryptographieschlüsselfunktion verwendet werden kann, um auf den Daten einen Meldungsauthentizitätskode zu überprüfen;
- daß die Kryptographieschlüsselfunktion nicht verwendet werden kann, um auf den Daten einen Meldungsauthentizitätskode zu überprüfen;
- daß die Kryptographieschlüsselfunktion nicht als Ausgabedatenschlüsselfunktion in einer Verschlüsselungstextauflösungsfunktion verwendet werden kann;
- daß die Kryptographieschlüsselfunktion als Eingabedatenschlüsselfunktion in einer Verschlüsselungstextauflösungsfunktion verwendet werden kann;
- daß die Kryptographieschlüsselfunktion nicht als Eingabedatenschlüsselfunktion in einer Verschlüsselungstextauflösungsfunktion verwendet werden kann;
- daß die Kryptographieschlüsselfunktion Datenkryptographiefunktionen ausführen kann und weiterhin ein Subfeld umfaßt, in dem angegeben ist, daß die Kryptographieschlüsselfunktion eine ANSI-Datenschlüsselfunktion ist.

8. Ein Verfahren gemäß Anspruch 6, bei dem der zugeordnete Steuervektor ein Typenfeld umfaßt, in dem angegeben ist, daß die Kryptographieschlüsselfunktion Datenkryptographiefunktionen ausführen kann und weiterhin ein Ausgabesteuerfeld umfaßt, in dem angegeben ist, ob das lokale Datenverarbeitungssystem die Kryptographieschlüsselfunktion ausgeben darf, und in dem ebenfalls angegeben ist, ob ein entferntes Datenverarbeitungssystem, mit dem das lokale Datenverarbeitungssystem verbunden ist, die Kryptographieschlüsselfunktion zurückleiten darf.

9. Ein Verfahren gemäß Anspruch 6, bei dem der zugeordnete Steuervektor ein Typenfeld umfaßt, in dem angegeben ist, daß die Kryptographieschlüsselfunktion Datenkryptographiefunktionen ausführen kann und weiterhin ein Subfeld umfaßt, in dem angegeben ist, daß die Kryptographieschlüsselfunktion Funktionen an persönlichen Daten ausführen darf.

10. Ein Verfahren gemäß Anspruch 6, bei dem der zugeordnete Steuervektor ein Typenfeld umfaßt, in dem angegeben ist, daß die Kryptographieschlüsselfunktion Datenkryptographiefunktionen ausführen kann und weiterhin ein Subfeld umfaßt, in dem angegeben ist, daß eine Verschlüsselungstextauflösungsfunktion von der Kryptographieschlüsselfunktion ausgeführt werden darf.

11. Ein Verfahren gemäß Anspruch 10, bei dem der zugeordnete Steuervektor weiterhin ein Benutzerfeld umfaßt, in dem angegeben ist, daß die Kryptographieschlüsselfunktion in einer Verschlüsselungstextauflösungsfunktion als Ausgabedatenschlüsselfunktion verwendet werden darf.

12. Ein Verfahren gemäß Anspruch 9, bei dem die Datenkryptographiefunktion ein Sitzungsschutz ist, mit dem die Vertraulichkeit von Datenübertragungen zwischen zwei Kommunikationseinrichtungen im System, die eine gemeinsame Datenkodierungs-/-dekodierungsschlüsselfunktion besitzen, mit der es jeder Einrichtung möglich ist, kodierte Daten zu senden und zu empfangen, gesichert ist, das folgende Schritte umfaßt:
gemeinsame Nutzung einer Datenvertraulichkeitsschlüsselfunktion zwischen den Einrichtungen;
Speicherung der Datenvertraulichkeitsschlüsselfunktion in Ausführungsform, die an jeder der Einrichtungen unter einer Masterschlüsselfunktion kodiert ist;
Bereitstellung von Verwendungsattributen für den steuervektor jeder Datenvertraulichkeitsschlüsselfunktion zur Verschlüsselung bzw. Entschlüsselung, wodurch jede Schlüsselfunktion zur Verschlüsselung und Entschlüsselung verwendet werden kann.

13. Ein Verfahren gemäß Anspruch 12, bei dem die Datenkryptographiefunktion ein Dateischutz ist, um die Vertraulichkeit von Datendateien zu schützen, bei der ein einzelner Endbenutzer eine Datenkodierungs-/-dekodierungsschlüsselfunktion besitzt, mit der Daten zur Speicherung kodiert und zum Zweck der Wiederherstellung der Daten wieder dekodiert werden können, und das folgende Schritte umfaßt:
Bereitstellung einer Datenvertraulichkeitsschlüsselfunktion für den einzelnen Endbenutzer;
Speicherung einer kodierten Form der Datenvertraulichkeitsschlüsselfunktion mit Daten, die durch diese Schlüsselfunktion kodiert wurden;
wobei die Datenvertraulichkeitsschlüsselfunktion in Importform unter einer Schlüsselfunktionnkodierungsschlüsselfunktion zusammen mit ihrem zugeordneten Steuervektor gespeichert ist;
Bereitstellung von Verwendungsattributen für den Steuervektor der Datenvertraulichkeitsschlüsselfunktion zur Verschlüsselung und Entschlüsselung, wodurch die Datendatei mit derselben Schlüsselfunktion kodiert und dekodiert werden kann.

14. Ein Verfahren gemäß Anspruch 12, bei dem die Datenkryptographiefunktion eine kodierte Mailbox ist, in der jeder Benutzer unter einer Mehrzahl von Benutzern des Systems eine Datenvertraulichkeitsschlüsselfunktion in zwei Formen besitzt, wobei die erste Form eine Datenkodierung und die zweite Form eine Datendekodierung ermöglicht, wobei die erste Form der Schlüsselfunktion in das öffentliche Verzeichnis gesetzt wird, wo sie allen Benutzern der Mailbox zugänglich ist, so daß jede registrierte Schlüsselfunktion unter einem Benutzeridentifikator aufgezeichnet ist, der dem Benutzer zugeordnet ist, der die Schlüsselfunktion aufzeichnet, und wobei die zweite Form der Schlüsselfunktion persönlich dem Benutzer zugeordnet ist, dem sie gehört, so daß Mail, das in die Mailbox gestellt wurde und für einen bestimmten Benutzer in kodierter Form bestimmt ist, nur von diesem Benutzer - dem beabsichtigten Empfänger - dekodiert werden kann, das die folgenden Schritte umfaßt:
Bereitstellung einer Datenvertraulichkeitsschlüsselfunktion, die in zwei Formen erstellt wurde, wobei die erste Form nur eine Kodierung und die zweite Form nur eine Dekodierung ermöglicht;
Bereitstellung von Steuervektor-Verwendungsattributen für den Steuervektor, der der Datenvertraulichkeitsschlüsselfunktion zugeordnet ist, die für die erste Form der Datenvertraulichkeitsschlüsselfunktion nur Verschlüsselungsfunktionen und für die zweite Form der Datenvertraulichkeitsschlüsselfunktion nur Entschlüsselungsfunktionen besitzt.

15. Ein Verfahren gemäß Anspruch 12, bei dem die Datenkryptographiefunktion eine Verschlüsselungstextauflösungsfunktion ist, die in einem Verschlüsselungstextauflösungszentrum in einem Netzwerk im System ausgeführt werden soll und in der Lage ist, kodierte Daten von einer Kodierung unter einer ersten Datenschlüsselfunktion in eine Kodierung unter einer zweiten Datenschlüsselfunktion sicher aufzulösen, das folgende Schritte umfaßt:
Erzeugung einer Datenschlüsselfunktion in zwei Formen an einer Mehrzahl an Geräten im Kommunikationsnetzwerk, wobei die erste Form eine Datenvertraulichkeitsschlüsselfunktion in Betriebsform mit einem zugeordneten Steuervektor, der Verschlüsselungs- und Entschlüsselungsattribute besitzt, ist, und wobei die zweite Form der Datenschlüsselfunktion eine Datenumwandlungsschlüsselfunktion in Exportform ist, die für den Export zu einem Verschlüsselungstextauflösungszentrum im Netzwerk geeignet ist;
Empfang der Datenauflösungsschlüsselfunktion am Verschlüsselungstextauflösungszentrum und Umwandlung der empfangenen Datenauflösungsschlüsselfunktion in eine Betriebsform, wobei der Steuervektor, der der Datenauflösungsschlüsselfunktion zugeordnet ist, sowohl Auflösungsein- als auch Auflösungs-aus-Attribute besitzt;
Verschlüsselung von Daten an einem ersten Gerät, die zum Verschlüsselungstextauflösungszentrum gesendet werden, wo sie unter der zweiten Datenschlüsselfunktion, die einem zweiten Gerät im Netzwerk, das mit dem Verschlüsselungstextauflösungszentrum verbunden ist, bekannt sind, in verschlüsselte Form umgewandelt werden;
Übertragung der umgewandelten Daten vom Zentrum zum zweiten Gerät, wo sie unter der zweiten Datenschlüsselfunktion entschlüsselt werden.

16. Ein Verfahren gemäß Anspruch 15, wobei das Verschlüsselungstextauflösungszentrum empfangene, nach innen gerichtete entschlüsselte Daten nicht entschlüsseln kann und auch Daten in einer Form, die mit nach außen gericheteten, verschlüsselten Daten vergleichbar sind, nicht verschlüsseln kann.

17. Ein Verfahren gemäß Anspruch 12, wobei die Datenkryptographiefunktion eine Suchverschlüsselungstextauflösung für eine Kommunikationsnetzwerkkette im System ist, das ein erstes Gerät umfaßt, welches eine Kommunikation beginnt, das mit einem Verschlüsselungstextauflösungszentrum verbunden ist, das selbst wiederum mit einem zweiten Verschlüsselungstextauflösungszentrum verbunden ist, das selbst wiederum mit einem zweiten Netzwerkgerät verbunden ist, und zur Übertragung verschlüsselter Daten vom ersten Gerät über das erste Verschlüsselungstextauflösungszentrum und das zweite Verschlüsselungstextauflösungszentrum zum zweiten Gerät dient und folgende Schritte umfaßt:
Erzeugung einer ersten Datenschlüsselfunktion im ersten Netzwerkgerät in zwei Formen, wobei die erste Form eine Datenvertraulichkeitsschlüsselfunktion in Betriebsform mit einem zugeordneten Steuervektor, der Verschlüsselungsattribute besitzt, ist, und wobei die zweite Form der ersten Datenschlüsselfunktion eine Datenumwandlungsschlüsselfunktion (ein) in Exportform ist, die für den Export zum ersten Verschlüsselungstextauflösungszentrum im Netzwerk geeignet ist;
Erzeugung einer zweiten Datenschlüsselfunktion im zweiten Netzwerkgerät in zwei Formen, wobei die erste Form eine Datenvertraulichkeitsschlüsselfunktion in Betriebsform mit einem zugeordneten Steuervektor, der Entschlüsselungsattribute besitzt, ist, und wobei die zweite Form der zweiten Datenschlüsselfunktion eine Datenumwandlungsschlüsselfunktion (aus) in Exportform ist, die für den Export zum zweiten Verschlüsselungstextauflösungszentrum im Netzwerk geeignet ist;
Erzeugung einer dritten Datenschlüsselfunktion im ersten Verschlüsselungstextauflösungszentrum in zwei Formen, wobei die erste Form eine Datenumwandlungsschlüsselfunktion (aus) und die zweite Form eine Datenumwandlungsschlüsselfunktion (ein) ist, die für den Export zum zweiten Verschlüsselungstextauflösungszentrum im Netzwerk geeignet ist;
wobei das erste Netzwerkgerät die erste Datenschlüsselfunktion in ihrer zweiten Form als Datenumwandlungsschlüsselfunktion (ein) zum ersten Verschlüsselungstextauflösungszentrum überträgt;
wobei das zweite Netzwerkgerät die zweite Datenschlüsselfunktion in ihrer zweiten Form als Datenumwandlungsschlüsselfunktion (aus) zum zweiten Verschlüsselungstextauflösungszentrum überträgt;
wobei das erste Verschlüsselungstextauflösungszentrum die dritte Datenschlüsselfunktion in ihrer zweiten Form als Datenumwandlungsschlüsselfunktion (ein) zum zweiten Verschlüsselungstextauflösungszentrum überträgt;
wobei das erste Netzwerkgerät Daten unter der ersten Datenschlüsselfunktion in der ersten Form verschlüsselt und wobei die verschlüsselten Daten zum ersten Verschlüsselungstextauflösungszentrum übertragen werden, wo die Daten unter der ersten Datenschlüsselfunktion in der zweiten Form aufgelöst werden, weil sie unter der dritten Datenschlüsselfunktion in der ersten nach außen umzuwandelnden Form verschlüsselt werden sollen, und zum zweiten Verschlüsselungstextauflösungszentrum übertragen werden, wo die Daten unter der dritten Datenschlüsselfunktion in ihrer zweiten Form in eine unter der zweiten Datenschlüsselfunktion in der zweiten Form verschlüsselten Form umgewandelt werden, in der sie nach außen umgewandelt und zum zweiten Netzwerkgerät übertragen werden, wo die Daten anschließend unter der zweiten Datenschlüsselfunktion in ihrer ersten Form entschlüsselt werden.

18. Ein Verfahren gemäß Anspruch 12, bei dem die Datenkryptographiefunktion auf eine verschlüsselte Datei unter einer ersten Schlüsselfunktion angewandt wird, so daß ein Teil der Datei unter einer zweiten Schlüsselfunktion zur Übertragung an einen beabsichtigten Empfänger zurück verschlüsselt werden kann, ohne daß die gesamte verschlüsselte Datei offenbart werden muß, bestehend aus folgenden Schritten:
Erzeugung einer ersten Datenschlüsselfunktion in zwei Formen an einem ersten Gerät im System, wobei die erste Form eine Datenvertraulichkeitsschlüsselfunktion in Betriebsform und die zweite Form eine Datenumwandlungsschlüsselfunktion (ein) ist;
Verschlüsselung einer Datendatei unter Verwendung der Datenvertraulichkeitsschlüsselfunktion und Speicherung der Datei in ihrer verschlüsselten Form im Datenspeicher;
wobei das erste Gerät eine zweite Datenschlüsselfunktion in zwei Formen erzeugt, nämlich als Datenumwandlungsschlüsselfunktion (aus) und als Datenentschlüsselungsschlüsselfunktion;
Übertragung der Datenentschlüsselungsschlüsselfunktion an ein zweites Gerät im System, das mit dem ersten Gerät verbunden ist;
Zugriff auf die Datendatei vom Datenspeicher aus und erneute Verschlüsselung eines Teils der Datei von der Verschlüsselung unter der ersten Datenschlüsselfunktion zur Verschlüsselung unter der zweiten Datenschlüsselfunktion über eine Anweisung zur Auflösung des Verschlüsselungstextes unter Verwendung der ersten Datenschlüsselfunktion in der Form der Datenumwandlungsschlüsselfunktion (ein) und unter Verwendung der zweiten Datenschlüsselfunktion in der Form der Datenumwandlungsschlüsselfunktion (aus) sowie Übertragung des erneut verschlüsselten Teils der Datendatei vom ersten Gerät zum zweiten Gerät;
Entschlüsselung des übertragenen Teils der Datendatei in Form der Entschlüsselungsschlüsselform der zweiten Schlüsselfunktion zur Verwendung am zweiten Gerät.

19. Ein Verfahren gemäß Anspruch 12, bei dem die Datenkryptographiefunktion Nachrichtenintegrität ist, in denen die Inhalte einer Nachricht gegen nicht autorisierte Änderungen geschützt sind, bestehend aus folgenden Schritten:
Bereitstellung einer Daten/MAC-Schlüsselfunktion und eines zugeordneten Steuervektors mit MAC-Generierungs- und MAC-Verifizierungsattributen an einer Sende- und an einer Empfangsstation in einem Kommunikationsnetzwerk im System;
Berechnung eines MAC-Werts für eine von der Sendestation zur Empfangsstation zu sendende Nachricht und Verwendung der Daten/MAC-Schlüsselfunktion und des Steuervektors an der Sendestation;
Übertragung der Nachricht und des berechneten MAC-Werts von der Sendestation zur Empfangsstation;
Berechnung eines zweiten MAC-Werts zur empfangenen Nachricht an der Empfangsstation, Verwendung der Daten/MAC-Schlüsselfunktion und des Steuervektors und Vergleich des zweiten berechneten MAC-Werts mit dem übertragenen MAC-Wert;
Überprüfung der Integrität der an der Empfangsstation empfangenen Nachricht, wenn die beiden berechneten MAC-Werte gleich sind.

20. Verfahren gemäß Anspruch 12, bei dem die Datenkryptographiefunktion Nachrichtenauthentifizierung mit Nichtzurückweisung ist, bestehend aus folgenden Schritten:
Bereitstellung einer Daten/MAC-Schlüsselfunktion mit einem ersten zugeordneten Steuervektor mit MAC-Generierungssattribut an einer Sendestation in einem Kommunikationsnetzwerk im System;
Bereitstellung einer Daten/MAC-Schlüsselfunktion mit einem zweiten zugeordneten Steuervektor mit MAC-Verifizierungsattribut an einer Empfangsstation im Kommunikationsnetzwerk;
Berechnung eines ersten Werts für das MAC zur Nachricht, die von der Sendestation über das Kommunikationsnetzwerk an die Empfangsstation gesendet werden soll, unter Verwendung der Daten/MAC-Schlüsselfunktion und des ersten Steuervektors an der Sendestation;
Übertragung der Nachricht und des ersten MAC-Werts von der Sendestation über das Kommunikationsnetzwerk zur Empfangsstation;
Berechnung eines zweiten Werts für das MAC zur Nachricht, die an der Empfangsstation empfangen wurde, unter Verwendung der Daten/MAC-Schlüsselfunktion und des zweiten Steuervektors an der Empfangsstation;
Sicherstellung, daß die Nachricht Integrität besitzt und daß sie von der Sendestation gesendet wurde, wenn der erste Wert für das MAC gleich dem zweiten Wert für das MAC entspricht.

21. Ein Verfahren gemäß Anspruch 12, wobei die Datenkryptographiefunktion eine Suchverschlüsselungstextauflösung für eine Kommunikationsnetzwerkkette im System ist, das ein schlüsselfunktionsausgebendes Gerät im Netzwerk und ein erstes Gerät umfaßt, welches eine Kommunikation im Netzwerk beginnt, das mit einem ersten Verschlüsselungstextauflösungszentrum verbunden ist, das selbst wiederum mit einem zweiten Verschlüsselungstextauflösungszentrum verbunden ist, das selbst wiederum mit einem zweiten Netzwerkgerät verbunden ist, und zur Übertragung verschlüsselter Daten vom ersten Gerät über das erste Verschlüsselungstextauflösungszentrum und das zweite Verschlüsselungstextauflösungszentrum zum zweiten Gerät dient und folgende Schritte umfaßt:
Erzeugung einer ersten Datenschlüsselfunktion im ersten Netzwerkgerät in zwei Formen, wobei die erste Form eine Datenvertraulichkeitsschlüsselfunktion in Betriebsform mit einem zugeordneten Steuervektor, der Verschlüsselungsattribute besitzt, ist, und wobei die zweite Form der ersten Datenschlüsselfunktion eine Datenumwandlungsschlüsselfunktion (ein) in Exportform ist, die für den Export zum ersten Verschlüsselungstextauflösungszentrum im Netzwerk geeignet ist;
Erzeugung einer zweiten Datenschlüsselfunktion im zweiten Netzwerkgerät in zwei Formen, wobei die erste Form eine Datenvertraulichkeitsschlüsselfunktion in Betriebsform mit einem zugeordneten Steuervektor, der Entschlüsselungsattribute besitzt, ist, und wobei die zweite Form der zweiten Datenschlüsselfunktion eine Datenumwandlungsschlüsselfunktion (aus) in Exportform ist, die für den Export zum zweiten Verschlüsselungstextauflösungszentrum im Netzwerk geeignet ist;
Erzeugung einer dritten Datenschlüsselfunktion im schlüsselfunktionsausgebenden Gerät in zwei Formen, wobei die erste Form eine Datenumwandlungsschlüsselfunktion (aus) ist, die für den Export zum ersten Verschlüsselungstextauflösungszentrum im Netzwerk geeignet ist, und wobei die zweite Form eine Datenumwandlungsschlüsselfunktion (ein) ist, die für den Export zum zweiten Verschlüsselungstextauflösungszentrum im Netzwerk geeignet ist;
wobei das erste Netzwerkgerät die erste Datenschlüsselfunktion in ihrer zweiten Form als Datenumwandlungsschlüsselfunktion (ein) zum ersten Verschlüsselungstextauflösungszentrum überträgt;
wobei das zweite Netzwerkgerät die zweite Datenschlüsselfunktion in ihrer zweiten Form als Datenumwandlungsschlüsselfunktion (aus) zum zweiten Verschlüsselungstextauflösungszentrum überträgt;
wobei das erste schlüsselfunktionsausgebende Gerät die dritte Datenschlüsselfunktion in ihrer ersten Form als Datenumwandlungsschlüsselfunktion (aus) zum ersten Verschlüsselungstextauflösungszentrum überträgt und wobei das erste schlüsselfunktionsausgebende Gerät die dritte Datenschlüsselfunktion in ihrer zweiten Form als Datenumwandlungsschlüsselfunktion (ein) zum zweiten Verschlüsselungstextauflösungszentrum überträgt;
wobei das erste Netzwerkgerät Daten unter der ersten Datenschlüsselfunktion in der ersten Form verschlüsselt und wobei die verschlüsselten Daten zum ersten Verschlüsselungstextauflösungszentrum übertragen werden, wo die Daten unter der ersten Datenschlüsselfunktion in der zweiten Form aufgelöst werden, weil sie unter der dritten Datenschlüsselfunktion in der ersten nach außen umzuwandelnden Form verschlüsselt werden sollen, und zum zweiten Verschlüsselungstextauflösungszentrum übertragen werden, wo die Daten unter der dritten Datenschlüsselfunktion in ihrer zweiten Form in eine unter der zweiten Datenschlüsselfunktion in der zweiten Form verschlüsselten Form umgewandelt werden, in der sie nach außen umgewandelt und zum zweiten Netzwerkgerät übertragen werden, wo die Daten anschließend unter der zweiten Datenschlüsselfunktion in ihrer ersten Form entschlüsselt werden.

22. Ein Datenverarbeitungssystem, das Kryptographiedienstanforderungen zur Ausführung von Datenkryptographiefunktionen an Daten verarbeitet, unter Verwendung von Kryptographieschlüsselfunktionen, denen Steuervektoren zugeordnet sind, die die Funktionen definieren, die jede Taste gemäß Definition durch ihren Definierer ausführen darf, bestehend aus folgenden Komponenten:
einer Kryptographieeinrichtung (4) mit einer sicheren Begrenzung (6), durch die ein Eingabepfad (8) für den Empfang der Kryptographiedienstanforderung, der Daten, der Kryptographieschlüsselfunktionen und ihrer zugeordneten Steuervektoren und ein Ausgabepfad (8) für die Bereitstellung von Antworten läuft, wobei innerhalb der Begrenzung (6) ein Kryptographieanweisungsspeicher (10), der an den Eingabepfad gekoppelt ist, ein Steuervektorprüfmittel (14) und ein Kryptographieverarbeitungsmittel (16), das an den Anweisungsspeicher gekoppelt ist, sowie ein Masterschlüsselfunktionsspeicher (18), der an das Verarbeitungsmittel (16) gekoppelt ist, enthalten sind, um eine sichere Position zur Ausführung von Datenkryptographiefunktionen als Reaktion auf die empfangenen Dienstanforderungen bereitzustellen;
wobei der Kryptographieanweisungsspeicher (10) über den Eingabepfad (8) eine Kryptographiedienstanforderung zur Ausführung einer Datenkryptographiefunktion auf einer Kryptographietaste empfängt;
wobei das Steuervektorprüfmittel (14) einen Eingang besitzt, der an den Eingabepfad (8) gekoppelt ist, um einen Steuervektor (Figur 5) zu empfangen, der der Kryptographieschlüsselfunktion zugeordnet ist, und einen weiteren Eingang besitzt, der an den Kryptographieanweisungsspeicher (10) gekoppeit ist, um Steuersignale zu empfangen, mit denen sichergestellt werden kann, daß der Steuervektor die Datenkryptographiefunktion autorisiert, die von der Kryptographiedienstanforderung angefordert wurde;
wobei das Steuervektorprüfmittel (14) eine Autorisierungsausgabe (20) besitzt, die an einen Eingang des Kryptographieverarbeitungsmittels (16) gekoppelt ist, um anzuzeigen, daß die Datenkryptographiefunktion autorisiert ist, deren Empfang im Kryptographieverarbeitungsmittel (16) die Ausführung der angeforderten Datenkryptographiefunktion mit der Kryptographieschlüsselfunktion auslöst.

## Revendications

1. Un procédé de validation du fait que des fonctions de cryptographie de données, requises pour un clé de cryptographie, ont été autorisées par l'élément à l'origine de la clé, dans un système informatique traitant des requêtes de services de cryptographie pour effectuer des fonctions de cryptographie de données, sur des données, par utilisation de clés de cryptographie associées à des vecteurs de commande définissant les fonctions que chaque clé est autorisée à effectuer par l'élément d'origine, comprenant les étapes consistant à :
- recevoir une requête de service cryptographique pour exécuter une fonction de cryptographie de données, sur des données, par utilisation d'une clé cryptographique dans une ressource cryptographique (4), ayant une frontière sûre (6) à travers laquelle passent un chemin d'entrée et un chemin de sortie (8);
- recevoir un vecteur de commande (figure 5) associé à la clé cryptographique et contrôler (14) que le vecteur de commande autorise la fonction cryptographique de données requise par la requête de service cryptographique; et
- signaler (20) que la fonction cryptographique de données est autorisée et commencer à effectuer la fonction cryptographique de données requise à l'aide de la clé cryptographique.

2. Un procédé selon la revendication 1, comprenant en outre le stockage dans un moyen de stockage (22) de la clé cryptographique, sous une forme cryptée, sous laquelle la clé cryptographique est cryptée sous une clé de stockage qui est le produit logique du vecteur de commande associé et d'une clé maître (18).

3. Un procédé selon la revendication 2, dans lequel la clé de stockage est le produit logique OU exclusif du vecteur de commande associé et de la clé maître stockée dans la mémoire de stockage de clé maître.

4. Un procédé selon l'une quelconque des revendications précédentes, dans lequel le vecteur de commande associé est stocké avec la forme cryptée de la clé cryptographique, dans le moyen de stockage de clé cryptographique.

5. Un procédé selon l'une quelconque des revendications précédentes, dans lequel le vecteur de commande associé comprend des zones définissant des types autorisés de fonctions cryptographiques comprenant des fonctions de gestion de clés, des fonctions de cryptographie de données et des fonctions de traitement PIN (Numéro d'Identification Personnel), et les fonctions de cryptographie de données dont le type est défini.

6. Un procédé selon l'une quelconque des revendications précédentes, dans lequel le vecteur de commande associé comprend des zones définissant la commande et l'utilisation de la fonction export.

7. Un procédé selon la revendication 6, dans lequel le vecteur de commande associé comprend en outre une zone d'utilisation définissant l'une des propriétés ci-après disant :
- que la clé cryptographique peut effectuer le cryptage des données;
- que la clé cryptographique ne peut effectuer le cryptage des données;
- que la clé cryptographique peut effectuer la description des données;
- que la clé cryptographique ne peut effectuer la description des données;
- que la clé cryptographique peut effectuer des fonctions de cryptographie de données;
- que la clé cryptographique peut effectuer des fonctions d'authentification de messages;
- que la clé cryptographique peut être utilisée pour générer un code d'authentification de messages concernant les données;
- que la clé cryptographique ne peut être utilisée pour générer un code d'authentification de messages concernant les données;
- que la clé cryptographique peut être utilisée pour vérifier un code d'authentification de messages concernant les données;
- que la clé cryptographique ne peut être utilisée pour vérifier un code d'authentification de messages concernant les données;
- que la clé cryptographique ne peut être utilisée comme clé de données de sortie dans une fonction de traduction de texte codé;
- que la clé cryptographique peut être utilisée comme clé de données de données d'entrée dans une fonction de traduction de texte crypté;
- que la clé cryptographique ne peut être utilisée comme clé de données d'entrée dans une fonction de traduction de texte crypté;
- que la clé cryptographique peut effectuer des fonctions de cryptographie de données et comprend en outre une zone de sous-type, définissant que la clé cryptographique est une clé de données ANSI (American National Standards Institute).

8. Un procédé selon la revendication 6, dans lequel le vecteur de commande associé comprend une zone de type définissant que la clé cryptographique peut effectuer des fonctions de cryptographie de données et comprend en outre une zone de commande d'export définissant si le système informatique local est autorisé à exporter la clé cryptographique et définit en outre si un système informatique déporté, auquel le système informatique local est connecté, est autorisé à ré-exporter la clé cryptographique.

9. Un procédé selon la revendication 6, dans lequel le vecteur de commande associé comprend une zone de type définissant que la clé cryptographique peut effectuer des fonctions de cryptographie de données et comprend en outre une zone de sous-type définissant que la clé cryptographique peut effectuer des fonctions de confidentialité de données.

10. Un procédé selon la revendication 9, dans lequel le vecteur de commande associé comprend une zone de type définissant que la clé cryptographique peut effectuer des fonctions de cryptographie de données et comprend en outre une zone de sous-type définissant qu'une fonction de traduction de texte crypté peut être effectuée par la clé cryptographique.

11. Un procédé selon la revendication 10, dans lequel le vecteur de commande associé comprend en outre une zone d'utilisation définissant que la clé cryptographique peut être utilisée comme clé de données de sortie dans une fonction de traduction de texte crypté.

12. Un procédé selon la revendication 9, dans lequel la fonction de cryptographie de données est destiné à assurer la protection d'une session, afin de protéger la confidentialité des transmissions de données entre deux dispositifs en communication dans le système partageant une clé commune de cryptage/décryptage de données, permettant à chaque dispositif à la fois d'envoyer et de recevoir des données cryptées, comprenant les étapes consistant à :
partager une clé de confidentialité de données entre les dispositifs;
stocker la clé de confidentialité de données sous une forme opérationnelle cryptée sous une clé maître à chaque dispositif respectif;
mettre à disposition des attributs d'utilisation pour le vecteur de commande de chaque clé de confidentialité de données, afin de respectivement crypter et décrypter, permettant à chaque clé d'être utilisée à la fois pour crypter et pour décrypter des données.

13. Un procédé selon la revendication 12, dans lequel la fonction de cryptographie de données est destinée à protéger des fichiers, pour protéger la confidentialité de fichiers de données, dans lequel un utilisateur final unique possède une clé de cryptage/décryptage de données, permettant à des données d'être cryptées en vue d'un stockage et d'être décryptées aux fins de récupération du fichier, comprenant en outre les étapes consistant à :
fournir une clé de confidentialité de données à l'utilisateur final individuel;
stocker une forme cryptée de la clé de confidentialité de données avec des données ayant été cryptées de cette manière;
stocker la clé de confidentialité de données sous une forme d'import, cryptée sous une clé de cryptage de clé, avec son vecteur de commande associé;
fournir des attributs d'utilisation pour le vecteur de commande de la clé de confidentialité de données afin de crypter et de décrypter, de manière à permettre au fichier de données d'être à la fois crypté et décrypté par la même clé.

14. Un procédé selon la revendication 12, dans lequel la fonction de cryptographie de données est une boîte à lettres cryptée, dans laquelle chaque utilisateur parmi une pluralité d'utilisateurs du système a une clé de confidentialité de données se présentant sous deux formes, la première forme permettant le cryptage des données et la deuxième forme permettant le décryptage des données, la première forme de la clé étant placée dans le répertoire public accessible à tous les utilisateurs de la boîte à lettres, de manière que chaque clé enregistrée le soit sous un identificateur d'utilisateur appartenant à l'utilisateur qui enregistre la clé, la deuxième forme de la clé étant privée à l'utilisateur auquel elle appartient, de sorte qu'un courrier déposé dans la boîte aux lettres et concernant un utilisateur particulier, sous sa forme cryptée, puisse être décrypté seulement par cet utilisateur - le récepteur désigné - comprenant les étapes consistant à :
fournir une clé de confidentialité de données ayant été générée sous deux formes, la première forme permettant le cryptage seulement et la deuxième forme permettant le décryptage;
fournir des attributs d'utilisation de vecteur de commande pour le vecteur de commande associé à la clé de confidentialité de données, ayant pour la première forme de clé de confidentialité de données seulement des caractéristiques de cryptage et qui a pour la deuxième forme de clé de confidentialité de données des caractéristiques de décryptage.

15. Un procédé selon la revendication 12, dans lequel la fonction de cryptographie de données est une fonction de traduction de texte crypté devant être effectuée en un centre de traduction de textes cryptés se trouvant dans un réseau dans le système susceptible de traduire de façon sûre des données cryptées, l'ayant été sous une première clé de données, pour assurer un cryptage sous une deuxième clé de données, comprenant les étapes consistant à :
générer une clé de données sous deux formes, en une pluralité de dispositifs situés dans le réseau de communication, la première forme étant une clé de confidentialité de données qui a sous forme opérationnelle un vecteur de commande associé qui comporte des attributs de cryptage et de décryptage, et la deuxième forme de clé de données étant une clé de traduction de données sous forme d'export, appropriée pour exporter vers un centre de traduction de texte crypté se trouvant dans le réseau;
recevoir la clé de traduction de données au centre de traduction de textes cryptés et convertir la clé de traduction de données reçue sous une forme opérationnelle, le vecteur de commande associé à la clé de traduction de données ayant les deux attributs de traduire en mode thème et en mode version;
crypter des données en un premier dispositif quelconque, ayant été transmise au centre de traduction de textes cryptés où elles sont traduites par cryptage, sous la deuxième clé de données connue, en un deuxième dispositif se trouvant dans le réseau et relié au centre de traduction de textes cryptés;
transmettre les données traduites du centre au deuxième dispositif où elles sont décryptées sous la deuxième clé de données.

16. Un procédé selon la revendication 15, dans lequel le centre de traduction de textes cryptés ne peut décrypter des données cryptées entrantes ayant été reçues, ni ne peut crypter des données se trouvant sous une forme comparable à des données cryptées sortantes.

17. Un procédé selon la revendication 12, dans lequel la fonction de cryptographie de données est une traduction de texte crypté parité à parité, destinée à une chaîne de réseaux de communication dans le système, comprenant un premier dispositif émettant une communication, relié à un premier centre de traduction de textes cryptés qui, à son tour, est relié à un deuxième centre de traduction de textes cryptés qui, à son tour, est relié à un deuxième dispositif de réseaux, pour effectuer la transmission de données cryptées depuis le premier dispositif, en passant par les premier et deuxième centres de traduction de textes cryptés, pour aller au deuxième dispositif, comprenant les étapes consistant à :
générer une première clé de données dans le premier dispositif de réseaux, sous deux formes, la première forme étant une clé de confidentialité de données sous forme opérationnelle ayant un vecteur de commande associé qui a des attributs de cryptage, et la deuxième forme de la clé de données étant une clé de traduction en mode thème de données, sous forme export, convenant pour l'export vers le premier centre de traduction de textes cryptés;
générer une deuxième clé de données dans le deuxième dispositif de réseaux, sous deux formes : la première forme étant une clé de confidentialité de données sous forme opérationnelle ayant un vecteur de commande associé comportant des attributs de décryptage, et la deuxième forme de la deuxième clé de données étant une clé de traduction de données sous mode version, sous forme export, convenant pour exporter vers le deuxième centre de traduction de textes cryptés;
générer une troisième clé de données dans le premier centre de traduction de textes cryptés, sous deux formes, la première forme étant une clé de traduction de données sous mode version et la deuxième forme étant une clé de données de traduction sous mode thème, convenant pour exporter vers le deuxième centre de traduction de textes cryptés;
le premier dispositif de réseaux transmettant la première clé de données sous sa deuxième forme, à titre de clé de traduction en mode thème vers le premier centre de traduction de textes cryptés;
le deuxième dispositif de réseaux transmettant la deuxième clé de données sous sa deuxième forme, à titre de clé de traduction en mode version, vers le deuxième centre de traduction de textes cryptés;
le premier centre de traduction de textes cryptés transmettant la troisième clé de données sous sa deuxième forme, à titre de clé de traduction en mode thème, vers le deuxième centre de traduction de textes cryptés;
Le premier dispositif de réseaux cryptant des données sous la première clé de données sous la première forme et transmettant les données cryptées au premier centre de traduction de teintes cryptés dans lequel les données sont traduites sous la première clé de données, dans la deuxième forme pour être cryptées sous la troisième clé de données sous la première forme et traduites en mode version et transmises au deuxième centre de traduction de textes cryptés, dans lequel les données sont traduites sous la troisième clé de données, sous sa deuxième forme, sous une forme cryptée sous la deuxième clé de données, sous la deuxième forme, dans laquelle les données sont traduites en mode version et transmises au deuxième dispositif de réseaux, dans lequel les données sont ensuite décryptées sous la deuxième clé de données, sous sa première forme.

18. Un procédé selon la revendication 12, dans lequel la fonction de cryptographie de données est appliquée à un fichier crypté sous une première clé, de manière qu'une partie du fichier puisse être recryptée sous une deuxième clé, en vue de la transmission à un récepteur auquel il est destiné, sans révéler la totalité du fichier crypté, comprenant les étapes consistant à :
générer une première clé de données sous deux formes, en un premier dispositif dans le système, la première forme étant une clé de confidentialité de données stockée sous forme opérationnelle et la deuxième forme étant une clé de traduction en mode thème des données;
crypter un fichier de données en utilisant la clé de confidentialité de données et en stockant le fichier sous sa forme cryptée dans un dispositif de stockage de données;
le premier dispositif générant une deuxième clé de données sous deux formes, une clé de traduction en mode version et une clé de décryptage de données;
transmettre la clé de décryptage de données à un deuxième dispositif dans le système, relié au premier dispositif;
accéder au fichier de données depuis le dispositif de stockage de données et recrypter une partie du fichier, à partir du cryptage fait sous la première clé de données, pour crypter sous la deuxième clé de données, par l'intermédiaire d'une instruction de traduction de textes cryptés utilisant la première clé de données sous la forme de traduction en mode thème, et la deuxième clé de données sous forme de traduction en mode version, et transmettre la partie recryptée du fichier de données du premier dispositif au deuxième dispositif;
décrypter la partie transmise du fichier de données au moyen de la forme de clé de décryptage de la deuxième clé, pour utilisation sur le deuxième dispositif.

19. Un procédé selon la revendication 12, dans lequel la fonction de cryptographie de données concerne l'intégrité des messages, dans lequel le contenu d'un message est protégé contre toute modification non autorisée, comprenant les étapes consistant à :
fournir une clé de données/ordinateur multi-accès (MAC) et un vecteur de commande associé ayant des attributs de génération d'un MAC et de vérification d'un MAC, à la fois en un poste émetteur et un poste récepteur dans un réseau de communication dans le système;
calculer une valeur de MAC pour un message devant être envoyé depuis le poste émetteur au poste récepteur en utilisant la clé données/MAC et le vecteur de commande au poste émetteur;
transmettre le message et la valeur de MAC calculée du poste émetteur au poste récepteur;
calculer une deuxième valeur de MAC sur le message reçu au poste récepteur, utiliser la clé données/MAC et du vecteur de commande et effectuer la comparaison entre la deuxième valeur calculée de MAC avec la valeur de MAC transmise;
vérifier l'intégrité du message reçu au poste récepteur lorsque les deux valeurs MAC calculées sont égales.

20. Un procédé selon la revendication 12, dans lequel la fonction de cryptographie de données concerne l'authentification de messages dans des conditions de non répudiation, comprenant les étapes consistant à :
fournir une clé données/MAC avec un premier vecteur de commande associé ayant un attribut de génération de MAC en un poste émetteur dans un réseau de communication dans le système;
fournir la clé données/MAC avec un deuxième vecteur de commande ayant un attribut de vérification MAC mais n'ayant pas un attribut de génération de MAC, en un poste récepteur dans le réseau de communication;
calculer une première valeur pour le MAC concernant un message devant être envoyé par le poste émetteur sur le réseau de communication, au poste récepteur, en utilisant la clé données/MAC et le premier vecteur de commande au poste émetteur;
transmettre le message et la première valeur MAC du poste émetteur sur le réseau de communication au poste récepteur;
calculer une deuxième valeur du MAC concernant le message reçu au poste récepteur, en utilisant la clé données/MAC et le deuxième vecteur de commande, au poste récepteur;
vérification que le message a toute son intégrité et qu'il a été envoyé par le poste émetteur, lorsque la première valeur concernant le MAC est égale à la deuxième valeur concernant le MAC.

21. Un procédé selon la revendication 12, dans lequel la fonction de cryptographie de données est une traduction de texte crypté, de parité à parité, pour un réseau de communication dans le système, comprenant un dispositif d'émission de clé dans le réseau, un premier dispositif qui émet une communication, relié à un premier centre de traduction de textes cryptés qui, à son tour, est relié à un deuxième centre de traduction de textes cryptés qui, à son tour, est relié à un deuxième dispositif de réseaux, pour effectuer la transmission de données cryptées depuis le premier dispositif par les premier et deuxième centres de traduction de textes cryptés, au deuxième dispositif, comprenant les étapes consistant à :
générer une première clé de données dans le premier dispositif de réseau, sous deux formes, la première forme étant un clé de confidentialité de données sous forme opérationnelle ayant un vecteur de commande associé ayant des attributs de cryptage et une deuxième forme de la première clé de données étant une clé de traduction de données en mode thème sous la forme export, convenant pour exporter vers le premier centre de traduction de textes cryptés;
générer une deuxième clé de données dans le deuxième dispositif de réseaux sous deux formes, la première forme étant une clé de confidentialité de données sous forme opérationnelle ayant un vecteur de commande associé qui a des attributs de décryptage, et la deuxième forme de la deuxième clé de données étant une clé de traduction de données sous mode version, sous forme export, convenant pour exporter vers le deuxième centre de traduction de teintes cryptés;
générer une troisième clé de données dans le dispositif d'émission de clé, sous deux formes, la première forme étant une clé de traduction de données sous mode version convenant pour exporter vers le premier centre de traduction de données cryptées et la deuxième forme étant une clé de données de traduction en mode thème, convenant pour exporter vers le deuxième centre de traduction de textes cryptés;
le premier dispositif de réseaux transmettant la première clé de données sous sa deuxième forme à titre de clé de traduction en mode thème au premier centre de traduction de textes cryptés;
le deuxième dispositif de réseaux transmettant la deuxième clé de données sous sa deuxième forme, à titre de clé de traduction en mode version, vers le deuxième centre de traduction de textes cryptés;
le premier dispositif émetteur de clé transmettant la première clé de données sous sa première forme à titre de clé de traduction en mode version, vers le premier centre de traduction de textes cryptés, et transmettant la troisième clé de données sous la deuxième forme, à titre de clé de traduction en mode thème, au deuxième centre de traduction de textes cryptés;
le premier dispositif de réseaux cryptant des données sous la première clé de données sous sa première forme et transmettant les données cryptées au premier centre de traduction de textes cryptés dans lequel des données sont traduites sous la première clé de données sous la deuxième forme, pour être encryptées sous la troisième clé de données sous la première forme et être traduites en mode version et transmises au deuxième centre de traduction de textes cryptés, lorsque les données sont traduites sous la troisième clé de données sous la deuxième forme, sous une forme cryptée, sous la deuxième clé de données, sous la deuxième forme lorsqu'elles sont traduites en mode version et transmises au deuxième dispositif de réseau, dans lequel les données sont ensuite décryptées sous la deuxième clé de données, sous la première forme.

22. Un système de traitement de données traitant des requêtes de services cryptographiques pour effectuer des fonctions de cryptographie de données, sur des données, par utilisation de clés cryptographiques associées à des vecteurs de commande définissant les fonctions que chaque clé est autorisée à effectuer par son élément d'origine, comprenant :
une ressource cryptographique (4), ayant une frontière sûre (6), par laquelle passent un chemin d'entrée (8) pour recevoir les requêtes de services cryptographiques, des données, des clés cryptographiques et leurs vecteurs de commande associés, et un chemin de sortie (8) pour y fournir des réponses, étant inclus dans la frontière (6) un stockage d'instructions cryptographiques (10) couplé au chemin d'entrée, un moyen de contrôle de vecteurs de commande (14) et un moyen de traitement cryptographique (16) couplé au stockage d'instructions et un stockage de clé maître (18) couplé au moyen de traitement (16), pour fournir un emplacement sûr où exécuter des fonctions de cryptographie de données en réponse aux requêtes de services reçues ;
le stockage d'instructions cryptographiques (10) recevant par le chemin d'entrée (8) une requête de service cryptographique pour exécuter une fonction cryptographique de données avec une clé cryptographique;
le moyen de contrôle de vecteurs de commande (14) ayant une entrée couplée au chemin d'entrée (8) pour recevoir un vecteur de commande (figure 5) associé à la clé cryptographique et une entrée couplée au stockage d'instructions cryptographiques (10), pour recevoir des signaux de commande pour initialiser le contrôle destiné à vérifier que le vecteur de commande autorise la fonction de cryptographie de données requise par la requête de services cryptographiques;
le moyen de contrôle de vecteurs de commande (14) ayant une sortie d'autorisation (20) couplée à une entrée du moyen de traitement cryptographique (16) pour signaler que la fonction de cryptographie de données est autorisée, dont la réception par le moyen de traitement cryptographique (16) initialise le fonctionnement de la fonction de cryptographie de données requise avec la clé cryptographique.
